# EUROPÄISCHE PATENTSCHRIFT

(11) **EP 0 909 283 B1**
(45) Veröffentlichungstag und Bekanntmachung des Hinweises auf die Patenterteilung: **15.03.2000**
(21) Anmeldenummer: 97930481.3
(22) Anmeldetag: 02.07.1997
(51) Int. Cl.: C08F 10/02

(54) **VERFAHREN ZUR HERSTELLUNG VON HOCHSCHMELZENDEN POLYOLEFINEN**
METHOD FOR PRODUCING HIGH MELTING-POINT POLYOLEFINS
PROCEDE POUR PRODUIRE DES POLYOLEFINES A POINT DE FUSION ELEVE

(30) Priorität: 05.07.1996 DE 19627064; 05.04.1997 DE 19714058
(43) Veröffentlichungstag der Anmeldung: 21.04.1999
(73) Patentinhaber: BAYER AG, 51368 Leverkusen (DE)
(72) Erfinder: OSTOJA STARZEWSKI, Karl-Heinz, Aleksander, D-61118 Bad Vilbel (DE); KELLY, Warren, Mark, Alberta T4A 283/CA (CA); STUMPF, Andreas, D-51375 Leverkusen (DE)
(86) Internationale Anmeldenummer: EP9703461
(87) Internationale Veröffentlichungsnummer: WO9801485

(56) Entgegenhaltungen:
- EP-A- 0 638 593
- EP-A- 0 709 393
- DE-A- 4 420 456

## Beschreibung

Die vorliegende Erfindung bezieht sich auf den Einsatz von π-Systemen oder von Metallocen-Verbindungen, in denen ein Übergangsmetall mit zwei π-Systemen und zwar insbesondere mit aromatischen π-Systemen, wie anionischen Cyclopentadienyl-Liganden (Carbanionen), komplexiert ist und die beiden Systeme durch mindestens eine Brücke aus einem Donor und einem Akzeptor reversibel miteinander verbunden sind, als metallorganische Katalysatoren in einem Verfahren zur Herstellung von hochschmelzenden Polyolefinen durch Homo- oder Copolymerisation von einem oder mehreren Monomeren aus der Gruppe der gegebenenfalls substituierten α-Olefine mit 2 oder mehr C-Atomen. Die zwischen dem Donoratom und dem Akzeptoratom entstehende koordinative Bindung erzeugt in der Donorgruppe eine positive (Teil)-Ladung und in der Akzeptorgruppe eine negative (Teil)Ladung:

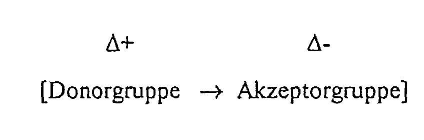

Metallocene und ihr Einsatz als Katalysatoren bei der Polymerisation von Olefinen sind seit langem bekannt (EP-A 129 368 und die darin zitierte Literatur). Aus EP-A'368 ist weiterhin bekannt, daß Metallocene in Kombination mit Aluminiumalkyl/Wasser als Cokatalysatoren wirksame Systeme für die Polymerisation von Ethylen darstellen (so wird beispielsweise aus 1 mol Trimethylaluminium und 1 mol Wasser Methylaluminoxan = MAO gebildet. Auch andere stöchiometrische Verhältnisse wurden schon mit Erfolg angewandt (WO 94/20506)). Es sind auch bereits Metallocene bekannt, deren Cyclopentadienylgerüste miteinander durch eine Brücke kovalent verknüpft sind. Als Beispiel für die zahlreichen Patente und Anmeldungen auf diesem Gebiet sei EP-A 704 461 erwähnt, worin die darin genannte Verknüpfungsgruppe eine (substituierte) Methylengruppe oder Ethylengruppe, eine Silylengruppe, eine substituierte Silylengruppe, eine substituierte Germylengruppe oder eine substituierte Phosphingruppe darstellt. Auch in EP '461 sind die verbrückten Metallocene als Polymerisationskatalysatoren für Olefine vorgesehen. EP-A-709 393 beschreibt Metallocen-Komplexe, bei denen eine Cyclopentadienyl-Einheit eine oder mehrere Donor-Einheiten trägt. Es werden keine Angaben über eine mögliche Kombination von Donor- & Akzeptor-Einheiten gemacht. Trotz der zahlreichen Patente und Anmeldungen auf diesem Gebiet besteht weiterhin der Wunsch nach verbesserten Katalysatoren, die sich durch hohe Aktivität auszeichnen, so daß die Menge des im Polymer verbleibenden Katalysators gering angesetzt werden kann, und die sich für die Polymerisation und Copolymerisation von Olefinen eignen.

Es wurde nun gefunden, daß sich besonders vorteilhafte Katalysatoren aus verbrückten π-Komplex-Verbindungen und insbesondere von Metallocen-Verbindungen herstellen lassen, bei denen die Verbrückung der beiden π-Systeme durch eine, zwei oder drei reversible Donor-Akzeptor-Bindungen hergestellt wird, in denen jeweils zwischen dem Donoratom und dem Akzeptoratom eine koordinative oder sogenannte dative Bindung entsteht, der zumindest formal eine ionische Bindung überlagert ist und bei denen eines der Donor- bzw. Akzeptoratome Teil des jeweils zugehörigen π-Systems sein kann. Die Reversibilität der Donor Akzeptor-Bindung läßt neben dem durch den Pfeil zwischen D und A gekennzeichneten verbrückten Zustand auch den unverbrückten Zustand zu, in welchem die beiden π-Systeme infolge der ihnen innewohnenden Rotationsenergie sich beispielsweise um 360 Winkelgrade gegeneinander drehen können, ohne daß die Integrität des Metall-Komplexes aufgegeben wird. Nach vollendeter Drehung "schnappt" die Donor-Akzeptor-Bindung wieder ein. Bei Vorliegen mehrerer Donoren und/oder Akzeptoren kann ein solches "Einschnappen" bereits nach Durchlaufen von weniger als 360 Winkelgraden stattfinden. Erfindungsgemäße einzusetzende π-Systeme, z.B. Metallocene lassen sich daher nur durch einen Doppelpfeil und die Formelteile (Ia) und (Ib) bzw. (XIIIa) und (XIIIb) zur Umfassung beider Zustände darstellen.

Die Erfindung betrifft demnach ein Verfahren zur Herstellung von hochschmelzenden Polyolefinen durch Homo- oder Copolymerisation von einem oder mehreren Monomeren aus der Gruppe der gegebenenfalls substituierten a-Olefine mit 2 oder mehr C-Atomen in Gegenwart von metallorganischen Katalysatoren, die durch Cokatalysatoren aktiviert werden können, das dadurch gekennzeichnet ist, daß als metallorganische Katalysatoren Metallocen-Verbindungen der Formel 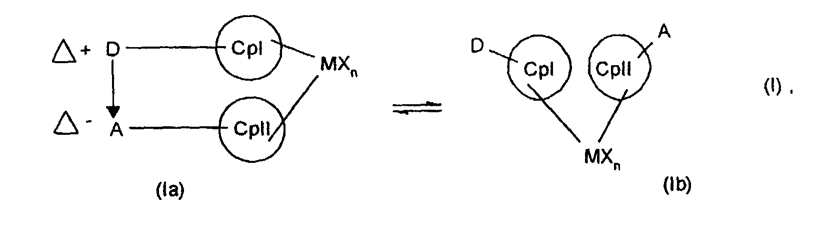 in der
- CpI und CpII: zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem C₁-C₂₀-Alkyl, das 1-fach bis vollständig durch Halogen, 1-3fach durch Phenyl sowie 1-3fach durch Vinyl substituiert sein kann, C₆-C₁₂-Aryl, Halogenaryl mit 6 bis 12 C-Atomen, Organometall-Substituenten, wie Silyl, Trimethylsilyl, Ferrocenyl sowie 1- oder 2-fach durch D und A substituiert sein können,
- D: ein Donoratom bedeutet, das zusätzlich Substituenten tragen kann und das in seinem jeweiligen Bindungszustand mindestens über ein freies Elektronenpaar verfügt,
- A: ein Akzeptoratom bedeutet, das zusätzlich Substituenten tragen kann und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen,
- M: für ein Übergangsmetall der III., IV., V. oder VI. Nebengruppe des Periodensystems der Elemente (Mendelejew) einschließlich der Lanthaniden und Actiniden steht,
- X: ein Anionäquivalent bedeutet und
- n: in Abhängigkeit von der Ladung von M die Zahl Null, Eins, Zwei, Drei oder Vier bedeutet,
oder π-Komplex-Verbindungen und insbesondere Metallocen-Verbindungen der Formel 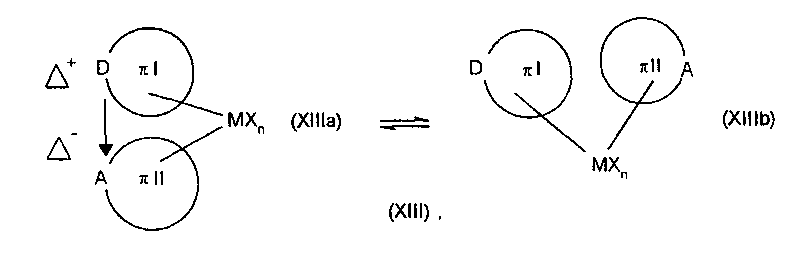 in der
- πI und πII: voneinander verschiedene geladene oder elektrisch neutrale π-Systeme darstellen, die ein- oder zweifach mit ungesättigten oder gesättigten Fünf- oder Sechsringen kondensiert sein können,
- D: ein Donoratom bedeutet, das Substituent von πl oder Teil des π-Systems von πI ist und das in seinem jeweiligen Bindungszustand mindestens über ein freies Elektronenpaar verfügt,
- A: ein Akzeptoratom bedeutet, das Substituent von πII oder Teil des π-Systems von πII ist und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierte Ringsystem eines oder mehrere D oder A oder D und A enthalten kann und
wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem C₁-C₂₀-Alkyl, das 1-fach bis vollständig durch Halogen, 1-3fach durch Phenyl sowie 1-3fach durch Vinyl substituiert sein kann, C₆-C₁₂-Aryl, Halogenaryl mit 6 bis 12 C-Atomen, Organometall-Substituenten, wie Silyl, Trimethylsilyl, Ferrocenyl sowie ein- oder zweifach durch D und A substituiert sein können, so daß die reversible koordinative D→A-Bindung (i) zwischen D und A, die beide Teile des jeweiligen π-Systems oder des ankondensierten Ringsystems sind, oder (ii) von denen D oder A Teil des n-Systems oder des ankondensierten Ringsystems und das jeweils andere Substituent des nicht kondensierten π-Systems oder des ankondensierten Ringsystems ist (sind), ausgebildet wird,

- M und X: die obige Bedeutung haben und
- n: in Abhängigkeit von den Ladungen von M sowie denen von π-l und π-II die Zahl Null, Eins, Zwei, Drei oder Vier bedeutet,
eingesetzt werden.

Erfindungsgemäße π-Systeme sind bevorzugt substituiertes und nicht substituiertes Ethylen, Allyl, Pentadienyl, Benzyl, Butadien, Benzol, das Cyclopentadienylanion und die sich durch Ersatz mindestens eines C-Atoms durch ein Heteroatom ergebenden Spezies.

Unter den genannten Spezies sind die cyclischen bevorzugt. Die Art der Koordination solcher Liganden (π-Systeme) zum Metall kann vom s-Typ oder vom π-Typ sein.

Solche erfindungsgemäß einzusetzenden Metallocen-Verbindungen der Formel (I) können hergestellt werden, indem man entweder je eine Verbindung der Formeln (II) und (III) 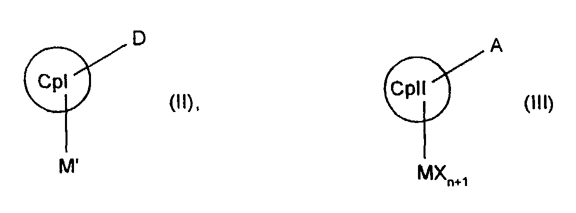 oder je eine Verbindung der Formeln (IV) und (V) 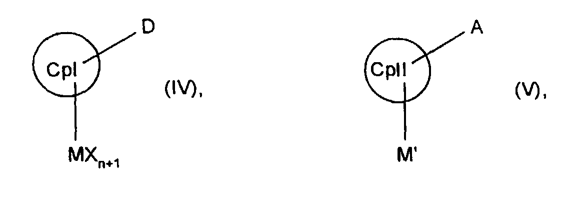 oder je eine Verbindung der Formeln (VI) und (VII)

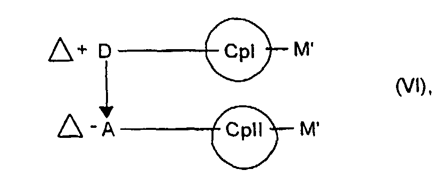

MXₙ₊₂ (VII)

unter Austritt von M'X in Gegenwart eines aprotischen Lösungsmittels oder je eine Verbindung der Formeln (VIII) und (III) 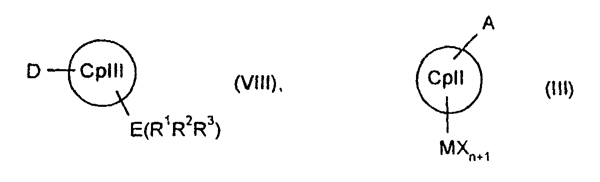 oder je eine Verbindung der Formeln (IV) und (IX) 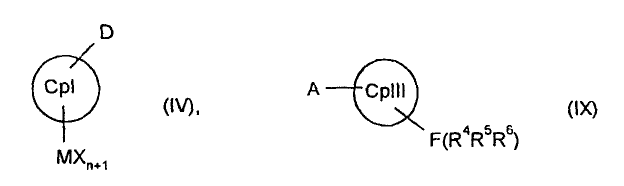 oder je eine Verbindung der Formeln (X) und (VII)

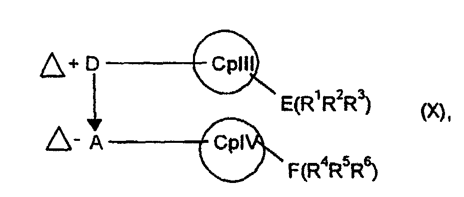

MXₙ₊₂ (VII)

unter Austritt von E(R¹R²R³)X und F(R⁴R⁵R⁶)X in Abwesenheit oder in Gegenwart eines aprotischen Lösungsmittels miteinander umsetzt, wobei
Cpl, CpII, D, A, M, X und n die obige Bedeutung haben,
CpIII und CpIV zwei gleiche oder verschiedene ungeladene Molekülteile mit einer Cyclopentadien-haltigen Struktur darstellen, ansonsten aber CpI und CpII gleichen,
M' ein Kationäquivalent eines (Erd)Alkalimetalls oder Tl bedeutet,
E und F unabhängig voneinander eines der Elemente Si, Ge oder Sn bedeuten und
R¹, R², R³, R⁴, R⁵ und R⁶ unabhängig voneinander für geradkettiges oder verzweigtes C₁-C₂₀-Alkyl, C₆-C₁₂-Aryl sowie C₁-C₆-Alkyl-C₆-C₁₂-Aryl und C₆-C₁₂-Aryl-C₁-C₆-Alkyl, Vinyl, Alkyl oder Halogen stehen,
wobei weiterhin in den Formeln (VIII), (IX), (X) anstelle von E(R¹R²R³) und F(R⁴R⁵R⁶) Wasserstoff stehen kann und in diesem Falle X auch für ein Amidanion vom Typ R₂N^{θ} oder ein Carbanion vom Typ R₃C^{θ} oder ein Alkoholatanion vom Typ RO^{θ} stehen kann, und wobei es weiterhin möglich ist, Verbindungen der Formeln (II) oder (VIII) in Gegenwart von Verbindungen der Formeln (V) oder (IX) direkt mit einer Übergangsmetall-Verbindung der Formel (VII) umzusetzen.

Bei der Reaktion von (VIII) mit (III) bzw. (IV) mit (IX) bzw. (X) mit (VII) bildet sich bei der zuletzt genannten Variante die Struktur (I) unter Austritt von Amin R₂NH bzw. R₂NE(R¹R²R³) bzw. R₂NF(R⁴R⁵R⁶) oder einer Kohlenwasserstoffverbindung der Formel R₃CH bzw. R₃CE(R¹R²R³) bzw. R₃CF(R⁴R⁵R⁶) oder eines Ethers ROE(R¹R²R³) bzw. ROF(R⁴R⁵R⁶), worin die organischen Reste R gleich oder verschieden und unabhängig voneinander C₁-C₂₀-Alkyl, C₆-C₁₂-Aryl, substituiertes oder unsubstituiertes Allyl, Benzyl oder Wasserstoff sind. Beispiele für austretendes Amin oder Kohlenwasserstoff, Ether, Silan, Stannan oder German sind etwa Dimethylamin, Diethylamin, Di-(n-propyl)-amin, Di-(isopropyl)-amin, Di-(tertiärbutyl)-amin, Tertiärbutylamin, Cyclohexylamin, Anilin, Methyl-phenyl-amin, Di-(allyl)-amin bzw. Methan, Toluol, Trimethylsilylamin, Trimethylsilylether, Tetramethylsilan und ähnliches.

Es ist auch möglich, Verbindungen der Formeln (II) oder (VIII) in Gegenwart von Verbindungen der Formeln (V) oder (IX) direkt mit einer Übergangsmetall-Verbindung der Formel (VII) umzusetzen.

π-Komplex-Verbindungen der Formel (XIII), in denen die π-Systeme cyclisch und aromatisch sind (Metallocene), können analog hergestellt werden, wobei sinngemäß die folgenden Verbindungen eingesetzt werden:

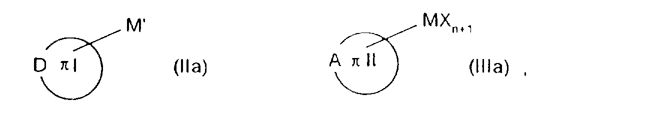

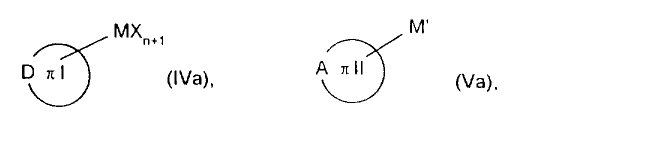

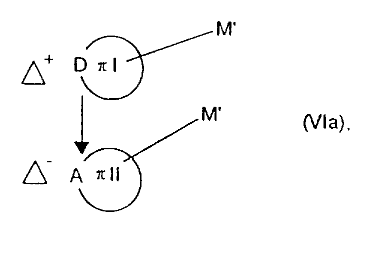

MXₙ₊₂ (VII),

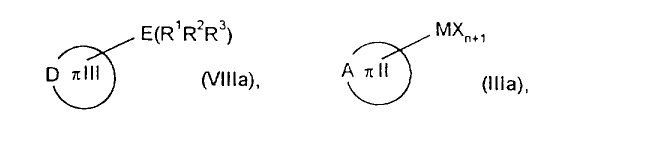

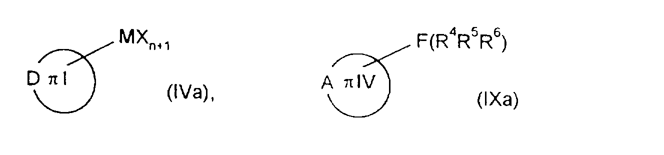

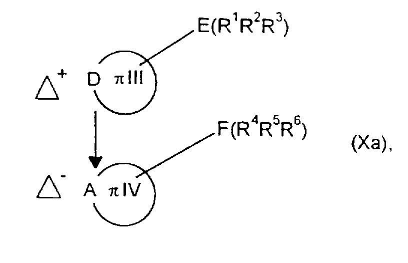

MXₙ₊₂ (VII),

Die Herstellung ofenkettiger π-Komplex-Verbindungen erfolgt nach den fachmännisch bekannten Verfahren unter Einbau von Donor- und Akzeptorgruppen.

Erfindungsgemäß wird zur Homo- oder Copolymerisation eines oder mehrerer gegebenenfalls substituierter α-Olefine als Monomere in der Gas-, Lösungs-, Hochdruck- oder Slurry-Phase bei -60 bis +250°C, bevorzugt 0 bis 200°C und 0,5 bis 5000, bevorzugt 1 bis 3000 bar und in Gegenwart oder Abwesenheit von gesättigten oder aromatischen Kohlenwasserstoffen oder von gesättigten oder aromatischen Halogenkohlenwasserstoffen und in Gegenwart oder Abwesenheit von Wasserstoff gearbeitet, wobei die Metallocen-Verbindungen bzw. die π-Komplex-Verbindungen als Katalysatoren in einer Menge von 10¹ bis 10¹² mol aller Monomerer pro mol Metallocen bzw. π-Komplex-Verbindung eingesetzt werden und wobei weiterhin in Gegenwart von Lewis-Säuren, Brönstedt-Säuren oder Pearson-Säuren oder zusätzlich in Gegenwart von Lewis-Basen gearbeitet werden kann.

Solche Lewis-Säuren sind beispielsweise Borane oder Alane, wie Aluminiumalkyle, Aluminiumhalogenide, Aluminiumalkoholate, Bororganyle, Borhalogenide, Borsäureester oder Bor- bzw. Aluminium-Verbindungen, die sowohl Halogenid- als auch Alkyl- bzw. Aryl- oder Alkoholat-Substituenten enthalten, sowie Mischungen davon oder das Triphenylmethyl-Kation. Besonders bevorzugt sind Aluminoxane oder Mischungen von Aluminium-haltigen Lewis-Säuren mit Wasser. Alle Säuren wirken nach heutigen Erkenntnissen als ionisierende Agentien, die ein Metalloceniumkation ausbilden, das durch ein sperriges, schlecht koordinierendes Anion ladungskompensiert wird.

Erfindungsgemäß können weiterhin die Reaktionsprodukte solcher ionisierender Agentien mit Metallocen-Verbindungen der Formel (I) eingesetzt werden. Sie lassen sich durch die Formeln (XIa) bis (XId) beschreiben 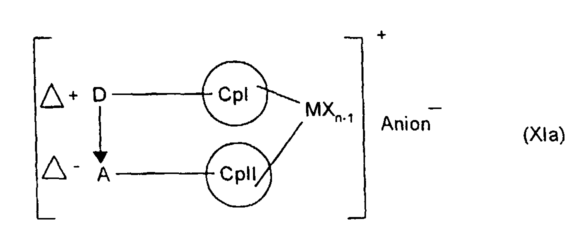 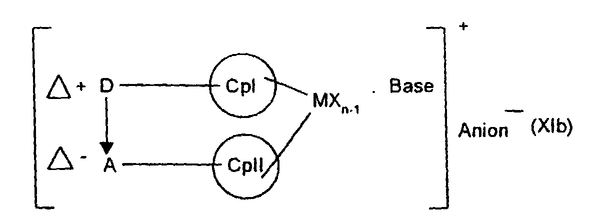 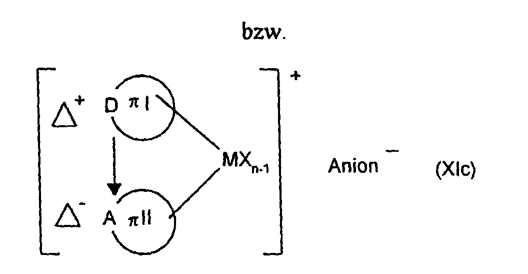 oder 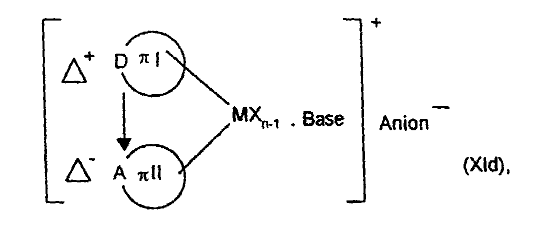 in denen
Anion für das gesamte sperrige, schlecht koordinierende Anion und Base für eine Lewis-Base stehen.

Die erfindungsgemäß einsetzbaren Katalysatoren der Formeln (I) bzw. (XIII) können sowohl in monomerer als auch in dimerer oder oligomerer Form vorliegen.

Es ist auch möglich, gleichzeitig mehrere D/A-Katalysatoren einzusetzen, um ein bestimmtes Material-Eigenschaftsprofil einzustellen. Dementsprechend ist es auch möglich, einen oder mehrere D/A-Katalysatoren in Kombination mit anderen Metallocenen, die keine D/A-Brücke aufweisen einzusetzen.

Beispiele für schlecht koordinierende Anionen sind z.B.
B(C₆H₅)₄^{θ}, B(C₆F₅)₄^{θ}, B(CH₃)(C₆F₅)₃^{θ}, 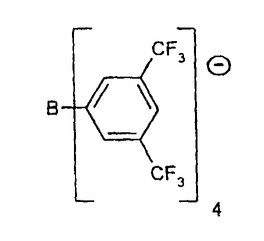 oder Sulfonate, wie Tosylat oder Triflat, Tetrafluorborate, Hexafluorphosphate oder -antimonate, Perchlorate, sowie voluminöse Cluster-Molekülanionenn vom Typ der Carborane, beispielsweise C₂B₉H₁₂^{θ} oder CB₁₁H₁₂^{θ}. Beim Vorliegen solcher Anionen können Metallocen-Verbindungen auch bei Abwesenheit von Aluminoxan als hochwirksame Polymerisationskatalystoren wirken. Das ist vor allem dann der Fall, wenn ein X-Ligand eine Alkylgruppe, Allyl oder Benzyl darstellt: Es kann aber auch vorteilhaft sein, solche Metallocen-Komplexe mit voluminösen Anionen in Kombination mit Aluminiumalkylen, wie (CH₃)₃Al, C₂H₅)₃Al, (n-/i-Propyl)₃Al, (n-/t-Butyl)₃Al, (i-Butyl)₃Al, die isomeren Pentyl-, Hexyl- oder Octyl-Aluminiumalkyle, oder Lithiumalkylen, wie Methyl-Li, Benzyl-Li, Butyl-Li oder den entsprechenden Mg-organischen Verbindungen, wie Grignard-Verbindungen oder Zn-Organylen, einzusetzen. Solche Metallalkyle übertragen einerseits Alkylgruppen auf das Zentralmetall, andererseits fangen sie Wasser oder Katalysatorgifte aus dem Reaktionsmedium bzw. Monomer bei Polymerisationsreaktionen ab. Metallalkyle der beschriebenen Art können auch vorteilhaft in Kombination mit Aluminoxan-Cokatalysatoren eingesetzt werden, etwa um die benötigte Menge an Aluminoxan zu erniedrigen. Beispiele für Borverbindungen, bei deren Verwendung solche Anionen eingeführt werden, sind:
Triethylammonium tetraphenylborat,
Tripropylammonium tetraphenylborat,
Tri(n-butyl)ammonium tetraphenyborat,
Tri(t-butyl)ammonium tetraphenylborat,
N,N-Dimethylanilinium tetraphenylborat,
N,N-Diethylanilinium tetraphenylborat,
N,N-Dimethyl(2,4,6-trimethylanilinium)tetraphenylborat,
Trimethylammonium-tetrakis(pentafluorophenyl)borat, Triethylammonium-tetrakis(pentafluorophenyl)borat,
Tripropylammonium-tetrakis(pentafluorophenyl)borat,
Tri(n-butyl)ammonium-tetrakis(pentafluorophenyl)borat, Tri(sec-butyl)ammonium-tetrakis(pentafluorophenyl)borat,
N,N-Dimethylanilinium-tetrakis(pentafluorophenyl)borat,
N,N-Diethylanilinium-tetrakis(pentaflurophenyl)borat, N,N-dimethyl(2,4,5-trimethylanilinium)-tetrakis(pentafluorophenyl)borat,
Trimethylammonium-tetrakis(2,3,4,6-tetrafluorophenyl)borat,
Triethylammonium-tetrakis (2,3,4,6-tetrafluorophenyl)borat,
Tripropylmmonium-tetrakis(2,3,4,6-tetrafluorophenyl)borat,
Tri(n-butyl)ammonium-tetrakis(2,3,4,6-tetrafluorophenyl)borat,
Dimethyl(t-butyl)ammonium-tetrakis(2,3,4,6-tetrafluorophenyl)borat,
N,N-Dimethylanilinium-tetrakis(2,3,4,6-tetrafluorophenyl)borat,
N,NDiethylanilinium-tetrakis(2,3,4,6-tetrafluorophenyl)borat,
N,N-Dimethyl-(2,4,6-trimethylanilinium)-tetrakis-(2,3,4,6-tetrafluorophenyl)borat;
Dialkylammonium-Salze, wie:
Di-(i-propyl)ammonium-tetrakis(pentafluorophenyl)borat und
Dicyclohexylammonium-tetrakis(pentafluorophenyl)borat;
Tri-substituierte Phosphonium-Salze, wie:
Triphenylphosphonium-tetrakis(pentafluorophenyl)borat,
Tri(o-tolyl)phosphonium-tetrakis(pentrafluorophenyl)borat,
Tri(2,6-dimethylphenyl)phosphonium-tetrakis(pentafluorophenyl)borat,
Tritolylmethyl-tetrakis(pentafluorphenyl)borat,
Triphenylmethyl-tetraphenylborat (Trityl-tetraphenylborat),
Trityl-tetrakis(pentafluorphenyl)borat,
Silber-tetrafluorborat,
Tris(pentafluorphenyl)boran,
Tris(trifluormethyl)boran.

Die erfindungsgemäß einzusetzenden Metallocen-Verbindungen bzw. die π-Komplex-Verbindungen können isoliert als Reinstoffe zur (Co)Polymerisation eingesetzt werden. Es ist aber auch möglich, sie "in situ" im (Co)Polymerisationsreaktor in einer dem Fachmann bekannten Weise zu erzeugen und zu verwenden.

Das erste und das zweite Carbanion Cpl und CpII mit einem Cyclopentadienylgerüst können gleich oder verschieden sein. Das Cyclopentadienylgerüst kann beispielsweise eines aus der Gruppe von Cyclopentadien, substituiertem Cyclopentadien, Inden, substituiertem Inden, Fluoren und substituiertem Fluoren sein. Als Substituenten seien 1 bis 4 je Cyclopentadien- bzw. ankondensiertem Benzolring genannt. Diese Substituenten können C₁-C₂₀-Alkyl, wie Methyl, Ethyl, Propyl, Isopropyl, Butyl oder iso-Butyl, Hexyl, Octyl, Decyl, Dodecyl, Hexadecyl, Octadecyl, Eicosyl, C₁-C₂₀-Alkoxy, wie Methoxy, Ethoxy, Propoxy, Isopropoxy, Butoxy oder iso-Butoxy, Hexoxy, Octyloxy, Decyloxy, Dodecyloxy, Hexadecyloxy, Octadecyloxy, Eicosyloxy, Halogen, wie Fluor, Chlor oder Brom, C₆-C₁₂-Aryl, wie Phenyl, C₁-C₄-Alkylphenyl, wie Tolyl, Ethylphenyl, (i-)Propylphenyl, (i-,tert.-)Butylphenyl, Xylyl, Halogenphenyl, wie Fluor-, Chlor-, Bromphenyl, Naphthyl oder Biphenylyl, Triorganyl-silyl, wie Trimethylsilyl (TMS), Ferrocenyl sowie D bzw. A, wie oben definiert, sein. Ankondensierte aromatische Ringe können ferner teilweise oder vollständig hydriert sein, so daß lediglich die Doppelbindung bestehen bleibt, an der sowohl der ankondensierte Ring als auch der Cyclopentadienring Anteil haben. Weiterhin können Benzolringe, wie im Inden oder Fluoren, einen oder zwei ankondensierte weitere Benzolringe enthalten. Noch weiterhin können der Cyclopentadien- bzw. Cyclopentadienylring und ein ankondensierter Benzolring gemeinsam einen weiteren Benzolring ankondensiert enthalten.

Solche Cyclopentadiengerüste sind in Form ihrer Anionen ausgezeichnete Liganden für Übergangsmetalle, wobei jedes Cyclopentadienyl-Carbanion der genannten, gegebenenfalls substituierten Form eine positive Ladung des Zentralmetalls im Komplex kompensiert. Einzelbeispiele für solche Carbanionen sind: Cyclopentadienyl, Methyl-cyclopentadienyl, 1,2-Dimethyl-cyclopentadienyl, 1,3-Dimethylcyclopentadienyl, Indenyl, Phenylindenyl, 1,2-Diethyl-cyclopentadienyl, Tetramethylcyclopentadienyl, Ethyl-cyclopentadienyl, n-Butyl-cyclopentadienyl, n-Octylcyclopentadienyl, β-Phenylpropyl-cyclopentadienyl, Tetrahydroindenyl, Propylcyclopentadienyl, t-Butyl-cyclopentadienyl, Benzyl-cyclopentadienyl, Diphenylmethylcyclopentadienyl, Trimethylgermyl-cyclopentadienyl, Trimethylstannylcyclopentadienyl, Trimethylstannyl-cyclopentadienyl, Trifluormethyl-cyclopentadienyl, Trimethylsilyl-cyclopentadienyl, Pentamethylcyclopentadienyl, Fluorenyl, Tetrahydro- bzw. Octahydro-fluorenyl, am Sechsring benzoanellierte Fluorenyle und Indenyle, N,N-Dimethylamino-cyclopentadienyl, Dimethylphosphino-cyclopentadienyl, Methoxy-cyclopentadienyl, Dimethylboranyl-cyclopentadienyl, (N,N-Dimethylaminomethyl)-cyclopentadienyl.

Neben der obligatorisch vorhandenen ersten Donor-Akzeptor-Bindung zwischen D und A können weitere Donor-Akzeptor-Bindungen gebildet werden, wenn zusätzliche D und/oder A als Substituenten der jeweiligen Cyclopentadiensysteme oder Substituenten oder Teile der π-Systeme vorliegen. Alle Donor-Akzeptor-Bindungen sind durch ihre oben dargestellte Reversibilität gekennzeichnet. Für den Fall mehrerer D bzw. A können diese verschiedene der genannten Positionen einnehmen. Die Erfindung umfaßt demnach sowohl die verbrückten Molekül-Zustände (Ia) bzw. (XIIIa) als auch die unverbrückten Zustände (Ib) bzw. (XIIIb). Die Anzahl der D-Gruppen kann gleich oder verschieden zur Anzahl der A-Gruppen sein. In bevorzugter Weise werden CpI und CpII über nur eine Donor-Akzeptor-Brücke verknüpft.

Neben den erfindungsgemäßen D/A-Brücken können auch kovalente Brücken vorliegen. In diesen Fällen verstärken die D/A-Brücken die Stereorigidität und die Thermostabilität des Katalysators. Beim Wechsel zwischen geschlossener und geöffneter D/A-Bindung werden Sequenzpolymere bei Copolymeren mit unterschiedlicher chemischer Zusammensetzung zugänglich.

Die π-Komplex-Verbindungen sind ebenfalls gekennzeichnet durch das Vorliegen mindestens einer koordinativen Bindung zwischen Donoratom(en) D und Akzeptoratom(en) A. Sowohl D als auch A können hierbei Substituenten ihrer jeweils zugehörigen π-Systeme πI bzw. πll oder Teil des π-Systems sein, wobei jedoch stets mindestens eines von D und A Teil des π-Systems ist. Als π-System wird hierbei das gesamte, gegebenenfalls ein- oder zweifach kondensierte π-System verstanden. Hieraus ergeben sich folgende Ausführungsformen:
- D ist Teil des π-Systems, A ist Substituent des π-Systems;
- D ist Substituent des π-Systems, A ist Teil des π-Systems;
- D und A sind Teile ihres jeweiligen π-Systems.

Beispielsweise seien folgende heterocyclische Ringsysteme genannt, in denen D oder A Teile des Ringsystems sind: 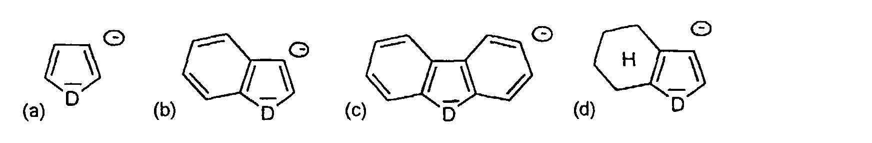 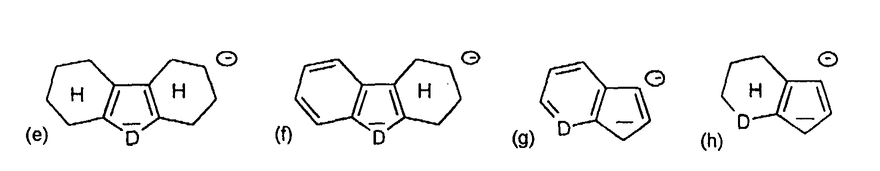 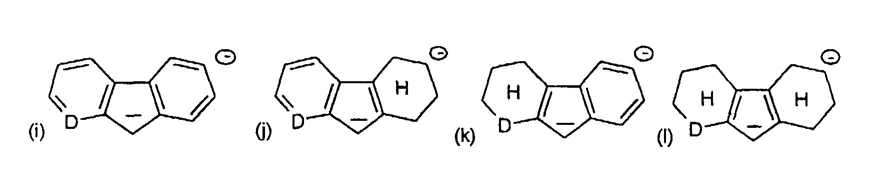 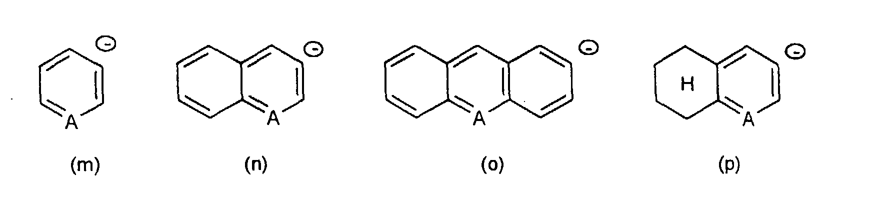 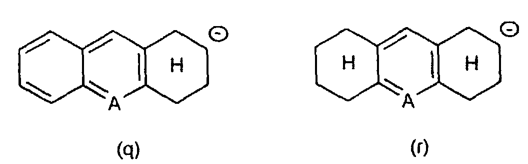 Wichtige heterocyclische Ringsysteme sind die mit (a), (b), (c), (d), (g), (m), (n) und (o) bezeichneten Systeme; besonders wichtige sind die mit (a), (b), (c) und (m) bezeichneten.

Für den Fall, daß eines von D und A Substituent seines zugehörigen Ringsystems ist, ist das Ringsystem 3-, 4-, 5-, 6-, 7- oder 8-gliedrig mit oder ohne elektrische Ladung, das in der angegebenen Weise weiter substituiert und/oder kondensiert sein kann. Bevorzugt sind 5- und 6-gliedrige Ringsysteme. Besonders bevorzugt ist das negativ geladene Cyclopentadienyl-System.

Das erste bzw. das zweite π-System πI und πIl, falls es als Ringsystem ausgebildet ist, kann für den Fall, daß eines von D und A Substituent des Ringsystems ist, CpI bzw. CpII entsprechen.

Als Donorgruppen kommen vor allem solche in Frage, bei denen das Donoratom D ein Element der 5., 6. oder 7., bevorzugt der 5. oder 6. Hauptgruppe des Periodensystems der Elemente (Mendelejew) ist und mindestens ein freies Elektronenpaar besitzt und wobei sich das Donoratom im Falle von Elementen der 5. Hauptgruppe in einem Bindungszustand mit Substituenten befindet und im Falle von Elementen der 6. Hauptgruppe in einem solchen befinden kann; Donoratome der 7. Hauptgruppe tragen keine Substituenten. Dies wird am Beispiel von Phosphor P, Sauerstoff O und Chlor Cl als Donoratome wie folgt verdeutlicht, wobei "Subst." solche genannten Substituenten und "-Cp" die Bindung an das Cyclopentadienyl-haltige Carbanion darstellen, ein Strich mit einem Pfeil, die in Formel (I) angegebene Bedeutung einer koordinativen Bindung hat und sonstige Striche vorhandene Elektronenpaare bedeuten:

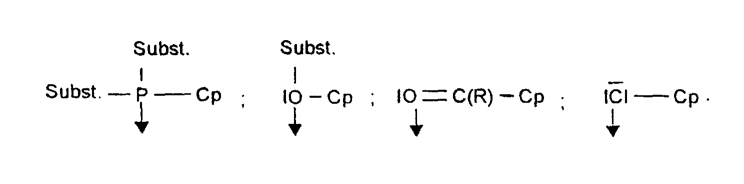

Als Akzeptorgruppen kommen vor allem solche in Frage, deren Akzeptoratom A ein Element aus der 3. Hauptgruppe des Periodensystems der Elemente (Mendelejew), wie Bor, Aluminium, Gallium, Indium und Thallium ist, sich in einem Bindungszustand mit Substituenten befindet und eine Elektronenlücke besitzt.

D und A sind durch eine koordinative Bindung verknüpft, wobei D eine positive (Teil)Ladung und A eine negative (Teil)Ladung annehmen.

Es wird demnach zwischen dem Donoratom D und der Donorgruppe bzw. zwischen dem Akzeptoratom A und der Akzeptorgruppe unterschieden. Die koordinative Bindung D → A wird zwischen dem Donoratom D und dem Akzeptoratom A hergestellt. Die Donorgruppe bedeutet die Einheit aus dem Donoratom D, den gegebenenfalls vorhandenen Substituenten und den vorhandenen Elektronenpaaren; entsprechend bedeutet die Akzeptorgruppe die Einheit aus dem Akzeptoratom A, den Substituenten und der vorhandenen Elektronenlücke.

Die Bindung zwischen dem Donoratom bzw. dem Akzeptoratom und dem Cyclopentadienyl-haltigen Carbanion kann durch Spacergruppen im Sinne von D-Spacer-Cp bzw. A-Spacer-Cp unterbrochen sein. Im dritten der obigen Formelbeispiele stellt =C(R)- einen solchen Spacer zwischen O und Cp dar. Solche Spacergruppen sind beispeilsweise:

Dimethylsilyl, Diethylsilyl, Di-n-propylsilyl, Diisopropylsilyl, Di-n-butylsilyl, Di-t-butylsilyl, Di-n-hexylsilyl, Methylphenylsilyl, Ethylmethylsilyl, Diphenylsilyl, Di- (p-t-butylphenethylsilyl), n-Hexylmethylsilyl, Cyclopentamethylensilyl, Cyclotetramethylensilyl, Cyclotrimethylensilyl, Dimethylgermanyl, Diethylgermanyl, Phenylamino, t-Butylamino, Methylamino, t-Butylphosphino, Ethylphosphino, Phenylphosphino, Methylen, Dimethylmethylen (i-Propyliden), Diethylmethylen, Ethylen, Dimethylethylen, Diethylethylen, Dipropylethylen, Propylen, Dimethylpropylen, Diethylpropylen, 1,1-Dimethyl-3,3-dimethylpropylen, Tetramethyldisiloxan, 1,1,4,4-Tetramethyldisilylethylen, Diphenylmethylen.

In bevorzugter Weise sind D bzw. A ohne Spacer an das Cyclopentadienyl-haltige Carbanion gebunden.

D bzw. A können unabhängig voneinander am Cyclopentadien(yl)ring oder einem ankondensierten Benzolring oder einem anderen Substituenten von Cpl bzw. Cpll oder πI bzw. πII sitzen. Für den Fall mehrerer D bzw. A können diese verschiedene der genannten Positionen einnehmen.

Substituenten an den Donoratomen N, P, As, Sb, Bi, O, S, Se, bzw. Te und an den Akzeptoratomen B, Al, Ga, In bzw. Tl sind beispielsweise: C₁-C₁₂(Cyclo)Alkyl, wie Methyl, Ethyl, Propyl, i-Propyl, Cyclopropyl, Butyl, i-Butyl, tert.-Butyl, Cyclobutyl, Pentyl, Neopentyl, Cyclopentyl, Hexyl, Cyclohexyl, die isomeren Heptyle, Octyle, Nonyle, Decyle, Undecyle, Dodecyle; die hierzu korrespondierenden C₁-C₁₂-Alkoxy-Gruppen; Vinyl, Butenyl, Allyl; C₆-C₁₂-Aryl, wie Phenyl, Naphthyl oder Biphenylyl, Benzyl, die durch Halogen, 1 oder 2 C₁-C₄-Alkylgruppen, C₁-C₄-Alkoxygruppen, Nitro oder Halogenalkylgruppen, C₁-C₆-Alkyl-carboxy, C₁-C₆-Alkyl-carbonyl oder Cyano substituiert sein können (z.B. Perfluorphenyl, m,m'-Bis(trifluormethyl)-phenyl und analoge, dem Fachmann geläufige Substituenten); analoge Aryloxygruppen; Indenyl; Halogen, wie F, Cl, Br und I, 1-Thienyl, disubstituiertes Amino, wie (C₁-C₁₂-Alkyl)₂amino, Diphenylamino, Tris-(C₁-C₁₂ -alkyl)-silyl, NaSO₃-Aryl, wie NaSO₃-Phenyl und NaSO₃-Tolyl, C₆H₅-C≡C-; aliphatisches und aromatisches C₁-C₂₀-Silyl, dessen Alkylsubstituenten neben den oben genannten zusätzlich Octyl, Decyl, Dodecyl, Stearyl oder Eicosyl sein können und dessen Arylsubstituenten Phenyl, Tolyl, Xylyl, Naphthyl oder Biphenylyl sein können; und solche substituierten Silylgruppen, die über -CH₂- an das Donoratom bzw. das Akzeptoratom gebunden sind, beispielsweise (CH₃)₃ SiCH₂-; (C₁-C₁₂-Alkyl)(phenyl)amino, (C₁-C₁₂-Alkylphenyl)₂amino, C₆-C₁₂-Aryloxy mit den oben genannten Arylgruppen, C₁-C₈-Perfluoralkyl, Perfluorphenyl. Bevorzugte Substituenten sind: C₁-C₆-Alkyl, C₅-C₆-Cycloalkyl, Phenyl, Tolyl, C₁-C₆-Alkoxy, C₆-C₁₂-Aryloxy, Vinyl, Allyl, Benzyl, Perfluorphenyl, F, Cl, Br, Di-(C₁-C₆-alkyl)-amino, Diphenylamino.

Donorgruppen sind solche, bei denen das freie Elektronenpaar am N, P, As, Sb, Bi, O, S, Se, Te, F Cl, Br, I lokalisiert ist; bevorzugt hiervon sind N, P, O, S. Beispielhaft als Donorgruppen seien genannt: (CH₃)₂N-, (C₂H₅)₂N-, (C₃H₇)₂N-, (C₄H₉)₂N-, (C₆H₅)₂N-, (CH₃)₂P-, (C₂H₅)₂P-, (C₃H₇)₂P-, (i-C₃H₇)₂P-, (C₄H₉)₂P-, (t-C₄H₉)P-, (Cyclohexyl)₂P-, (C₆H₅)₂P-, CH₃O-, CH₃S-, C₆H₅S-, -C(C₆H₅)=O, -C(CH₃)=O, -OSi(CH₃)₃, -OSi(CH₃)₂-t-butyl, in denen N und P je ein freies Elektronpaar und O und S je zwei freie Elektronenpaare tragen und wobei in den beiden zuletzt genannten Beispielen der doppelt gebundene Sauerstoff über eine Spacergruppe gebunden ist, sowie Systeme, wie der Pyrrolidonring, wobei die von N verschiedenen Ringglieder ebenfalls als Spacer wirken.

Akzeptorgruppen sind solche, bei denen eine Elektronenpaar-Lücke am B, Al, Ga, In oder Tl, bevorzugt B, Al vorhanden ist; beispielhaft seien genannt: (CH₃)₂B-, (C₂H₅)₂B-, H₂B-, (C₆H₅)₂B-, (CH₃)(C₆H₅)B-, (Vinyl)₂B-, (Benzyl)₂B-, Cl₂B-, (CH₃O)₂B-, Cl₂Al-, (CH₃)Al-, (i-C₄H₉)₂Al-, (Cl)(C₂H₅)₂Al-, (CH₃)₂Ga-, (C₃H₇)₂Ga-, ((CH₃)₃Si-CH₂)₂Ga-, (Vinyl)₂Ga-, (C₆H₅)₂Ga-, (CH₃)₂In-, ((CH₃)₃Si-CH₂)₂In-, (Cyclopentadienyl)₂In-.

Weiterhin kommen solche Donor- und Akzeptorgruppen in Frage, die chirale Zentren enthalten oder in denen 2 Substituenten mit dem D- bzw. A-Atom einen Ring bilden. Beispiele hierfür sind etwa

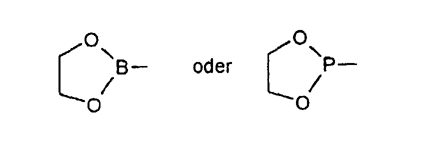

Bevorzugte Donor-Akzeptor-Brücken zwischen CpI und CpII sind beispielsweise folgende:

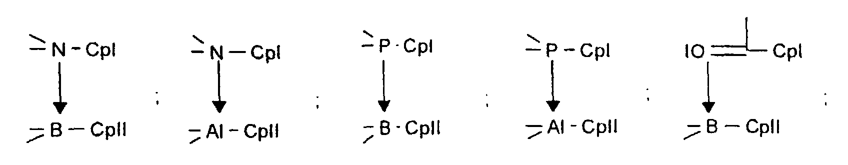

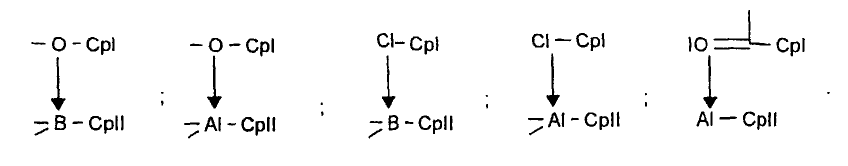

Eines oder beide π-Systeme πI bzw. πII kann als Heterocyclus in Form der obigen Ringsysteme (a) bis (r) vorliegen. D ist hierbei bevorzugt ein Element der 5. oder 6. Hauptgruppe des Periodensystems der Elemente (Mendelejew); A ist hierbei bevorzugt Bor. Einzelbeispiele für solche Hetero-π-Systeme, insbesondere Heterocyclen sind:

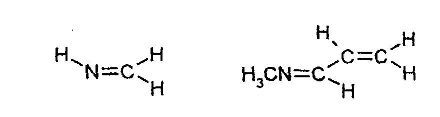

RC₆H₄N=CR'-CR'=CH-C₆H₄R

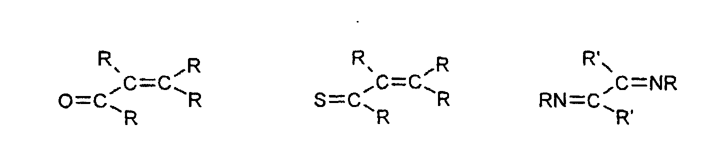

- R, R' =: H, Alkyl, Aryl, Alkaryl z.B. Methyl, Ethyl, t-Butyl, Phenyl, o,o'-Di-(i-Propyl)-phenyl

Beispiele für Heterocyclen sind: Pyrrolyl, Methylpyrrolyl, Dimethylpyrrolyl, Trimethylpyrrolyl, Tetramethylpyrrolyl, t-Butylpyrrolyl, Di-t-butylpyrrolyl, Indolyl, Methylindolyl, Dimethylindolyl, t-Butylindolyl, Di-t-butylindolyl, Tetramethylphospholyl, Tetraphenylphospholyl, Triphenylphospholyl, Trimethylphospholyl, Phosphaindenyl, Dibenzophospholyl (Phosphafluorenyl), Dibenzopyrrolyl

Bevorzugte Donor-Akzeptor-Brücken zwischen πl und πII sind beispielsweise folgende: N → B, N → Al, P → B, P → Al, O → B, O → Al, Cl → B, Cl → Al, C=O→B, C=O→AI, wobei beide Atome dieser Donor-Akzeptor-Brücken Teile eines Heteroπ-Systems sein können oder ein Atom (Donor oder Akzeptor) Teil eines π-Systems ist und das andere Substituent des zweiten π-Systems ist oder wobei beide Atome Substituenten ihres jeweiligen Ringes sind und zusätzlich einer der Ringe ein Heteroatom enthält.

Die beiden Liganden-Systeme πI und πIl können gemäß obiger Darstellung durch eine, zwei oder drei Donor-Akzeptor-Brücken verknüpft sein. Dies ist möglich, da erfindungsgemäß die Formel (Ia) die dargestellte D → A - Brücke enthält, die Liganden-Systeme πI bzw. πII aber weitere D und A als Substituenten oder Hetero-π-Zentren tragen können; die Zahl der sich daraus ergebenden zusätzlichen D → A - Brücken beträgt Null, Eins oder Zwei. Die Anzahl von D- bzw. A-Substituenten auf πI bzw. πII kann gleich oder verschieden sein. Die beiden Liganden-Systeme πI und πII können zusätzlich kovalent verbrückt sein. (Beispiele für kovalente Brücken sind weiter oben als Spacergruppen beschrieben.) Bevorzugt sind jedoch Verbindungen ohne kovalente Brücke, in denen demnach πI und πII über nur eine Donor-Akzeptor-Brücke verknüpft sind.

M steht für ein Übergangsmetall aus der 3., 4., 5. oder 6. Nebengruppe des Periodensystems der Elemente (Mendelejew), einschließlich der Lanthaniden und Actiniden; beispielhaft seien genannt: Sc, Y, La, Sm, Nd, Lu, Ti, Zr, Hf, Th, V Nb, Ta, Cr. Bevorzugt sind Ti, Zr, Hf.

Bei der Ausbildung der Metallocen-Struktur bzw. π-Komplex-Struktur wird je eine positive Ladung des Übergangsmetalls M durch je ein Cyclopentadienyl-haltiges Carbanion kompensiert. Noch verbleibende positive Ladungen am Zentralatom M werden durch weitere, zumeist einwertige Anionen X abgesättigt, von denen zwei gleiche oder verschiedene auch miteinander verknüpft sein können (Dianionen 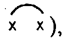 beispielsweise einwertig oder zweiwertig negative Reste aus gleichen oder verschiedenen, linearen oder verzweigten, gesättigten oder ungesättigten Kohlenwasserstoffen, Aminen, Phosphinen, Thioalkoholen, Alkoholen oder Phenolen. Einfache Anionen wie CR₃⁻, NR₂⁻, PR₂⁻, OR-, SR- usw. können durch gesättigte oder ungesättigte Kohlenwasserstoff- oder Silan-Brücken verbunden sein, wobei Dianionen entstehen und die Anzahl der Brückenatome 0, 1, 2, 3, 4, 5, 6 betragen kann, bevorzugt sind 0 bis 4 Brückenatome, besonders bevorzugt 1 oder 2 Brückenatome. Die Brückenatome können außer H-Atomen noch weitere KW-Substituenten R tragen. Beispiele für Brücken zwischen den einfachen Anionen sind etwa -CH₂-, -CH₂-CH₂-, -(CH₂)₃-, CH=CH, -(CH=CH)₂-, -CH=CH-CH₂-, CH₂-CH=CH-CH₂-, -Si(CH₃)₂-, C(CH₃)₂-. Beispiele für X sind: Hydrid, Chlorid, Methyl, Ethyl, Phenyl, Fluorid, Bromid, Iodid, der n-Propylrest, der i-Propylrest, der n-Butylrest, der Amylrest, der i-Amylrest, der Hexylrest, der i-Butylrest, der Heptylrest, der Octylrest, der Nonylrest, der Decylrest, der Cetylrest, Methoxy, Ethoxy, Propoxy, Butoxy, Phenoxy, Dimethylamino, Diethylamino, Methylethylamino, Di-t-Butylamino, Diphenylamino, Diphenylphosphino, Dicyclohexylphosphino, Dimethylphosphino, Methyliden, Ethyliden, Propyliden, das Ethylenglykoldianion. Beispiele für Dianionen sind 1,4-Diphenyl-1,3-butadiendiyl, 3-Methyl-1,3-pentadiendiyl, 1,4-Dibenzyl-1,3-butadiendiyl, 2,4-Hexadiendiyl, 1,3-Pentadiendiyl, 1,4-Ditolyl-1,3-butandiendiyl, 1,4-Bis(trimethylsilyl-1,3-butadiendiyl, 1,3-Butadiendiyl. Besonders bevorzugt sind 1,4-Diphenyl-1,3-butandiendiyl, 1,3-Pentadiendiyl, 1,4-Dibenzyl-1,3-butadiendiyl, 2,4-Hexandiendiyl, 3-Methyl-1,3-pentadiendiyl, 1,4-Ditolyl-1-3-butadiendiyl und 1,4-Bis(trimethylsilyl)-1,3-butadiendiyl. Weitere Beispiele für Dianionen sind solche mit Heteroatomen, etwa der Struktur 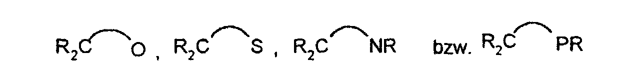 wobei die Brücke die angegebene Bedeutung hat. Besonders bevorzugt sind darüber hinaus zur Ladungskompensation schwach oder nicht koordinierende Anionen der obengenannten Art.

Die Aktivierung durch solche voluminösen Anionen gelingt beispielsweise durch Umsetzung der D/A-π-Komplex-Verbindungen, insbesondere der D/A-Metallocene mit Tris-(pentafluorphenyl)-boran, Triphenylboran, Triphenylaluminium, Trityl-tetrakis-(pentafluorphenyl)-borat oder N,N-Dialkyl-phenyl-ammonium-tetrakis-(pentafluorphenyl)-borat oder die entsprechenden Phosphonium- oder Sulfoniumsalze von Boraten oder (Erd)Alkali-, Thallium- oder Silbersalzen von Boraten, Carboranen, Tosylaten, Triflaten, Perfluorcarboxylaten wie Trifluoracetat oder den korrespondierenden Säuren. Vorzugsweise werden dabei D/A-Metallocene eingesetzt, deren Anionäquivalente X = Alkyl-, Allyl-, Aryl-, Benzylgruppen darstellt. Solche Derivate können auch "in situ" hergestellt werden, indem man D/A-Metallocene mit anderen Anionäquivalenten wie X = F, Cl, Br, OR etc. zuvor mit Aluminiumalkylen, Lithiumorganylen oder Grignard-Verbindungen oder Zink- oder Bleialkylen umsetzt. Die daraus erhältlichen Umsetzungsprodukte können ohne vorherige Isolierung mit obengenannten Boranen oder Boraten aktiviert werden.

Der Index n nimmt in Abhängigkeit von der Ladung von M den Wert Null, Eins, Zwei, Drei oder Vier, bevorzugt Null, Eins oder Zwei an. Die oben genannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen der Metallocen-Verbindung jeweils zwei kompensiert werden. Im Falle von La³⁺ nimmt demnach der Index n den Wert Eins und im Falle von Zr⁴⁺ den Wert Zwei an; bei Sm²⁺ wird n = Null.

Zur Herstellung der Metallocen-Verbindungen der Formel (I) kann man entweder je eine Verbindung der obigen Formeln (II) und (III) oder je eine Verbindung der obigen Formeln (IV) und (V) oder je eine Verbindung der obigen Formeln (VI) und (VII) oder je eine Verbindung der obigen Formeln (VIII) und (III) oder je eine Verbindung der obigen Formeln (IV) und (IX) oder je eine Verbindung der obigen Formeln (X) und (VII) unter Austritt bzw. Abspaltung von Alkalimetall-X-, Erdalkalimetall-X₂-, Silyl-X-, Germyl-X-, Stannyl-X- oder HX-Verbindungen in einem aprotischen Lösungsmittel bei Temperaturen von -78°C bis +120°C, vorzugsweise von -40°C bis +70°C und in einem Molverhältnis von (II):(III) bzw. (IV):(V) bzw. (VI):(VII) bzw. (VIII):(III) bzw. (IV):(IX) bzw. (X):(VII) von 1:0,5-2, vorzugsweise 1:0,8-1,2, besonders bevorzugt 1:1, miteinander umzusetzen. In den Fällen der Umsetzung von (VIII) mit (III) bzw. (IV) mit (IX) bzw. (X) mit (VII) ist es möglich, auf ein aprotisches Lösungsmittel zu verzichten, wenn (VIII), (IX) oder (X) unter Reaktionsbedingungen flüssig ist. Beispiele für solche austretenden bzw. abgespaltenen Verbindungen sind: TlCl, LiCl, LiBr, LiF, Lil, NaCl, NaBr, KCI, KF, MgCl₂ MgBr₂, CaCl₂, CaF₂, Trimethylchlorsilan, Triethylchlorsilan, Tri-(n-butyl)-chlorsilan, Triphenylchlorsilan, Trimethylchlorgerman, Trimethylchlorstannan, Dimethylamin, Diethylamin, Dibutylamin und weitere Verbindungen, die aus dem oben genannten Substitutionsmuster für den Fachmann erkennbar sind.

Verbindungen der Formel (II) bzw. (IV) stellen somit Carbanionen mit einem Cyclopentadienylgerüst oder einem heterocyclischen Gerüst dar, die zur D/A-Brückenbildung genutzte 1 bis 3 Donorgruppen kovalent gebunden oder als heterocyclische Ringglieder inkorporiert enthalten und als Gegenion zur negativen Ladung des Cyclopentadienylgerüstes ein Kation aufweisen. Verbindungen der Formel (VIII) sind ungeladene cyclische-Gerüste mit ebenfalls zur D/A-Brückenbildung genutzten 1 bis 3 Donorgruppen, aber mit leicht abspaltbaren Abgangsgruppen E(R¹R²R³), wie Silyl-, Germyl- oder Stannylgruppen oder Wasserstoff, an Stelle der ionischen Gruppen.

Die zweite Komponente zur Ausbildung der erfindungsgemäß einzusetzenden Metallocen-Verbindungen, nämlich die Verbindung der Formel (III) bzw. (V) stellt ebenfalls ein Carbanion mit einem Cyclopentadienylgerüst dar, das gleich dem Cyclopentadienylgerüst der Verbindung (II) bzw. (IV) oder verschieden von ihm ist, jedoch 1 bis 3 Akzeptorgruppen an Stelle der Donorgruppen trägt. In entsprechender Weise sind Verbindungen der Formel (IX) ungeladene Cyclopentadien-Gerüste mit 1 bis 3 Akzeptorgruppen und ebenfalls leicht abspaltbaren Abgangsgruppen F(R⁴R⁵R⁶).

In völlig analoger Weise stellen Verbindungen der Formeln (VI) bzw. (X) Ausgangstoffe mit vorgebildeter D → A-Bindung dar, die Carbanionen-Gegenkationen-Verbindungen bzw. ungeladene Cyclopentadien-Gerüste mit insgesamt möglichen 1 bis 3 D → A-Bindungen bedeuten und durch Reaktion mit Verbindungen der Formel (VII) die Metallocen-Verbindungen (I) ergeben.

Beide Ausgangsstoffe des Herstellungsverfahrens, nämlich (II) und (III) bzw. (IV) und (V) bzw. (VI) und (VII) bzw. (VIII) und (III) bzw. (IV) und (IX) bzw. (X) und (VII) reagieren beim Zusammengeben spontan unter gleichzeitiger Ausbildung der Donor-Akzeptor-Gruppe -D → A- bzw. der Komplexierung des Metallkations M unter Austritt von M'X bzw. E(R¹R²R³)X bzw. F(R⁴R⁵R⁶)X bzw. HX. Bei der Darstellung der Donor-Akzeptor-Gruppe wurden die Substituenten an D und A der Übersichtlichkeit halber weggelassen.

M' ist ein Kationäquivalent eines (Erd)Alkalimetalls, wie Li, Na, K, ½ Mg, ½ Ca, ½ Sr, ½ Ba, oder Thallium.

In der oben angegebenen Weise werden analog die Verbindungen der Formel (XIIIa+b) hergestellt.

Lösungsmittel für das Herstellungsverfahren sind aprotische, polare oder unpolare Lösungsmittel, wie aliphatische und aromatische Kohlenwasserstoffe oder aliphatische und aromatische Halogenkohlenwasserstoffe. Im Prinzip kommen auch weitere aprotische Lösungsmittel, wie sie dem Fachmann bekannt sind, in Frage, jedoch sind wegen der einfacheren Aufarbeitung solche mit zu hohen Siedepunkten weniger bevorzugt. Typische Beispiele sind: n-Hexan, Cyclohexan, Pentan, Heptan, Petrolether, Toluol, Benzol, Chlorbenzol, Methylenchlorid, Diethylether, Tetrahydrofuran, Ethylenglykoldimethylether.

Die Ausgangsstoffe der Formeln (II), (III), (IV) und (V) können gemäß literaturbekannten Verfahren oder analog zu diesen hergestellt werden. So läßt sich beispielsweise analog zu J. of Organometallic Chem. (1971), 29, 227, das marktgängige Trimethylsilyl-cyclopentadien zunächst mit Butyl-lithium und dann mit Trimethylsilylchlorid zum Bis(trimethylsilyl)-cyclopentadien umsetzen. Dies wiederum kann mit Bortrichlorid zu Trimethylsilyl-cyclopentadienyl-dichlorboran umgesetzt werden (analog zu J. of Organometallic Chem. (1979), 169, 327), welches schließlich analog zu J. of Organometallic Chem. (1979), 169, 373 mit Titantetrachlorid zum Dichlorboryl-cyclopentadienyl-titantrichlorid umgesetzt werden kann. Diese zuletzt genannte Verbindung stellt bereits einen Prototyp der Verbindungen der Formel (III) dar; die zuletzt genannte Verbindung kann weiterhin selektiv mit Trimethylaluminium umgesetzt werden, wobei die beiden mit dem Boratom verbundenen Chloratome durch Methylgruppen ausgetauscht werden und wobei eine weitere Verbindung der Formel (III) aufgezeigt ist. Analog den Verfahrensbeschreibungen in J. Am. Chem. Soc. (1983) 105, 3882 und Organometallics (1982) 1, 1591 kann das marktgängige Cyclopentadienyl-thallium mit Chlor-diphenylphosphin und weiter mit Butyl-lithium umgesetzt werden, wobei man einen Prototyp von Verbindungen der Formel (II) erhält. Als ein weiteres Beispiel sei die Bildung von Dimethylstannyldiphenylphosphin-inden durch Umsetzung von Inden zunächst mit Butyl-lithium, wie oben bereits genannt, und anschließend mit Chlordiphenylphosphin genannt; die weitere Umsetzung, zunächst erneut mit Butyl-lithium und dann mit Chlor-tributylzinn ergibt die genannte Verbindung, die nach weiterer Umsetzung mit Zirkontetrachlorid das Diphenylphosphino-indenyl-zirkoniumtrichlorid als einen Vertreter von Verbindungen der Formel (IV) gibt. Solche Synthesen und Herstellungsweisen sind dem auf dem Gebiet der metallorganischen und der elementorganischen Chemie tätigen Fachmann geläufig und in zahlreichen Literaturstellen veröffentlicht, von denen oben nur einige exemplarisch angeführt wurden.

Die weiter unten aufgeführten Beispiele zeigen, wie solche heterocyclischen Vorstufen bzw. erfindungsgemäßen Katalysatoren zugänglich sind. So kann Pyrrolyl-Lithium (Formel II) aus Pyrrol durch Umsetzung mit Butyl-Lithium hergestellt werden, wie etwa in J. Amer. Chem. Soc. (1982), 104, 2031 beschrieben. Trimethylstannylphosphol (Formel VIII) wird erhalten durch Umsetzung von 1-Phenylphosphol mit Lithium, gefolgt von Aluminiumtrichlorid, wobei Phospholyl-Lithium (Formel II) entsteht, welches seinerseits mit Trimethylchlorstannan zum Trimethylstannylphosphol weiterreagiert. Vgl.: J. Chem. Soc. Chem. Comm. (1988), 770. Diese Verbindung kann mit Titantetrachlorid zu Phospholyl-Titantrichlorid (Formel IV) umgesetzt werden.

Die erfindungsgemäß einzusetzenden Metallocen-Verbindungen eignen sich hervorragend als Katalysatoren in Verfahren zur Homo- und Copolymerisation von einem oder mehreren gegebenenfalls substituierten α-Olefinen in der Gas-, Lösungs-, Hochdruck- oder Slurry-Phase bei -60 bis +250°C, bevorzugt 0 bis 200°C und 0,5 bis 5.000 bar, bevorzugt 1 bis 3.000 bar Druck, wobei in Gegenwart oder Abwesenheit von gesättigten oder aromatischen Kohlenwasserstoffen oder von gesättigten oder aromatischen Halogenkohlenwasserstoffen gearbeitet werden kann. Solche Polymerisationen können diskontinuierlich oder bevorzugt kontinuierlich durchgeführt werden. Ebenso kann im Semibatch-Verfahren gearbeitet werden. Solche Verfahren können auch in mehr als einem Reaktor oder einer Reaktionszone durchgeführt werden. Für den Fall mehrerer Reaktionszonen kann unter verschiedenen Polymerisationsbedingungen gearbeitet werden. So kann in einem Reaktor ein Präpolymer gebildet werden, das in weiteren Reaktoren als heterogener Katalysator für die eigentliche (Co)Polymerisation besondere Eignung besitzt. Für die Bildung solcher Präpolymerer eignen sich besonders heterogene D/A-Katalysatoren auf anorganischen Trägern. Pro Mol π-Komplex-Verbindungen bzw. Metallocen-Verbindungen werden 101 bis 10¹² Mol (Co)Monomere umgesetzt. Die n-Komplex-Verbindungen bzw. Metallocen-Verbindungen können zusammen mit Cokatalysatoren eingesetzt werden. Das Mengenverhältnis zwischen π-Komplex-Verbindungen bzw. Metallocen-Verbindung und Cokatalysator beträgt 1 bis 100.000 mol Cokatalysator pro mol π-Komplex-Verbindung bzw. Metallocen. Cokatalysatoren sind beispielsweise Aluminoxanverbindungen solche der Formel 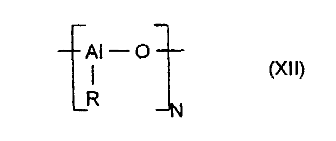 verstanden, in der
- R: für C₁-C₂₀-Alkyl, C₆-C₁₂-Aryl oder Benzyl steht und
- n: eine Zahl von 2 bis 50, bevorzugt 10 bis 35 bedeutet.

Es ist ebenso möglich, ein Gemisch verschiedener Aluminoxane oder ein Gemisch von deren Vorläufern (Aluminiumalkylen) in Kombination mit Wasser (in gasförmiger, flüssiger, fester oder gebundener Form, etwa als Kristallwasser) einzusetzen. Das Wasser kann auch als (Rest)Feuchte des Polymerisationsmediums, des Monomers oder eines Trägers wie Silikagel zugeführt werden.

Die aus der eckigen Klammer von Formel (XI) herausragenden Bindungen enthalten als Endgruppen des oligomeren Aluminoxans R-Gruppen oder AlR₂-Gruppen. Solche Aluminoxane liegen in der Regel als Gemisch mehrerer von ihnen mit unterschiedlicher Kettenlänge vor. Die Feinuntersuchung hat auch Aluminoxane mit ringförmiger oder käfigartiger Struktur ergeben. Aluminoxane sind marktgängige Verbindungen. Im speziellen Fall von R = CH₃ wird von Methylaluminoxanen (MAO) gesprochen.

Weitere Cokatalysatoen sind Aluminiumalkyle, Lithiumalkyle oder Mg-organische Verbindungen, wie Grignard-Verbindungen oder teilhydrolysierte Bororganyle. Bevorzugte Cokatalysatoren sind Aluminoxane.

Die Aktivierung mit dem Cokatalysator bzw. die Erzeugung des voluminösen nicht- oder schwach-kooridinierenden Anions kann in dem Autoklaven oder in einem getrennten Reaktionsgefäß (Präformierung) durchgeführt werden. Die Aktivierung kann in Gegenwart oder Abwesenheit des/der zu polymerisierenden Monomeren erfolgen. Die Aktivierung kann in einem aliphatischen oder aromatischen oder halogenierten Lösungs- oder Suspensionsmittel durchgeführt werden.

Die π-Komplex-Verbindungen bzw. die Metallocen-Verbindungen und die Aluminoxane können sowohl als solche in homogener Form als auch einzeln oder gemeinsam in heterogener Form auf Trägern eingesetzt werden. Das Trägermaterial kann hierbei anorganischer oder organischer Natur sein, wie Kieselgel, Al₂O₃, MgCl₂, NaCI, Cellulosederivate, Stärke und Polymere, wie Polyethylen oder Polypropylen. Hierbei kann sowohl erst die π-Komplex-Verbindung bzw. die Metallocen-Verbindung als auch erst das Aluminoxan auf den Träger gebracht werden und die jeweils andere Komponente danach zugesetzt werden. Gleichermaßen kann man aber auch die π-Komplex-Verbindung bzw. die Metallocen-Verbindung in homogener oder heterogener Form mit dem Aluminoxan aktivieren und danach die aktivierte Metallocen-Verbindung auf den gegebenenfalls Aluminoxan-beladenen Träger bringen.

Trägermaterialien werden vorzugsweise thermisch und/oder chemisch vorbehandelt um den Wassergehalt bzw. die OH-Gruppenkonzentration definiert einzustellen oder möglichst niedrig zu halten. Eine chemische Vorbehandlung kann z.B. in der Umsetzung des Trägers mit Aluminiumalkyl bestehen. Anorganische Träger werden gewöhnlich vor Verwendung auf 100°C bis 1000°C während 1 bis 100 Stunden erhitzt. Die Oberfläche solcher anorganischer Träger, insbesondere von Silica (SiO₂), liegt zwischen 10 und 1000 m²/g, vorzugsweise zwischen 100 und 800 m²/g, Der Teilchendurchmesser liegt zwischen 0,1 und 500 Mikrometer (p), vorzugsweise zwischen 10 und 200 µ.

Durch Homo- oder Copolymerisation umzusetzende Olefine sind beispielsweise Ethylen, Propylen, Buten-1, Penten-1, Hexen-1, Octen-1, 3-Methyl-buten-1, 4-Methyl-penten-1-, 4-Methyl-hexen-1, iso-Octen.

Solche Olefine können weiterhin substituiert sein, beispielsweise mit Phenyl, substituiertem Phenyl, Halogen, der veresterten Carboxylgruppe, der Säureanhydridgruppe; Verbindungen dieser Art sind beispielsweise Styrol, Methylstyrol, Chlorstyrol, Fluorstyrol, 4-Vinyl-biphenyl, Vinyl-fluoren, Vinyl-anthracen, Methylmethacrylat, Ethylacrylat, Vinylsilan, Trimethyl-allylsilan, Vinylchlorid, Vinylidenchlorid, Tetrafluorethylen, Vinylcarbazol, Vinylpyrrolidon, Vinylether und Vinylester. Weiterhin sind erfindungsgemäß ringöffnende Polyadditionen, etwa von Lactonen, wie ε-Caprolacton oder δ-Valerolacton, oder von Lactamen, wie ε-Caprolactam, möglich. Bevorzugte Monomere sind: Ethylen, Propylen, Buten, Hexen, Octen und Methylmethacrylat.

Die mit den erfindungsgemäßen π-Komplex-Verbindungen bzw. Metallocen-Verbindungen durchzuführenden Homo- oder Copolymerisationen oder Polyadditionen werden adiabatisch oder isotherm durchgeführt. Es handelt sich dabei um Hochdruckverfahren in Autoklaven oder Rohrreaktoren, um Lösungsverfahren als auch um Polymerisation in Masse, um Verfahren in der Slurry-Phase in Rührreaktoren oder Schlaufenreaktoren sowie um Verfahren in der Gas-Phase, wobei die Drücke für die Slurry-, Lösungs- und Gas-Phase nicht über 65 bar hinausgehen. Alle diese Verfahren sind lange bekannt und dem Fachmann geläufig. Es ist ein Vorteil der erfindungsgemäßen π-Komplex-Verbindungen bzw. Metallocen-Verbindungen, daß sie durch Auswahl der Substituenten sowohl als lösliche, gegebenenfalls auf Trägern aufgebrachte, als auch als unlösliche π-Komplex-Verbindungen bzw. Metallocen-Verbindungen herstellbar sind. Lösliche π-Komplex-Verbindungen bzw. Metallocen-Verbindungen wird man für das Hochdruck-Verfahren und das Lösungsverfahren einsetzen; heterogene Metallocen-Verbindungen wird man in der Slurry-Phase und der Gas-Phase einsetzen.

Erfindungsgemäß herstellbare (Co)Polymere zeichnen sich durch hohe Kristallinität und optimierten Schmelzbereich aus. Dies wird bei Polyethylen durch eine geringe Verzweigung und bei Polymeren aus Olefinen mit 3 und mehr C-Atomen durch eine hohe Taktizität (isotaktisch oder syndiotaktisch) erreicht. Copolymere zeichnen sich durch eine hohe Regelmäßigkeit im Einbau der Comonomeren aus. Beispiele für solche Polymere sind hochdichtes lineares Polyethylen (HDPE), isotaktisches Propylen (iPP), syndiotaktisches Propylen (sPP), i- oder s-Polybuten, -Polyhexen, Polyocten, lineares niederdichtes Copolymer, z.B. Ethylen mit C₃-C₈-α-Olefin (Linear Low Density Polyethylene LLDPE), so Ethylen/Propylen, Ethylen/Butylen, Ethylen/Hexen, Ethylen/Octen, weiterhin etwa Propylen/Butylen, Propylen/Hexen und andere. Bevorzugt sind HDPE, LLDPE mit Butylen, Hexen oder Octen als Comonomer, iPP und sPP.

Die erfindungsgemäß einzusetzenden π-Komplex-Verbindungen, besonders die Metallocen-Verbindungen ermöglichen durch die Donor-Akzeptor-Brücke eine definierte Öffnung der beiden Cyclopentadienylgerüste in der Art eines Schnabels, wobei neben einer hohen Aktivität eine kontrollierte Selektivität, eine kontrollierte Molekulargewichtsverteilung und ein einheitlicher Einbau von (Co)Monomeren gewährleistet sind. Infolge einer definierten schnabelartigen Öffnung ist auch Platz für voluminöse (Co)Monomere. Eine hohe Einheitlichkeit in der Molekulargewichtsverteilung ergibt sich weiterhin aus dem einheitlichen und definierten Ort der durch Einschub (Insertion) erfolgenden Polymerisation (Single Site Catalyst).

Die Molekulargewichtsverteilung kann gezielt verändert (verbreitert) werden, indem man gleichzeitig mehrere D/A-Katalysatoren einsetzt, um ein bestimmtes Material-Eigenschaftsprofil einzustellen. Dementsprechend ist es auch möglich, einen oder mehrere D/A-Katalysatoren in Kombination mit anderen Metallocenen, die keine D/A-Brücke aufweisen, einzusetzen.

Die D/A-Struktur kann eine Extra-Stabilisierung der Katalysatoren bis hin zu hohen Temperaturen bewirken, so daß die Katalysatoren auch im Hochtemperaturbereich eingesetzt werden können. Die mögliche thermische Dissoziation der Donor-Akzeptor-Bindung ist reversibel und führt durch diesen Selbstorganisations-Prozeß und Selbstreparatur-Mechanismus zu besonders hochwertigen Katalysatoreigenschaften. Die erfindungsgemäßen D/A-Metallocenstrukturen ermöglichen z.B. ein mit klassischen Katalysatoren nicht erreichtes Ausmaß an defektfreier Polyethylenbildung. Entsprechend können die Ethen-Polymerisate außerordentlich hohe Schmelztemperaturen beispielsweise oberhalb von 135°C bis 160°C (Maximum der DSC-Kurve) aufweisen. Unter linearen Polyethylenen, die direkt im Polymerisationsprozeß anfallen, befinden sich bevorzugt solche, die Schmelztemperaturen von 140 bis 160°C (Maxima der DSC-Kurven), bevorzugt 142 bis 160°C, besonders bevorzugt 144 bis 160°C, ganz besonders bevorzugt 146 bis 160°C haben. Dies gilt insbesondere für die, die mit den beanspruchten Metallocen-Verbindungen herstellbar sind. Solche neuen hochschmelzenden Polyethylene zeigen gegebenüber den bekannten beispielsweise verbesserte mechanische Eigenschaften und Wärmeformbeständigkeit (Sterilisierbarkeit bei medizinischen Anwendungen) und eröffnen dadurch Anwendungsmöglichkeiten, die bisher für Polyethylen nicht möglich erschienen und beispielsweise bisher nur durch hochtaktisches Polypropylen erfüllbar waren. Weitere Merkmale sind hohe Schmelzenthalpien und hohe PE-Molmassen.

In einem weiten Temperaturbereich wird durch Polymerisations-Temperaturerhöhung die PE-Molmasse erniedrigt ohne nennenswerte Aktivitätsminderung und ohne daß insgesamt der Bereich technisch interessanter hoher PE-Molmassen und hoher PE-Schmelztemperaturen verlassen wird.

Für die Herstellung isotaktischer Polyolefine eignen sich z.B. quasi-rac-Bis(indenyl)Metallocene mit D/A-Brücke, die zusätzlich z.B. Alkyl-, Aryl- und/oder Silyl-Substituenten bzw. Benz-anellierte Strukturen, etwa in 2-Position bzw. 4,5,6,7-Position, zur Steigerung von Molekulargewicht und Isotaktizität sowie Schmelztemperatur tragen können Aber auch D/A-Bis(cyclopentadienyl)-Metallocene mit Substitutionsmustern (3,3') vergleichbarer Symmetrie kommen in Frage.

Entsprechend eignen sich z.B. für die Herstellung syndiotaktischer Polyolefine D/A-verbrückte (cyclopentadienyl)(fluorenyl)-Metallocene oder aber (cyclopentadienyl)(3,4-disubstituierte cyclopentadienyl)-Metallocene.

Es wurde weiterhin beobachtet, daß erfindungsgemäß einzusetzende Metallocen-Verbindungen und π-Komplexverbindungen geeigneter Symmetrie an α-Olefinen ab 3 C-Atomen eine stereospezifische (isotaktische, syndiotaktische) Polymerisation bewirken, jedoch im oberen Teil des genannten Temperaturbereichs am gleichen Monomer eine zunehmend unspezifische (ataktische) Verknüpfung der Monomereinheiten auslösen. Diese Erscheinung ist noch nicht vollständig untersucht, könnte jedoch in Übereinstimmung mit der Beobachtung stehen, daß koordinative Bindungen, die von einer ionischen Bindung überlagert sind, wie die Donor-Akzeptor-Bindungen in den erfindungsgemäßen Metallocen-Verbindungen, eine zunehmende Reversibilität bei höherer Temperatur zeigen. Weiterhin wurde beispielsweise bei der Ethylen-Propylen-Copolymerisation beobachtet, daß bei gleichem Angebot beider Comonomerer bei tiefer Copolymerisationstemperatur ein hoch Propylen-haltiges Copolymer gebildet wird, während mit steigender Polymerisationstemperatur der Propylengehalt zurückgeht, bis schließlich bei hoher Temperatur überwiegend Ethylen enthaltende Polymere (LLDPE) entstehen. Die reversible Dissoziation und Assoziation der D/A-Struktur und die dadurch möglich werdende gegeneinander erfolgende Rotation der π-Gerüste kann schematisch wie folgt dargestellt werden: 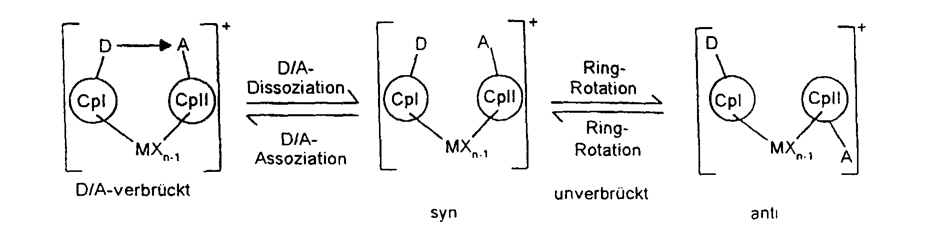 bzw.

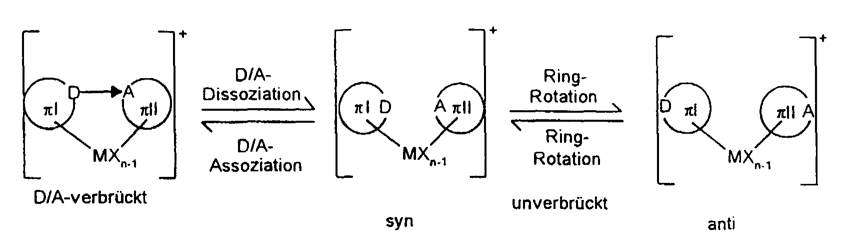

Eine weitere wertvolle Eigenschaft der erfindungsgemäßen D/A-π-Komplex-Verbindungen, beispielsweise D/A-Metallocen-Verbindungen, besteht in der Möglichkeit zur Selbstaktivierung und damit einem Verzicht auf teure Katalysatoren, insbesondere im Falle von dianionischen

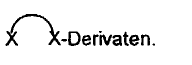

Hierbei bindet das Akzeptoratom A in der geöffneten Form der D/A-n-Komplex-Verbindungen, beispielsweise D/A-Metallocen-Verbindung einen X-Liganden, beispielsweise eine Seite eines Dianions unter Ausbildung einer zwitterionischen Metallocen-Struktur und erzeugt damit beim Übergangsmetall eine positive Ladung, während das Akzeptoratom A eine negative Ladung annimmt. Eine solche Selbstaktivierung kann intramolekular oder intermolekular erfolgen. Dies sei am Beispiel der bevorzugten Verknüpfung zweier X-Liganden zu einem Chelat-Liganden, nämlich des Butadiendiyl-Derivates, verdeutlicht: 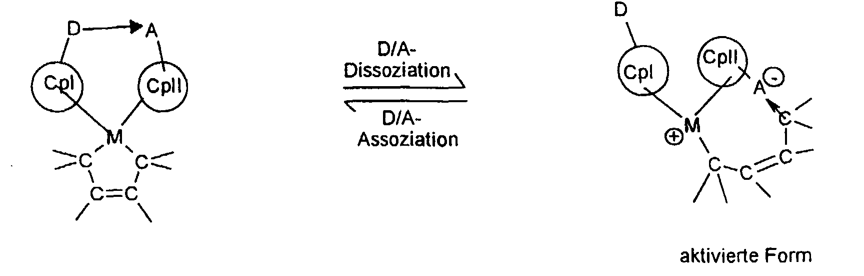 bzw.

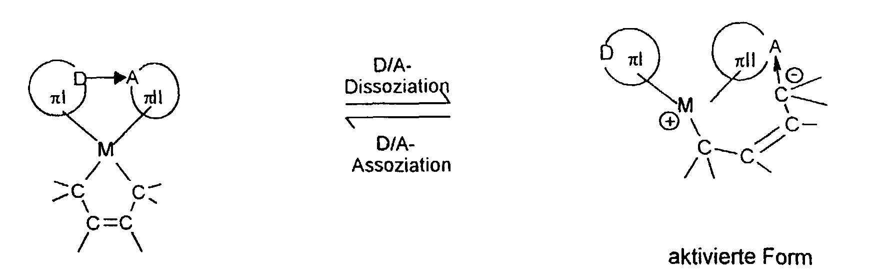

Die Bindungsstelle zwischen dem Übergangsmetall M und H oder substituiertem oder nicht substituiertem C, im Formelbeispiel substituiertem C des gezeigten Butadiendiyl-Dianions, ist sodann der Ort für die Olefin-Insertion zur Polymerisation.

### Beispiele

Alle Reaktionen wurden unter streng anaeroben Bedingungen und unter Verwendung von Schlenk-Techniken bzw. der Hochvakuumtechnik durchgeführt Die verwendeten Lösungsmittel waren trocken und mit Argon gesättigt. Chemische Verschiebungen δ sind in ppm angegeben, relativ zum jeweiligen Standard: ¹H(Tetramethylsilan), ¹³C(Tetramethylsilan), ³¹P(85%ige H₃PO₄), ¹¹B(Bortrifluorid-Etherat -18,1 ppm). Negative Vorzeichen bedeuten eine Verschiebung zu höherem Feld.

### Beispiel 1 (Bis-(trimethylsilyl)-cyclopentadien, Verbindung 1)

14,7 g (0,106 mol) Trimethylsilyl-cyclopentadien (bezogen von Fa. Fluka) und 150 ml Tetrahydrofuran (THF) wurden in einen Reaktionskolben gegeben und auf 0°C abgekühlt. Hierzu wurden 47,4 ml einer Lösung von Butyl-lithium in n-Hexan (2,3 molar; Gesamtmenge 0,109 mol) tropfenweise während 20 Minuten zugefügt. Nach vollständiger Zugabe wurde die gelbe Lösung für eine weitere Stunde gerührt; danach wurde das Kältebad entfernt. Bei Raumtemperatur wurde die Lösung für eine weitere Stunde gerührt und danach auf -20°C abgekühlt. Dann wurden 14,8 ml (0,117 mol) Trimethylsilylchlorid tropfenweise während 10 Minuten zugegeben und das Reaktionsgemisch bei -10°C zwei Stunden gerührt. Danach wurde das Kältebad entfernt und die Reaktionslösung auf Raumtemperatur erwärmt und für eine weitere Stunde nachgerührt. Das Reaktionsgemisch wurde durch Celite filtriert; das Filter wurde mit Hexan gewaschen, und das Hexan wurde von den vereinigten Filtraten im Vakuum entfernt. Das Rohprodukt ergab bei einer Destillation bei 26°C unter 0,4 mbar 19 g reines Produkt der Verbindung 1 (85 % der theoretischen Ausbeute). Siedepunkt und NMR-Daten entsprechen den Literaturangaben (J. Organometallic Chem. 29 (1971), 227; ibid. 30 (1971), C 57; J. Am. Chem. Soc, 102, (1980), 4429; J. Gen. Chem. USSR, Eng. Transl. 43 (1973), 1970; J. Chem. Soc., Dalton Trans. 1980, 1156)
¹H-NMR (400 MHz, C₆D₆): δ = 6,74 (m,2H), 6,43 (m,2H), -0,04 (s,18H).

### Beispiel 2 (Trimethylsilyl-cyclopentadienyl-dichlorboran, Verbindung 2)

In einen Rundkolben, der mit einem Trockeneis-Kühlbad ausgerüstet war, wurden 16 g (0,076 mol) der Verbindung 1 gegeben 8,9 g (0,076 mol) BCl₃ wurden bei -78°C in ein Schlenk-Rohr kondensiert und danach tropfenweise während einer Zeit von 5 Minuten in den Rundkolben gegeben. Die Reaktionsmischung wurde langsam während 1 Stunde auf Zimmertemperatur erwärmt und dann für weitere 2 Stunden auf 55 bis 60°C gehalten. Alle flüchtigen Verbindungen wurden im Vakuum (3 mm Hg = 4 mbar) entfernt. Die anschließende Destillation bei 39°C und 0,012 mbar ergab 14,1 g der Verbindung 2 (85 % der theoretischen Ausbeute). Das ¹H-NMR stimmt mit den Literaturangaben überein und zeigte, daß eine Reihe von Isomeren hergestellt worden waren (vgl. J. Organometallic Chem. 169 (1979), 327). ¹¹B-NMR (64,2 MHz, C₆D₆): δ = +31,5.

### Beispiel 3 (Dichlorboranyl-cyclopentadienyl-titantrichlorid, Verbindung 3)

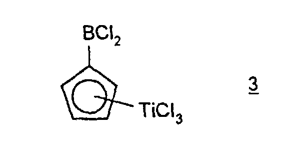

In ein 250 ml-Schlenk-Rohr wurden 11,4 g (0,052 mol) der Verbindung 2 und 100 ml Methylenchlorid (CH₂Cl₂) gegeben. Diese Lösung wurde auf -78°C gekühlt, und 9,8 g (5,6 ml, 0,052 mol) Titantetrachlorid wurden während 10 Minuten zugetropft. Die erhaltene rote Lösung wurde langsam auf Raumtemperatur erwärmt und während weiterer 3 Stunden gerührt. Das Lösungsmittel wurde im Vakuum entfernt, und man erhielt ein schmutzig-gelbes Produkt. 200 ml Hexan wurden zum rohen Feststoff gegeben, und die erhaltene gelbe Lösung wurde filtriert und über Nacht im Kühlschrank gekühlt, wobei 12,3 g (79 % der theoretischen Ausbeute) gelber Kristalle der Verbindung 3 erhalten wurden. Es sei darauf hingewiesen, daß in J. Organometallic Chem. 169 (1979), 373, 62 % der theoretischen Ausbeute erhalten wurde, wobei die Reaktion in einem Kohlenwasserstoff-Lösungsmittel, wie Petroleumether oder Methylcyclohexan ausgeführt wurde.
¹H-NMR (400 Mhz, CD₂Cl₂): δ = 7,53 (t, J = 2,6 Hz, 2H), 7,22 (t, J = 2,6 Hz, 2H). ¹¹B-NMR (64,2 MHz, CD₂Cl₂): δ = +33.

### Beispiel 4 (Dimethylboranyl-cyclopentadienyl-titantrichlorid, Verbindung 4)

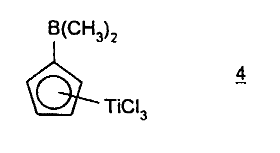

In einem Rundkolben wurden 2,37 g (0,0079 mol) der Verbindung 3 in 100 ml Hexan gelöst. Diese Lösung wurde auf 0°C gekühlt und tropfenweise mit 4 ml einer 2-molaren Lösung von Aluminiumtrimethyl in Toluol (0,008 mol) versetzt. Nach vollständiger Zugabe wurde das Kältebad entfernt und alle flüchtigen Anteile im Vakuum entfernt. Der verbleibende gelbe Feststoff wurde nunmehr in Pentan aufgelöst, feste Anteile wurden abfiltriert, und das klare Filtrat wurde auf -78°C abgekühlt, wobei 1,5 g (74% der theoretischen Ausbeute) an Verbindung 4 erhalten wurden. Es sei angemerkt, daß in J. Organometallic Chem. 169 (1979), 373 eine Ausbeute von 87 % der theoretischen Ausbeuten angegeben werden, wobei Tetramethylzinn als Alkylierungsmittel verwendet wurde; es war jedoch nicht möglich, die Verbindung 4 frei vom entstehenden Trimethylzinnchlorid zu erhalten.
¹H-NMR (400 Mhz, CD₂Cl₂): δ = 7,48 (t, J = 2,5 Hz, 2H), 7,23 (t, J = 2,5 Hz, 2H), 1,17 (s, 6H). ¹¹B-NMR (64,2 MHz, CD₂Cl₂): δ = +56.

### Beispiel 5 (Diphenylphosphin-cyclopentadienyl-lithium, Verbindung 6)

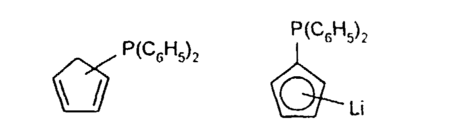

50 g (0,186 mol) Cyclopentadienyl-thallium (bezogen von Fa. Fluka) wurden gemeinsam mit 300 ml Diethylether in einen 500 ml-Kolben eingefüllt. Die Aufschlämmung wurde auf 0°C gekühlt und 34,2 ml (0,186 mol) Diphenylchlorphosphin innerhalb von 10 Minuten zugetropft. Die Aufschlämmung wurde danach auf Zimmertemperatur angewärmt und während einer Stunde gerührt und schließlich durch eine Fritte filtriert. Das Lösungsmittel wurde sodann im Vakuum abgezogen und hinterließ 39,5 g (85 % der theoretischen Ausbeute) des Zwischenproduktes Diphenylphosphino-cyclopentadien, Verbindung 5. Ein Anteil von 18,6 g (0,074 mol) der Verbindung 5 wurde sodann mit Toluol verdünnt und auf 0°C abgekühlt. Zu dieser Lösung wurden 33,2 ml einer 2,24-molaren Lösung von Butyl-lithium in Hexan (0,074 mol) während 10 Minuten zugegeben. Nach dem Anwärmen auf Raumtemperatur und nach Rühren während 2 Stunden ergab die gelbe Lösung einen Niederschlag, der filtriert und mit Toluol und anschließend mit Hexan gewaschen wurde. Nach dem Trocknen im Vakuum wurden 13,2 g der Verbindung 6 (70 % der theoretischen Ausbeute) als bräunliches Pulver erhalten (vgl. J. Am. Chem. Soc. 105 (1983); 3882; Organometallics 1 (1982), 1591).
¹H-NMR (400 MHz, d₈THF): δ= 7,3 (m, 4H), 7,15 (m, 6H), 5,96 (m, 2H), 5,92 (m, 2H), ³¹P-Nbflt (161,9 MHz, d₈THF): δ = -20.

### Beispiel 6 ((C₆H₅)₂P B(CH₃)₂-verbrücktes Bis-(cyclopentadienyl)-titandichlorid, Verbindung 7)

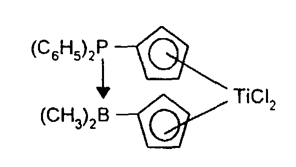

In einen Rundkolben wurden 0,36 g (0,00139 mol der Verbindung 6 und 20 ml Toluol gegeben. Die entstehende Lösung wurde auf -20°C gekühlt und eine Lösung von 0,36 g (0,00139 mol) der Verbindung 4 in 20 ml Toluol während 20 Minuten zugetropft. Nach Beendigung des Zutropfens wurde die Lösung innerhalb von 2 Stunden auf Raumtemperatur erwärmt und bei dieser Temperatur für eine zusätzliche Stunde gerührt. Unlösliches Material wurde über eine Fritte entfernt, und das Lösungsmittel wurde im Vakuum abdestilliert. Der rote ölige Feststoff wurde dann mit Hexan gewaschen, das abdekantiert wurde, und der Feststoff wurde erneut im Vakuum getrocknet. Dabei erhielt man 0,28 g (42 % der theoretischen Ausbeute) der Verbindung 7 als rotes Pulver.
¹H-NMR (300 MHz, CD₂Cl₂): δ = 7,6 - 7,3 (br, m, 10H), 6,92 (m, 2H), 6,77 (m, 4H), 6,60 (m, 2H), 0,29 (d, J_{PH} = 19 Hz, 6H); ³¹P-NMR (161,9 MHz, CD₂Cl₂): = 17,1 (br); ¹¹B-NMR (64,2 MHz, CD₂Cl₂): δ= -29 (br).

### Beispiel 7 (Tributylstannyl-diphenylphosphino-inden, Verbindung 8)

10 g (0,086 mol) Inden wurden in einen Rundkolben gegeben, mit 200 ml Diethylether verdünnt und auf -20°C gekühlt. Zu dieser Lösung wurden 36 ml einer 2,36-molaren Lösung von Butyl-lithium (0,085 mol) in n-Hexan gegeben, wobei die Lösung sofort eine gelbe Farbe annahm. Das Kältebad wurde entfernt, und man ließ das Reaktionsgemisch auf Raumtemperatur erwärmen und rührte das Reaktionsgemisch während einer weiteren Stunde. Danach wurde das Reaktionsgemisch wieder auf 0°C abgekühlt, und 19 g (15,9 ml, 0,086 mol) Diphenylchlorphosphin wurden unter Bildung eines Niederschlags zugegeben. Das Kältebad wurde wieder entfernt, und die Lösung konnte sich auf Zimmertemperatur erwärmen, während für eine weitere Stunde nachgerührt wurde. Die Lösung wurde dann erneut auf -20°C gekühlt, und 36 ml (0,085 mol) Butyl-lithium in n-Hexan wurden zugetropft. Nach beendeter Zugabe wurde das Kältebad wieder entfernt, und die Temperatur stieg auf Raumtemperatur; die Lösung wurde für weitere 1,5 Stunden nachgerührt. Die Aufschlämmung wurde dann wiederum auf 0°C gekühlt und 28 g (0,086 mol) Tributylzinnchlorid wurden tropfenweise zugefügt. Die erhaltene Aufschlämmung wurde auf Raumtemperatur erwärmt und für weitere 1,5 Stunden gerührt, danach durch eine Fritte filtriert und das Lösungsmittel im Vakuum entfernt. Es hinterblieben 46,9 g der Verbindung 8 (92 % der theoretischen Ausbeute) als ein schweres gelbes Öl.
¹H-NMR (400 MHz, CDCl₃): δ = 7,5 - 7,3 (m,6H), 7,28 (br s,6H), 7,14 (pseudo-d t, 7,3 Hz/1,0 Hz, 1H), 7,08 (t, J = 7,3 Hz, 1H), 6,5 (br m, 1H), 4,24 (br s, 1H), 1,4 - 1,25 (m, 6H), 1,25 - 1,15 (m,6H), 0,82 (t, J = 7,2 Hz, 9H), 0,53 (t, J = 8 Hz, 6H), ³¹P-NMR (161,9 MHz, CDCl₃): δ = -20,6.

### Beispiel 8 (Diphenylphosphino-indenyl-zirkoniumtrichlorid, Verbindung 9)

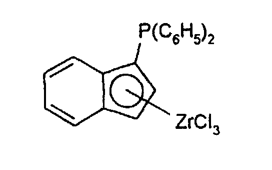

Eine Lösung von 37 g (0,0628 mol) der Verbindung 8 in 300 ml Toluol wurde während 3 Stunden zu einer Aufschlämmung von 14,6 g ZrCl₄ (99,9 %ig, 0,0628 mol, bezogen von Fa. Aldrich) in 100 ml Toluol bei Raumtemperatur gegeben. Die Lösung wurde sofort rot und ging langsam in orange und schließlich in gelb über. Nach 4-stündigem Nachrühren wurde der gelbe Niederschlag abfiltriert und mit Toluol und dann mit Hexan gewaschen. Der Feststoff wurde im Vakuum getrocknet und ergab 15,3 g (50 % der theoretischen Ausbeute) der Verbindung 9 als ein frei fließendes gelbes Pulver. Die Ausbeute ließ sich ohne weiteres auf über 70 % steigern, wenn man bei tieferer Temperatur arbeitete, z.B. 30 min bei -30°C und 5 Stunden bei 0°C. Das Produkt konnte weiter gereinigt werden, indem man restliche Zinnverbindung unter Benutzung von Pentan in einem Soxhlet-Extraktor auswusch (Extraktionszeit: 8 Stunden).

### Beispiel 9 ((C₆H₅)₂P BCl₂-verbrücktes Indenyl-cyclopentadienyl-zirkoniumdichlorid, Verbindung 10)

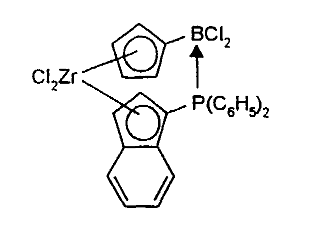

In ein Schlenk-Rohr wurden 4,43 g (0,0089 mol) der gereinigten Verbindung 9 und 100 ml Toluol gegeben. Zu dieser Aufschlämmung wurden 1,95 g (0,0089 mol) der Verbindung 2 gegeben. Die gelbe Aufschlämmung wurde während 6 Stunden bei Raumtemperatur gerührt; während dieser Zeit bildete sich ein blaßweißer Niederschlag. Dieser Niederschlag (4,1 g, 75 % der theoretischen Ausbeute) wurde durch Filtration gewonnen und als im wesentlichen reines Material befunden.
¹H-NMR (500 MHz, CD₂Cl₂); δ = 7,86 (pseudo ddd, J = 8,5/2,5/1 Hz, 1H), 7,75 - 7,55 (m,10H), 7,35 (pseudo ddd, J = 8,5/6,9/0,9 Hz, 1H), 7,32 (br t, J = 3,1 Hz, 1H), 7,22 (pseudo ddd, J = 8,8/6,8/1,1 Hz, 1H), 7,06 (pseudo ddd, J = 3,4/3,4/0,8 Hz, 1H), 6,92 (m,1H), 6,72 (m, 1H), 6,70 (br m, 1H), 6,61 (pseudo q, J = 2,3 Hz, 1H), 6,53 (br d, 8,7 Hz, 1H); ³¹P-NMR (161,9 MHz, CD₂Cl₂): = 6,2 (br, m); ¹¹B (64,2 MHz, CD₂Cl₂): δ = -18 (br).

### Beispiel 10 ((C₆H₅)₂P B(CH₃)₂-verbrücktes Indenyl-cyclopentadienyl-zirkoniumdichlorid, Verbindung 11)

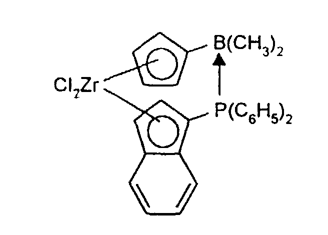

Zu 1,5 g (0,00247 mol) Verbindung 10 aus Beispiel 9 wurden 50 ml Toluol gegeben. Die Aufschlämmung wurde auf 0°C gekühlt, und 1,2 ml einer 2-molaren Lösung von Trimethylaluminium in Hexan (0,0024 mol) wurden während 5 Minuten dazu getropft. Nach vollständiger Zugabe wurde das Kühlbad entfernt, und die Lösung konnte sich auf Raumtemperatur erwärmen, während für 2 Stunden weiter gerührt wurde. Der restliche Niederschlag wurde abfiltriert und das Lösungsmittel vom Filtrat im Vakuum abgezogen, wobei 0,37 g (26 % der theoretischen Ausbeute) der Verbindung 11 als ein bräunlicher Feststoff zurückblieben.
³¹P-NMR (161,9 MHz, CD₂Cl₂): δ = 14,6; ¹¹B-NMR (64,2 MHz, CD₂Cl₂): = -28

### Beispiel 11 (Trimethylsilyl-inden, Verbindung 12)

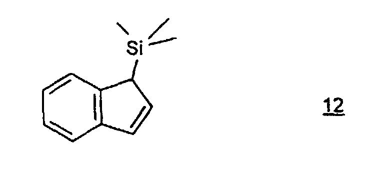

In einen Rundkolben, der 100 ml THF enthielt und auf 0°C gekühlt war, wurden 25 ml Inden (0,213 mol, über CaH₂ im Vakuum destilliert) gegeben. 94 ml einer 2,3-molaren Lösung von Butyl-lithium in Hexan (0,216 mol) wurden während 20 min zugegeben. Nach vollständiger Zugabe wurde 20 min lang gerührt, dann auf Raumtemperatur erwärmt und weitere 30 min gerührt. Nach Abkühlung auf -20°C wurden 27,5 ml (0,216 mol) Trimethylchlorsilan zugetropft, wobei eine leicht trübe orangefarbene Lösung entstand. Nach 1 h Rühren bei -10°C und 1,5 h bei 0°C wurde auf Raumtemperatur erwärmt und das Lösungsmittel im Vakuum entfernt. Nach erneuter Auflösung in Hexan wurde LiCl abfiltriert und das Hexan im Vakuum entfernt. Destillation des Produktes (0,045 mbar, 58 bis 60°C) ergab 26,6 g (66 % der theoretischen Ausbeute) 12.
¹H-NMR (400 MHz, CDCl₃); δ = 7,49 (t, J = 7,6 Hz, 1 H), 7,28 (ddd, J = 7,3/7,2/1 Hz, 1 H), 7,21 (ddd, J = 7,3/7,3/1,1 Hz, 1 H), 6,96 (dd, J = 5,6/1,2 Hz, 1 H), 6,69 (dd, J = 5,3/1,8 Hz, 1 H), 3,56 (s, 1 H), 0,0 (s, 9 H).

### Beispiel 12 (Bis-(trimethylsilyl)-inden, Verbindung 13)

25,4 g (0,135 mol) der Verbindung 12 wurden in einen Rundkolben gegeben, der 100 ml THF enthielt und auf 0°C gekühlt war. 59 ml einer 2,3-molaren Lösung von Butyl-lithium in Hexan (0,136 mol) wurden während 20 min zugegeben. Nach vollständiger Zugabe wurde 20 min gerührt und dann auf Raumtemperatur erwärmt. Nach 30 min Rühren wurde auf -20°C gekühlt, und es wurden 17,3 ml Trimethylchlorsilan (0,136 mol) zugetropft, wobei eine leicht trübe orangefarbene Lösung entstand. Es wurde 1 h bei 0°C und 1 h bei Raumtemperatur gerührt und dann das Lösungsmittel im Vakuum entfernt. Nach Wiederauflösung in Hexan wurde LiCl abfiltriert und das Hexan im Vakuum entfernt. Man erhielt 32 g (90 % der theoretischen Ausbeute) von 13 als Öl. Vergl. J. Organometal. Chem. 23 (1970), 407; dort Hexan statt THF.
¹H-NMR (400 MHz, CDCl₃): 6 = 7,62 (d, J = 7,6 Hz, 1 H), 7,52 (d, J = 7,5 Hz, 1 H), 7,23 (ddd, J = 7,35/7,3/0,9 Hz, 1 H), 6,9 (d, J = 1,7 Hz, 1 H), 3,67 (d, J = 1,6 Hz, 1 H), 0,38 (s, 9 H), 0,0 (s, 9 H).

### Beispiel 13 (Trimethylsilyl-dichlorboranyl-inden, Verbindung 14)

In ähnlicher Weise wie zur Herstellung von Verbindung 2 wurden 12,3 g (0,047 mol) Verbindung 13 in einen Rundkolben gegeben, der auf -30°C gekühlt war und einen mit Trockeneis gekühlten Rückflußkühler hatte. Hierzu wurden 5,6 g (0,046 mol) BCl₃ gegeben. Nach vollständiger Zugabe wurde das Kühlbad entfernt, und das Reaktionsgemisch erwärmte sich auf Raumtemperatur und wurde 3 h gerührt. Die Temperatur wurde dann 6 h lang auf 55°C angehoben. Nach Abkühlung und Entfernung der flüchtigen Anteile im Vakuum wurde das Rohprodukt erhalten. Destillation unter Hochvakuum lieferte das gereinigte Produkt, dessen Hauptisomer wie folgt identifiziert wurde:
¹H-NMR (200 MHz, CDCl₃): δ = 8,3 (d, J = 7 Hz, 1 H), 8,1 (d, J = 1,8 Hz, 1H), 7,5 (dd, J = 7,0/1,2 Hz, 1 H), 7,4 (m, 3 H), 4,0 (d, J = 1,8 Hz, 1 H), 0,1 (s, 9 H); ¹¹B (64,2 MHz, CD₂Cl₂): δ = 38 (br).

### Beispiel 14 ((C₆H₅)₂P-BCl₂-verbrücktes Bis-(indenyl)-zirkoniumdichlorid, Verbindung 15)

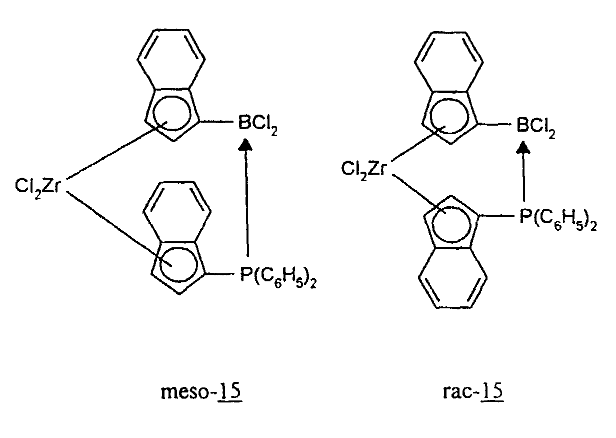

Zu einer Aufschlämmung von 8,3 g von Verbindung 9 (0,017 mol) in 200 ml Toluol wurden 4,5 g der Verbindung 14 (0,017 mol) gegeben; das Gemisch wurde auf 50°C erwärmt und 5 h gerührt. Nach Abkühlen und Filtration wurden 200 ml Hexan zugegeben, worauf aus der klaren gelben Lösung ein Niederschlag ausfiel, der filtriert und im Vakuum getrocknet wurde. Das Produkt wurde als meso-Isomer von 15 gemäß seiner Röntgenanalyse identifiziert. Die P→B-Bindungslänge der Brücke wurde zu 2,01 Å bestimmt. Durch Konzentration der Toluol/Hexan-Lösung auf etwa 10 ml und weitere Zugabe von 200 ml Hexan erhielt man einen zweiten Niederschlag, der als das racemische Isomer von 15 bestimmt wurde.

### Beispiel 15 (N,N-Dimethyl-O-(methylsulfonyl)-hydroxylamin, Verbindung 16)

(CH₃)₂NOSO₂CH₃ 16

9,0 g N,N-Dimethyl-O-hydroxylamin-hydrochlorid (0,092 mol) wurden in 70 ml CH₂Cl₂ suspendiert, das 20 g Triethylamin (0,2 mol) enthielt, und auf -10°C gekühlt. 9,5 g Methylsulfonylchlorid (0,083 mol), gelöst in 70 ml CH₂Cl₂, wurden langsam zur gekühlten Suspension getropft. Nach vollständiger Zugabe wurde 1 h nachgerührt. Danach wurde Eiswasser zum Reaktionsgemisch gegeben und die organische Phase abgetrennt. Das übriggebliebene Wasser wurde mit Ether gewaschen. Waschether und die CH₂Cl₂-Fraktion wurden vereinigt, über Na₂SO₄ getrocknet, und die Lösungsmittel wurden im Vakuum bei -10°C entfernt. Es hinterblieben 5,9 g (46 % der theoretischen Ausbeute) an Verbindung 16 als Öl, das bei -20°C aufbewahrt wurde. Vgl. Angew. Chem., Int. Ed. Engl. 17 (1978), 687.
¹H-NMR (400 MHz, CDCl₃): δ = 3,03 (s, 3H), 2,84 (s, 6H).

### Beispiel 16 (N,N-Dimethylamino-cyclopentadienyl-lithium, Verbindung 17)

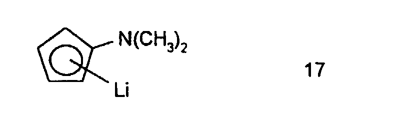

Eine Lösung von 3 g Cyclopentadienyl-lithium (0,042 mol) in 30 ml THF wurde bei-30°C langsam zu einer Lösung von 5,9 g der Verbindung 16 (0,042 mol) in 20 ml THF gegeben. Das Gemisch wurde dann auf -20°C erwärmt und 30 min gerührt. Dann wurde Hexan zugegeben und die Lösung filtriert. Danach wurden 1,8 ml einer 2,3-molaren Lösung von Butyl-lithium (0,042 mol) in Hexan bei -20°C zugesetzt, wodurch ein Niederschlag entstand. Der Niederschlag wurde abfiltriert und 2 mal mit je 20 ml Hexan gewaschen. Nach Trocknung im Vakuum erhielt man 2,0 g (40 % der theoretischen Ausbeute) der Verbindung 17 als weißes Pulver. Vgl. Angew. Chem., Int. Ed. Engl. 19 (1980), 1010.
¹H-NMR (400 MHz, THF): δ = 5,34 (br d, J = 2,2 Hz, 2H), 5,15 (br d, J = 2,2 Hz, 2H), 2,56 (s, 6H).

### Beispiel 17 ((CH₃)₂N-B(CH₃)₂-verbrücktes Bis-(cyclopentadienyl)-titaiodichlorid, Verbindung 18)

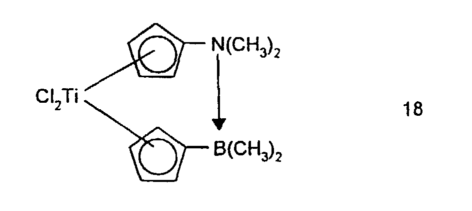

Eine Lösung von 0,18 g der Verbindung 4 (0,7 mmol) in 10 ml Toluol wurde bei-20°C während 10 min zu einer Suspension von 0,081 g der Verbindung 17 (0,7 mmol) in 10 ml Toluol gegeben, wobei eine tiefrote Lösung entstand. Nach Anwärmen auf Raumtemperatur während 2 h wurde die Lösung filtriert und das Lösungsmittel im Vakuum entfernt. Nach Wiederauflösung des entstandenen roten Pulvers in 10 ml warmen Toluol und Abfiltrieren von unlöslichem Material wurde die Lösung über Nacht im Kühlschrank aufbewahrt, wobei sich 0,1 g (43 % der theoretischen Ausbeute) als rote Nadeln bildeten.
¹H-NMR (400 MHz, CD₂Cl₂): δ = 6,85 (t, J = 2,3 Hz, 2H), 6,15 (t, J = 2,3 Hz, 2H), 6,1 (t, J = 2,8 Hz, 2H), 5,57 (t, J = 2,8 Hz, 2H), 1,98 (s, 6H), 0,35 (s, 6H); ¹¹B-NMR (64,2 MHz, CD₂Cl₂): δ = 2,8 (br).

### Beispiel 18 (Tributylstannyl-diisopropylphosphine-inden, Verbindung 19)

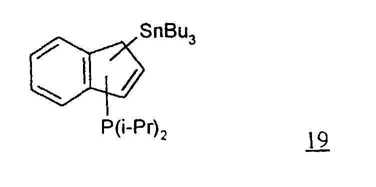

In einen Rundkolben, der 3,8 g (0,033 mol) Inden enthielt, wurden 100 ml Ether gegeben, es wurde auf -20°C gekühlt. Zu dieser Lösung wurden 14,4 ml einer 2,3 molaren Lösung von Butyl-lithium in Hexan (0,033 mol) innerhalb 5 Minuten gegeben, wobei eine gelbe Lösung entstand. Nach Entfernung des Kältebades wurde die Lösung auf Raumtemperatur erwärmt und 1,5 h nachgerührt. Danach wurde das Reaktionsgemisch auf 0°C abgekühlt und 5,0 g Chlordiisopropylphosphin (0,033 mol) zugegeben, wodurch ein Niederschlag entstand. Nach Entfernung des Kältebades wurde die Lösung auf Raumtemperatur erwärmt und 1 h gerührt. Danach wurde die Lösung auf -20°C gekühlt und 14,4 ml einer 2,3 molaren Lösung von Butyl-lithium in Hexan (0,033 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 10,1 g Chlortributylzinn (0,031 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. getrocknet, wobei 16.6 g der Verbindung 19 (Ausbeute: 97 %) als schweres gelbes Öl übrigblieben. Zwei Isomere wurden in einem Verhältnis von 1,5:1 erhalten. Das Hauptisomer wurde wie folgt identifiziert: ¹H NMR (400 MHz, CD₂Cl₂) δ 7,71 (d, J = 7,2 Hz, 1 H), 7,41 (d, J= 7,3 Hz, 1 H), 7,13 (m, 2 H), 6,96 (m, 1 H), 4,28 (s mit Sn Satelliten, 1 H), 2,21 (m, 1 H), 1,54 (m, 1 H), 1,45 - 0.65 (m, 39 H). ³¹P NMR (161,9 MHz, CD₂Cl₂) δ - 11,3 ppm. Das Nebenisomer wurde wie folgt identifiziert: ¹H NMR (400 MHz, CD₂Cl₂) δ 7,6 (d, J = 7,4 Hz, 1 H), 7,46 (d, J = 7,2 Hz, 1 H), 7, 26 (t, J = 7,5 Hz, 1H), 7,1 (m, 1 H), 6,71 (m, 1 H), 3,48 (m, 1 H), 2,21 (m, 1 H), 1,54 (m, 1 H), 1,45 - 0,65 (m, 39 H). ³¹P NMR (161,9 MHz, CD₂Cl₂) d -11,5 ppm.

### Beispiel 19 (Diisopropylphosphino-indenyl-zirkoniumtrichlorid, Verbindung 20)

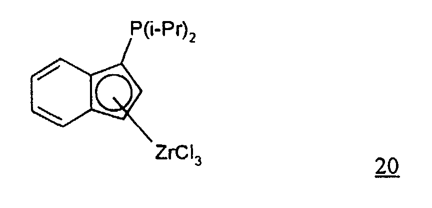

Eine Lösung von 15,0 g der Verbindung 19 (0,029 mol) in 50 ml Toluol wurde zu einer Aufschlämmung von 6,7 g (0,029 mol) 99,9 %igem ZrCl₄ in 300 ml Toluol bei - 78°C gegeben. Nach vollständiger Zugabe wurde das Reaktionsgemisch 0,5 h bei-30°C und anschließend 4 h bei 0°C gerührt. Der entstehende gelbe Niederschlag wurde abfiltriert und mit Toluol und Hexan gewaschen. Die Feststoffe wurden i. Vak. getrocknet, wobei 8,8 g der Verbindung 20 (Ausbeute: 71 %) als freifließendes gelbes Pulver übrigblieben. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt. Wegen der Unlöslichkeit der entstehenden Verbindung wurde kein ¹H NMR erhalten.

### Beispiel 20 (Diisopropylphosphino-dichlorboranyl-verbrücktes Indenyl-cyclopentadienyl-zirkonium-dichlorid, Verbindung 21)

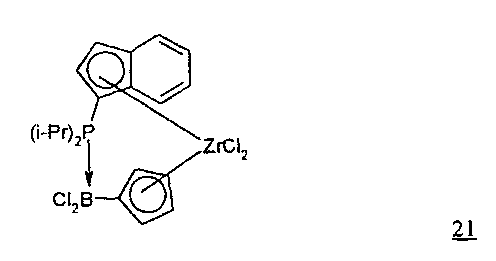

In ein Schlenk-Rohr wurden 0,52 g (0,0012 mol) der Verbindung 20 und 30 ml Toluol gegeben. 0,27 g (0,0012) mol der Verbindung 2 wurden innerhalb 5 Minuten zu dieser Aufschlämmung gegeben. Die gelbe Aufschlämmung wurde 3 h bei Raumtemperatur gerührt, wobei eine leicht trübe Lösung übrigblieb. Der Niederschlag wurde durch Filtration entfernt, wobei eine hellgelbe Toluollösung übrigblieb. Nach Entfernung des Toluols i. Vak. blieb das Produkt als weißlicher Feststoff in einer Menge von 0,47 g (Ausbeute: 87 %) übrig. ¹H NMR (400 MHz, CD₂Cl₂) δ 7,84 (pseudo dd, J = 8,5, 0,8 Hz, 1 H), 7,73 (d, J = 8,8 Hz, 1 H), 7,5 (pseudo dt, J = 7,8, 0,8 Hz, 1 H), 7,38 (m, 2 H), 6,98 (m, 1 H), 6,67 (m, 1 H), 6,64 (m, 1 H), 6,54 (m, 1 H), 6,29 (m, 1 H), 3,39 (Septett, J = 7,1 Hz, 1 H), 2,94 (m, 1 H), 1,68 (dd, J_{H-P} = 18,1 Hz, J = 7,2 Hz, 3 H), 1,64 (dd, J_{H-P} = 17,4, J = 7,2 Hz, 3 H), 1,45 (dd, J_{H-P} = 15 Hz, J = 7,2 Hz, 3 H), 1,33 (dd, J_{H-P} = 14,6 Hz, J = 7,3 Hz, 3 H). ³¹P NMR (161,9 MHz, CD₂Cl₂) δ 23,1 (br, m); ¹¹B (80 MHz, CD₂Cl₂) δ - 14,8 (br d, J = 110 Hz).

### Beispiel 21 (Tributylstannyl-dimethylphosphino-inden, Verbindung 22)

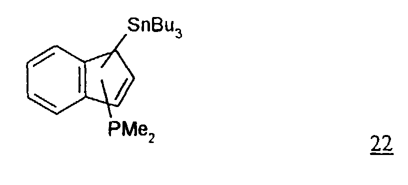

In einen Rundkolben, der 5,5 g (0,047 mol) Inden enthielt, wurden 150 ml Ether gegeben; es wurde auf -20°C abgekühlt. Zu dieser Lösung wurden 20,8 ml einer 2,3 molaren Lösung von Butyl-lithium in Hexan (0,048 mol) innerhalb 5 min gegeben, wobei eine gelbe Lösung entstand. Nach Entfernung des Kältebades wurde die Lösung auf Raumtemperatur erwärmt und 1 h nachgerührt. Nach Abkühlung des Reaktionsgemisches auf - 30°C wurden 4,6 g Chlordimethylphosphin (0,048 mol) in 30 ml Ether innerhalb 20 min zugegeben, wobei ein Niederschlag entstand. Nach 2-stündigem Rühren bei - 20°C wurden 20,8 ml einer 2,3 molaren Lösung von Butyl-lithium in Hexan (0,048 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 15,6g Chlortributylzinn (0,048 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. getrocknet, wobei 17,4 g der Verbindung 22 (Ausbeute: 78 %) als schweres gelbes Öl übrigblieben. ¹H NMR (400 MHz, CD₂Cl₂) δ 7,67 (d, J = 7,5 Hz, 1 H), 7,47 (d, J = 7,4 Hz, 1 H), 7,18 (m, 2 H), 6,83 (m, 1 H), 4,28 (s mit Sn-Satelliten, 1 H), 1,43 - 0,78 (m, 33 H). ³¹P NMR (161,9 MHz, CD₂Cl₂) δ - 61,6 ppm.

### Beispiel 22 (Dimethylphosphino-indenyl-zirconiumtrichlorid, Verbindung 23)

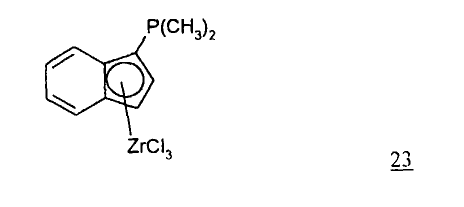

Zu einer Aufschlämmung von 8,5 g (0,036 mol) 99,9 %igem ZrCl₄ in 200 ml Toluol wurde eine Lösung von 17,0 g der Verbindung 22 (0,037 mol) in 50 ml Toluol bei-78°C gegeben. Nach vollständiger Zugabe wurde das Reaktionsgemisch 0,5 h bei-30°C und danach 4 h bei 0°C gerührt. Der entstehende gelbe Niederschlag wurde abfiltriert und mit Toluol und Hexan gewaschen. Die Feststoffe wurden in Vak. getrocknet, wobei 8,3 g der Verbindung 23 (Ausbeute: 61 %) als freifließendes gelbes Pulver übrigblieb. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt, wobei 7,2 g (Ausbeute: 53 %) des Produktes übrigblieben. Wegen der Unlöslichkeit dieser Verbindung wurde kein ¹H NMR erhalten.

### Beispiel 23 (Dimethylphosphino-dichlorboranyl-verbrücktes Indenyl-cyclopentadienyl-zirconiumdichlorid, Verbindung 24)

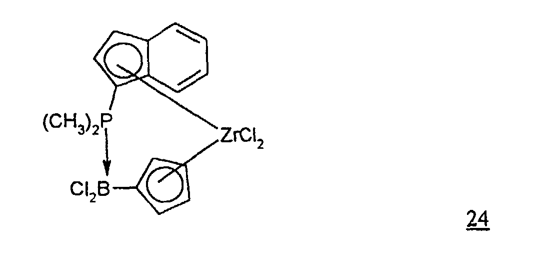

In ein Schlenk-Rohr wurden 30 ml Toluol und 0,55 g der Verbindung 23 (0,0015 mol) gegeben. Zu dieser Aufschlämmung wurden 0,31 g (0,0014 mol) der Verbindung 2 innerhalb 5 min gegeben. Die gelbe Aufschlämmung wurde 6,5 h bei Raumtemperatur gerührt, wobei eine leicht trübe Lösung verblieb. Der Niederschlag wurde durch Filtration entfernt, wobei eine hellgelbe Toluollösung übrigblieb. Nach Entfernung des Toluols i. Vak. verblieb das Produkt als weißlicher Feststoff. Nachdem das Produkt mit Hexan gewaschen und i. Vak. getrocknet wurde, blieb die Verbindung 24 als blaßweißer Feststoff (0,54 g; Ausbeute: 76%) übrig. ¹H NMR (400 MHz, CD₂Cl₂) δ 7,84 (pseudo dd, J = 7,4 Hz 1,0 Hz, 1 H), 7,60 (m, 2 H), 7,51 (m, 1 H), 7,38 (m, 1 H), 6,93 (m, 1 H), 6,71 (m, 1 H), 6,66 (m, 1 H), 6,49 (m, 1 H), 6,30 (br s, 1 H), 2,11 (d J_{H-P} = 11,9 Hz, 3 H), 1,94 (d, J_{H-P} = 11,9 Hz, 3 H). ³¹P NMR (161, 9 MHz, CD₂Cl₂) - 5,9 (br, m); ¹¹B (80 MHz, CD₂Cl₂) δ - 14,6 (br d, J_{B-P} = 126 Hz).

### Beispiel 24 (2-Methylinden, Verbindung 26)

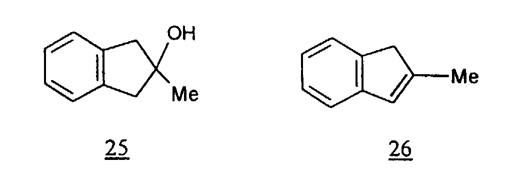

In einen Rundkolben wurden 38,7 g (0,29 mol) 2-Indanon und 300 ml Ether gegeben. In einen zweiten Kolben wurden 96,7 ml einer 3,0 molaren Lösung von CH₃MgI in Ether (0,29 mol), die mit 150 ml Ether verdünnt war, gegeben. Danach wurde die 2-Indanon-Lösung zu der CH₃MgI-Lösung über eine Kanüle in einer solchen Menge gegeben, daß der Rückfluß aufrechterhalten wurde, wobei ein Niederschlag entstand. Nach vollständiger Zugabe wurde die Aufschlämmung weitere 4 h unter Rückfluß geführt und auf 0°C abgekühlt, wonach 100 ml einer gesättigten Lösung von NH₄Cl langsam zugegeben wurden. Das Produkt wurde mit Ether extrahiert und über MgSO₄ getrocknet. Nach Entfernung des Lösungsmittels i. Vak. wurden 30,1 g (Ausbeute: 70 %) 2-Methyl-2-indanol (Verbindung 25) als öliger Feststoff erhalten. ¹H NMR (400 MHz, CDCl₃) δ 7,15 (br m, 4 H), 3,01 (s, 2 H), 2,99 (s, 2 H), 1,5 (s, 3 H); OH variabel.

In einen Rundkolben mit einem Dean-Stark-Auffanggefäß wurden 25,5 g (0,17 mol) der Verbindung 25, 3,2 g (0,017 mol) *p*-Toluolsulfonsäure und 500 ml Hexan gegeben. Diese Aufschlämmung wurde 3 h unter Rückfluß gehalten. Nach Abkühlung wurde die Hexanfraktion von den unlöslichen Produkten dekantiert und das Lösungsmittel i. Vak. entfernt, wobei ein Öl übrigblieb, das anschließend in einer kurzen Destillationskolonne bei 45°C und 0,03 mbar destilliert wurde, wodurch 15 g (Ausbeute: 68 %) der Verbindung 26 erhalten wurden. ¹H NMR (400 MHz, CDCl₃) δ 7,33 (d, J = 7,6 Hz, 1 H), 7,21 (m, 2 H), 7,06 (pseudo d t, J = 7,2, 1,4 Hz, 1 H), 6,45 (br s, 1 H), 3,25 (s, 2 H), 2,12 (s, 3 H).

Es wird verwiesen auf:
1. Morrison, H.; Giacherio, D.*J*. *Org. Chem.* **1982,** *47*, 1058.
2. Ready, T. E.; Chien, J. C. W.; Rausch, M. D.*J. Organom. Chem. 519,* **1996**, 21.
3. Wilt, Pawlikowki, Wieczorek *J. Org. Chem.* 37, **1972**, 824.

### Beispiel 25 (Tributylstannyl-diisopropylphosphino-2-methylinden, Verbindung 27)

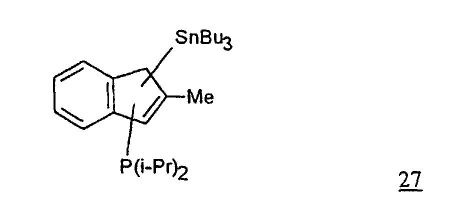

In einen Rundkolben, der 5,08 g (0,039 mol) 2-Methylinden 26 enthielt, wurden 150 ml Ether gegeben; es wurde auf -20°C abgekühlt. Zu dieser Lösung wurden 17,0 ml einer 2,3-molaren Lösung von Butyl-lithium in Hexan (0,039 mol) innerhalb 5 min gegeben, wobei eine gelbe Lösung entstand. Nach Entfernung des Kältebades wurde die Lösung auf Raumtemperatur erwärmt und 1 h nachgerührt. Danach wurde das Reaktionsgemisch auf - 20°C gekühlt, und es wurden 5,8 g (0,039 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf - 20°C wurden 17,0 ml einer 2,3 molaren Lösung von Butyl-lithium in Hexan (0,039 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C, wurden 12,4 g (0,038 mol) Chorotributylzinn zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i. Vak. getrocknet, wobei 20.4 g (Ausbeute: 98 %) der Verbindung 27 als schweres gelbes Öl übrigblieben Zwei Isomere wurden durch ³¹P NMR identifiziert. ³¹P NMR (161,9 MHz, CD₂Cl₂) δ -5,9 und -6,6 in einem Verhältnis von 2:1.

### Beispiel 26 (Diisopropylphosphino-2-methylindenyl-zirkonium-trichlorid, Verbindung 28)

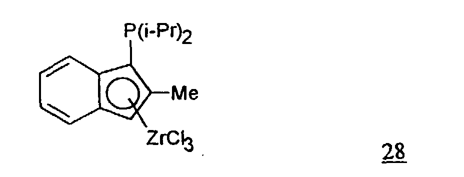

Eine Lösung von 17.7 g (0,033 mol) der Verbindung 27 in 100 ml Methylenchlorid wurde zu einer Aufschlämmung von 7,7 g (0,033 mol) 99,9 %igem ZrCl₄ in 200 ml Methylenchlorid innerhalb 10 min bei - 25°C gegeben. Nach vollständiger Zugabe wurde das Reaktionsgemisch langsam auf 10°C über einen Zeitraum von 3 h erwärmt, wonach eine klare, orangefarbene Lösung entstand. Nach 1 h bei Raumtemperatur wurde das Lösungsmittel Vak. entfernt und das enstehende Öl mit 2 x 50 ml Hexan gewaschen, wodurch ein öliges Rohprodukt (28) erhalten wurde, das direkt zur Herstellung der Verbindung 29 verwendet wurde. Wegen der Unlöslichkeit dieser Verbindung wurde kein ¹H NMR erhalten.

### Beispiel 27 (Diisopropylphosphino-dichlorboranyl-verbrücktes 2-Methylindenylcyclopentadienyl-zirkonium-dichlorid, Verbindung 29)

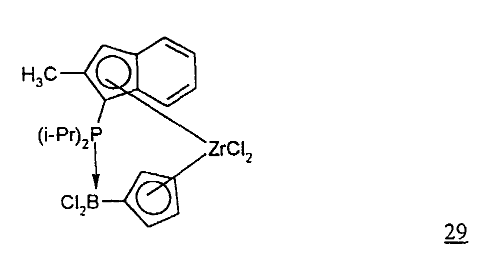

In einen Rundkolben, der 0,025 mol der unreinen Verbindung 28 in 200 ml Toluol bei 0°C enthielt, wurden 5,5 g (0,025 mol) der Verbindung 2 über einen Zeitraum von 5 min gegeben. Nach 1 h bei 0°C wurde das Rühren beendet und die lösliche Toluolfraktion vom entstandenem Öl dekantiert. Nach Entfernung des Toluols i. Vak wurden 100 ml Hexan zu dem öligen Feststoff gegeben, wobei 7,4 g (Ausbeute: 54%) eines gelben Pulvers mit einer Reinheit von ca. 90 % entstanden. Das Produkt wurde in einem Soxhlet-Extraktionsgerät mit unter Rückfluß geführtem Pentan weitergereinigt. Das Endprodukt bestand aus einem hellgelben Pulver. ¹H NMR (400 MHz, CD₂Cl₂) δ 8,67 (br d, J = 7,6 Hz, 1 H), 7,71 (m, 1 H), 7,35 (m, 2 H), 6,62 (br s, 1 H), 6,54 (br s, 1 H), 6,47 (m, 1 H), 6,33 (m, 1 H), 6,06 (br s, 1 H), 3,3 (br m, 1 H), 3,2 (br m, 1 H), 2,6 (s, 3 H), 1,78 (dd, J = 7,1 Hz, J_{H-P} = 15,3 Hz, 3 H), 1,70 (dd, J = 7,2 Hz, J_{H-P} = 15,7 Hz, 3 H). 1,57 (dd, J = 7,1 Hz, J_{H-P} = 15,3 Hz, 3H), 1,12 (dd, J = 7,1 Hz, J_{H-P} = 14,0 Hz, 3H). ³¹P NMR (161,9 MHz, CD₂Cl₂) 28,4 (br m); ¹¹B (80 MHz, CD₂Cl₂) δ - 14,3 (br d, J_{P-B} = 106 Hz).

### Beispiel 28 (Bis(trimethylsilyl)-(diphenylphosphino)-cyclopentadien, Verbindung 30)

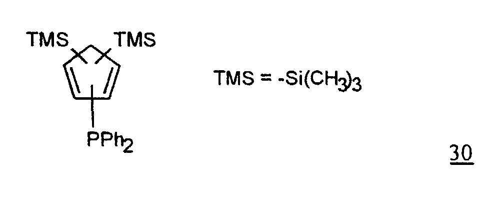

76,6 ml einer 2,5-molaren Lösung von Butyl-lithium in Hexan (0,19 mol) wurden zu einer Lösung der Verbindung 1 (40,2 g; 0,19 mol) in 500 ml Ether innerhalb 10 min bei 0°C gegeben. Nach vollständiger Zugabe wurde das Bad entfernt und die Lösung 1 h bei Raumtemperatur gerührt. Nach Abkühlung auf 0°C, wurden 42,2 g (0,19 mol) Chlordiphenylphosphin innerhalb 10 min zugegeben, wonach das Bad entfernt und die Aufschlämmung auf Raumtemperatur erwärmt wurde. Nach 1-stündigem Rühren bei Raumtemperatur wurde der Ether i. Vak, entfernt und das Produkt in Hexan erneut aufgelöst. Nach Abfiltrieren der Salze wurde das Hexan i. Vak. entfernt, wobei 69,1 g (Ausbeute: 91 %) der Verbindung 30 als Öl übrigblieben. ¹H NMR (400 MHz, CDCl₃) δ 7,45 (m, 4H), 7,35 (m, 6 H), 6,8 (m, 1 H), 6,65 (m, 1 H), 6,6 (m, 1 H), 0 (s, 18 H). ³¹P NMR (161,9 MHz, CDCI₃) : δ - 19,5 ppm.

### Beispiel 29 (Trimethylsilyl-diphenylphosphino-cyclopentadienyl-zirkoniumtrichlorid, Verbindung 31)

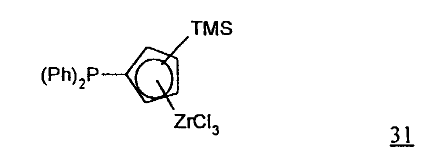

Eine Lösung der Verbindung 30 (69,1 g, 0,175 mol) in 200 ml Methylenchlorid wurde über eine Kanüle zu einer Suspension von 41,5 g (0,178 mol) 99,9 %igem ZrCl₄ in 200 ml Methylenchlorid gegeben und 8 h bei Raumtemperatur gerührt. Während dieser Zeit trübte sich die Lösung. Die Feststoffe wurden abfiltriert, mit 2 x 20 ml Toluol und anschließend 2 x 20 ml Hexan gewaschen und i. Vak. getrocknet. Das Produkt bestand aus 35 g (Ausbeute: 39 %) eines hellgelben Pulvers. Wegen der Unlöslichkeit des Produktes wurde kein ¹H NMR erhalten.

### Beispiel 30 (Diphenylphosphino-dichlorboranyl-verbrücktes Trimethylsilylcyclopentadienyl-cyclopentadienyl-zirkonium-dichlorid, Verbindung 32)

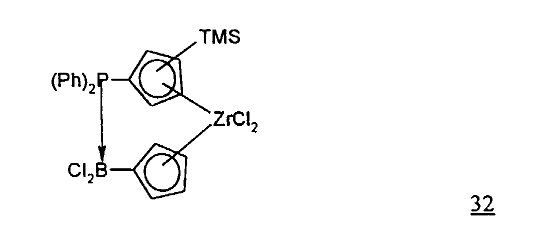

Eine Lösung der Verbindung 2 (2,6 g, 0,012 mol) wurde bei 0°C zu einer Aufschlämmung der Verbindung 31 (5,6 g, 0,011 mol) in 100 ml Toluol gegeben. Nach 5-stündigem Rühren bei 0°C wurde der gelbbraune Feststoff durch Filtration entfernt, wobei eine weißliche Lösung übrigblieb. Nach Entfernung des Toluols i. Vak. und Waschen des übriggebliebenen Feststoffes mit Pentan, verblieb die Verbindung 32 als hochluftempfindliches weißliches Pulver (5,5 g; Ausbeute: 81 %). ¹H NMR (400 MHz, CD₂Cl₂) δ : 7,8 - 7,5 (m, 10 H), 7,06 (m, 1 H), 6,92 (m, 1 H), 6,83 (m, 1 H), 6,75 (m, 2 H), 6,68 (m, 1 H), 6,63 (m, 1 H), 0,26 (s, 9 H). ³¹P NMR (161,9 MHz, CD₂Cl₂) δ 0 (br, m); ¹¹B (80 MHz, CD₂Cl₂) δ - 16,3 (br d, J_{B-P} = 82 Hz).

### Beispiel 31 (Diisopropylphosphino-cyclopentadienyl-lithium, Verbindung 33)

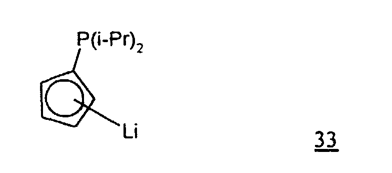

In einen Rundkolben, der 1,68 g (0,023 mol) Cyclopentadienyl-lithium enthielt, wurden 50 ml Ether gegeben. Nach Abkühlung des Reaktionskolbens auf - 20°C wurden 3,6 g (0,023 mol) Chlordiisopropylphosphin zugetropft. Nach vollständiger Zugabe wurde das Kältebad auf 0°C erwärmt und das Reaktionsgemisch 1 h gerührt. Danach wurde Ether i. Vak. entfernt und das Produkt in Toluol gelöst und abfiltriert. Nach Durchspülen der Fritte mit 2 x 10 ml Toluol wurde das Reaktionsgemisch auf - 20°C abgekühlt und 9,3 ml einer 2,5 molaren Lösung von Butyllithium in Hexan (0,023 mol) zugegeben, wobei eine orangefarbene Lösung entstand. Eine kleine Fraktion wurde für NMR-Untersuchungen entnommen und nach Abtrennung des Toluols i. Vak. und Waschen des entstehenden Öls mit Hexan ein hellgelber Feststoff (33) erhalten. ¹H NMR (400 MHz, THF) δ : 5,89 (m, 2 H), 5,83 (br s, 2 H), 1,86 (m, 2 H), 1,0 - 0,8 (m, 12 H). Die Hauptmenge wurde direkt zur Herstellung der Verbindung 34 verwendet.

### Beispiel 32 (Diisopropylphospliino-dimethylboranyl-verbrücktes Bis-cyclopentadienyl-titandichlorid, Verbindung 34)

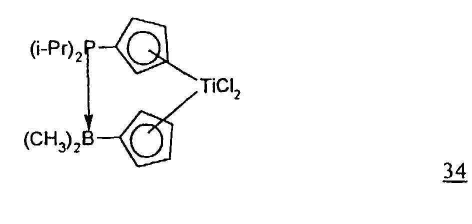

Eine Lösung von 6,1 g (0,023 mol) der Verbindung 4 in 50 ml Toluol wurde zu einer Toluollösung der Verbindung 33 (0,023 mol) aus der obengenannten Reaktion bei-78°C gegeben. Nach 30-minütigem Rühren bei - 78°C wurde das Kältebad entfernt und die Lösung 2 h bei Raumtemperatur nachgerührt. Danach wurden die Feststoffe durch Filtration und das Toluol i. Vak. entfernt. Anschließend wurde Hexan zu dem roten öligen Produkt gegeben, wobei ein rotes Pulver entstand, das abfiltriert, mit 2 x 20 ml Hexan gewaschen und i. Vak. getrocknet wurde, wodurch die Verbindung 34 als rotes Pulver (5,95 g, Ausbeute, bezogen auf CpLi: 61%) entstand. ¹H NMR (400 MHz, CD₂Cl₂) δ : 6,96 (m, 2 H), 6,94 (pseudo t, J = 2,4 Hz, 2 H), 6,59 (m, 2 H), 6,42 (m, 2 H), 2,58 (m, 2 H), 1,44 (dd, J = 7,3 Hz, J_{H-P} = 14,7 Hz, 6 H), 1,27 (dd, J = 7,2 Hz, J_{H-P} = 13,1 Hz, 6 H), 0,31 (d, J_{H-P} = 16,4 Hz, 6 H). ³¹P NMR (161,9 MHz, CD₂Cl₂) δ 28,7 (br m); ¹¹B (80 MHz, CD₂Cl₂) δ -29,7 (br m).

### Beispiel 33 (Dimethylphosphino-tributylstannyl-2-methylinden, Verbindung 35)

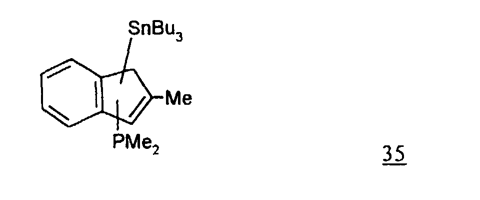

In einen Rundkolben, der 6,76 g (0,052 mol) 2-Methylinden (Verbindung 26) enthielt, wurden 100 ml Ether gegeben; es wurde und auf - 20°C gekühlt. Zu dieser Lösung wurden 21ml einer 2,5 molaren Lösung von Butyl-lithium in Hexan (0,052 mol) innerhalb 5 min gegeben, wobei eine gelbe Lösung entstand. Nach Entfernung des Kältebades wurde die Lösung auf Raumtemperatur erwärmt und 1 Stunde nachgerührt. Nach Abkühlung des Reaktionsgemisches auf- 20°C wurden 5,0 g (0,052 mol) Chlordimethylphosphin innerhalb 5 min zugegeben, wobei ein Niederschlag entstand. Anschließend wurde das Kältebad entfernt und das Reaktionsgemisch 1 h bei Raumtemperatur gerührt. Nach Abkühlung auf - 20°C wurden 21,0 ml einer 2,5 molaren Lösung von Butyl-lithium in Hexan (0,052 mol) zugetropft. Nach vollständiger Zugabe wurde das Kältebad entfernt, woraufhin die Lösung langsam auf Raumtemperatur erwärmt und 1,5 h gerührt wurde. Nach Abkühlung der Aufschlämmung auf 0°C wurden 16,9 g (0,052 mol) Chlortributylzinn zugetropft. Die entstehende Aufschlämmung wurde auf Raumtemperatur erwärmt und 1,5 h gerührt. Nach Entfernung des Ethers i. Vak. wurde das Rohprodukt erneut in Hexan aufgelöst, abfiltriert und das Filtrat i. Vak. getrocknet, wobei 24,3 g (Ausbeute: 98 %) der Verbindung 35 als schweres gelbes Öl übrigblieben. ³¹P NMR (161,9 MHz, CD₂Cl₂) δ - 68,5 (s).

### Beispiel 34 (Dimethylphosphino-2-methylindenyl-zirkoniumtrichlorid, Verbindung 36)

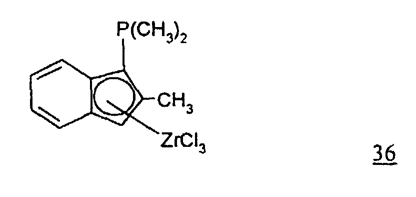

Eine Lösung von 17,4 g (0,036 mol) der Verbindung 35 in 100 ml Toluol wurde zu einer Aufschlämmung von 8,5 g (0,036 mol) 99,9 %igem ZrCl₄ in 100 ml Toluol innerhalb 10 min bei 0°C gegeben. Nach vollständiger Zugabe wurde das Reaktionsgemisch langsam auf 10°C über einen Zeitraum von 1 h erwärmt und danach 6 h bei Raumtemperatur gerührt. Anschließend wurde der gelbe Niederschlag abfiltriert, mit 2 x 20 ml Toluol und 2 x 20 ml Hexan gewaschen und i. Vak. getrocknet. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt, wobei 5,8 g (Ausbeute: 41 %) der Verbindung 36 als leuchtend gelbes Pulver übrigblieben. Wegen der Unlöslichkeit dieser Verbindung wurde kein ¹H NMR erhalten.

### Beispiel 35 (Dimethylphosphino-dichlorboranyl-verbrücktes 2-Methylindenylcyclopentadienyl-zirkonium-dichlorid, Verbindung 37)

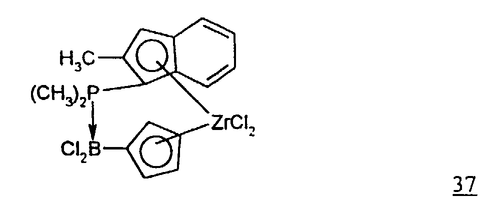

In einen Rundkolben, der 4,8 g (0,012 mol) der Verbindung 36 in 125 ml Toluol bei Raumtemperatur enthielt, wurden 2,7 g (0,012 mol) der Verbindung 2 innerhalb 5 min gegeben. Nach 7-stündigem Rühren wurde der dunkelgelbe Feststoff filtriert, mit 2 x 20 ml Hexan gewaschen und i. Vak. getrocknet, wobei 5,5 g (Ausbeute: 89%) der Verbindung 37 als hellgelber Feststoff erhalten wurden. ¹H NMR (400 MHz, CD₂Cl₂) δ 8,39 (d, J = 8,5 Hz, 1 H), 7,71 (m, 1 H), 7,4 (m, 2 H), 6,64 (m, 2 H), 6,46 (pseudo q, J = 5,3, 2,9 Hz, 1 H), 6,37 (m, 1 H), 6,08 (m, 1 H), 2,51 (s, 3 H), 2,1 (d, J_{H-P} = 12 Hz, 3 H), 2,0 (d, J_{H-P} = 12 Hz, 3 H); ³¹P NMR (161,9 MHz, CD₂Cl₂) 5,3 (br m); ¹¹B (80 MHz, CD₂Cl₂) δ -16,5 (br d, J_{B-P} = 116 Hz).

### Beispiel 36 (Dicyclohexylboranylcyclopentadienyl-lithium, Verbindung 39)

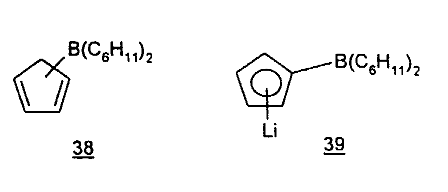

Verwiesen wird auf: Herberich, G. E.; Fischer, A. *Organometallics* **1996,** *15,* 58. 40 ml einer 1-molaren Lösung von Chlordicyclohexylboran in Hexan (0,04 mol) wurden zu 20 ml Cyclopentadienyl-Natrium (2 M in THF; 0,04 mol) in 100 ml Hexan bei - 78°C gegeben. Nach Entfernung des Kältebades wurde das Reaktionsgemisch auf Raumtemperatur erwärmt und 1 h gerührt. Nach Filtration und Entfernung des Lösungsmittels i. Vak. blieben 9, 1 g (Ausbeute: 94%) der Verbindung 38 als gelbes Öl übrig, das direkt bei der Synthese der Verbindung 39 verwendet wurde.

In einen Rundkolben, der 40 ml THF enthielt, wurden 5,3 g (0,038 mol) 2,2,6,6-Tetramethylpiperidin gegeben. Nach Abkühlung auf - 20°C und Zugabe von 15 ml einer 2,5 molaren Lösung von Butyl-lithium in Hexan (0,038 mol) wurde die Mischung 1 h bei - 20°C gerührt und danach auf - 78°C abgekühlt. Zu dieser Lösung wurden 9,1 g (0,038 mol) der Verbindung 38 in 20 ml Hexan innerhalb 10 Minuten gegeben. Das Kältebad wurde entfernt und die Lösung 1 h bei Raumtemperatur gerührt. Nach Entfernung des Lösungsmittels i. Vak. und Zugabe von Hexan wurde 2 h nachgerührt, wobei eine weiße Suspension entstand, die filtriert und i. Vak. getrocknet wurde. Es enstand 4,6 g (Ausbeute: 50%) der Verbindung 39 als weißes Pulver. ¹¹B (80 MHz, THF) δ 43,9.

### Beispiel 37 (Diphenylphosphino-dicyclohexylboranyl-verbrücktes Trimethylsilylcyclopentadienyl-cyclopentadienyl-zirkonium-dichlorid, Verbindung 40)

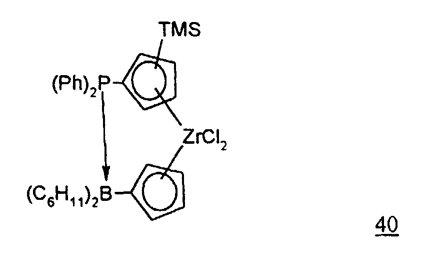

Nach Abkühlung eines Schlenk-Kolbens, der 1,4 g (0,0056 mol) der Verbindung 39 und 2,9 g (0,0056 mol) der Verbindung 31 enthielt, auf - 20°C wurden 100 ml Toluol zugegeben. Nach Entfernung des Bades wurde die Aufschlämmung 6 h bei Raumtemperatur gerührt und anschließend filtriert. Das Lösungsmittel wurde i. Vak. entfernt, wobei ein öliger Feststoff übrigblieb, der mit Hexan gewaschen und filtriert wurde. Nach Trocknung des Feststoffes i. Vak. verblieben 1,9 g (Ausbeute: 48%) der Verbindung 40 als rosafarbener Feststoff ¹H NMR (400 MHz, CD₂Cl₂) δ 7,6 - 7,2 (br m, 10 H), 7,04 (br s, 1 H), 6,95 (m, 1 H), 6,82 (m, 1 H), 6,76 (br s, 1 H), 6,66 (m, 1 H), 6,63 (m, 1 H), 6,52 (m, 1 H), 1,6 - 1,1 (br m, 22 H), 0,26 (s, 9 H); ³¹P NMR (161,9 MHz, CD₂Cl₂) δ 16,3; ¹¹B (80 MHz, CD₂Cl₂) δ -13,8.

### Beispiel 38 (4,7-Dimethylinden, Verbindung 41)

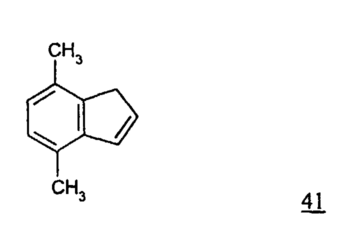

Verwiesen wird auf: Erker, G. et al. *Tetrahedron* **1995**, *51,* 4347.

Eine 30 %ige Lösung von 153 g (2,8 mol) Natriummethoxid in Methanol wurde mit 60 ml Methanol verdünnt und auf 0°C abgekühlt. Zu dieser Lösung wurden 34 g (0,52 mol) Cyclopentadien gegeben. Nach 15 min wurden 39 g (0,34 mol) 2,5-Hexandion zugetropft, wonach das Kältebad entfernt und das Reaktionsgemisch 2 h bei Raumtemperatur gerührt wurde. Anschließend wurden 200 ml Wasser und 200 ml Ether zugegeben. Die Etherschicht wurde entfernt, mit Wasser und Kochsalzlösung gewaschen und anschließend über Na₂SO₄ getrocknet. Nach Entfernung des Lösungsmittels i. Vak. und Destillation bei 65°C und 0,1 mbar verblieb die Verbindung 41 als orangefarbenes Öl (40 g; Ausbeute: 81 %). ¹H NMR (400 MHz, CDCl₃) δ 7,35 - 7,27 (m, 2 H), 7,23 (d, J = 7,6 Hz, 1 H), 6,82 (m, 1 H), 3,51 (s, 2 H), 2,75 (s, 3H), 2,63 (s, 3 H).

### Beispiel 39 (Diisopropylphosphino-tributylstannyl-4,7-dimethylinden, Verbindung 42)

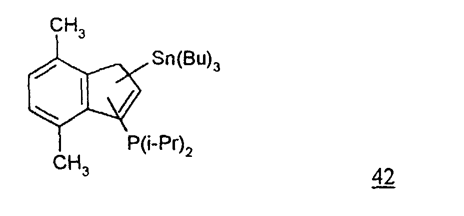

In einen Rundkolben, der 5,0 g (0,035 mol) 4,7-Dimethylinden (Verbindung 41) enthielt, wurden 100 ml Ether gegeben; es wurde auf - 20°C abgekühlt. Zu dieser Lösung wurden 14 ml einer 2,5 molaren Lösung von Butyl-lithium in Hexan (0,035 mol) innerhalb 5 min gegeben, wobei eine gelbe Lösung entstand. Nach Entfernung des Kältebades wurde die Lösung auf Raumtemperatur erwärmt und 1 h nachgerührt. Nach Abkühlung des Reaktionsgemisches auf - 20°C wurden 5,3 g (0,035 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf - 20°C wurden 14,0 ml einer 2,5 molaren Lösung von Butyl-lithium in Hexan (0,035 mol) zugetropft. Nach vollständiger Zugabe wurde das Kältebad entfernt, die Lösung langsam auf Raumtemperatur erwärmt und 1,5 h gerührt. Nach Abkühlung der Aufschlämmung auf 0°C wurden 11,4 g Chortributylzinn (0,035 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, filtriert und das Filtrat i. Vak.eingeengt, wobei 16 g (Ausbeute: 83%) der Verbindung 42 als schweres gelbes Öl übrigblieben. ³¹P NMR (161,9 MHz, CD₂Cl₂) δ - 9 ppm.

### Beispiel 40 (Diisopropylphosphino-4,7-dimethylindenyl-zirkonium-trichlorid, Verbindung 43)

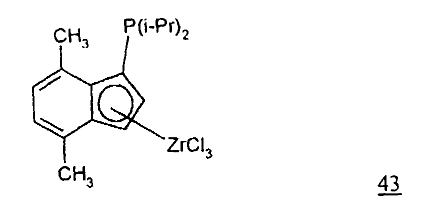

Eine Lösung von 16,0 g (0,029 mol) der Verbindung 42 in CH₂Cl₂ (100 ml) wurde zu einer Aufschlämmung von 6,4 g (0,029 mol) 99,9 %igem ZrCl₄ in 100 ml CH₂Cl₂ bei -20°C innerhalb 10 min gegeben. Nach vollständiger Zugabe wurde das Reaktionsgemisch langsam über einen Zeitraum von zwei Stunden auf Raumtemperatur erwärmt und anschließend weitere 2 h bei Raumtemperatur gerührt. Danach wurden die Feststoffe durch Filtration entfernt und das Lösungsmittel i. Vak. entfernt, wobei die Rohverbindung 43 als Öl übrigblieb, das direkt zur Herstellung der Verbindung 44 verwendet wurde.

### Beispiel 41 (Diisopropylphosphino-dichlorboranyl-verbrücktes 4,7-Dimethylindenyl-cyclopentadienyl-zirkonium-dichlorid, Verbindung 44)

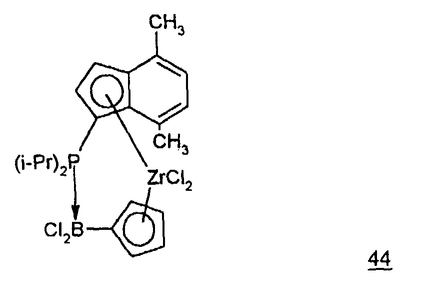

In einen Rundkolben, der 10,6 g (0,023 mol) der Verbindung 43 in 125 ml Toluol bei 0°C enthielt, wurden 5,0 g (0,023 mol) der Verbindung 2 innerhalb 5 min gegeben. Nach 1,5-stündigen Rühren bei 0°C wurde das Kältebad entfernt und die Aufschlämmung weitere 3 Stunden bei Raumtemperatur gerührt. Danach wurde die toluollösliche Fraktion vom schweren Öl, das sich während der Reaktion gebildet hatte, dekantiert und i. Vak, zur Trockne eingeengt, wobei ein schweres Öl übrigblieb. Nach Zugabe von 100 ml Hexan zu diesem Öl wurde nachgerührt und ein dunkelgelbes Pulver abfiltriert, das i. Vak. getrocknet wurde. Nach diesem Verfahren verblieben 6,3 g (Ausbeute: 48 %) der Verbindung 44 als dunkelgelbes Pulver. Das Produkt kann durch Ausfällung einer CH₂Cl₂-Lösung der Verbindung 44 in einem Kohlenwasserstoff-Lösungsmittel weitergereinigt werden. ¹H NMR (400 MHz, CD₂Cl₂) δ 8,03 (pseudo t, J = 8,5 Hz, 1 H), 7,22 (d, J = 7 Hz, 1 H), 7,08 (d, J = 7,1 Hz, 1 H), 7,02 (m, 1 H), 6,77 (m, 1 H), 6,70 (m, 1 H), 6,58 (m, 1 H), 6,44 (br s, 1 H), 3,51 (m, 1 H), 2,82 (m, 1 H), 2,64 (s, 3 H), 2,50 (s, 3 H), 1,77 (dd, J = 7,2 Hz, J_{H-P} = 16,3 Hz, 3 H), 1,69 (dd, J = 7,1 Hz, J_{H-P} = 15,2 Hz, 3 H), 1,58 (dd, J = 7,1 Hz, J_{H-P} = 15,5 Hz, 3 H), 1,28 dd, J = 7,2 Hz, J_{H-P} = 14,5 Hz, 3 H); ³¹P NMR (161,9 MHz, CD₂Cl₂) δ 28,4 (br d, J = 138 Hz); ¹¹B-NMR (80 MHz, CD₂Cl₂) δ -15,3 (d, J = 107 Hz).

### Beispiel 42 (Pyrrol-lithium, Verbindung 45)

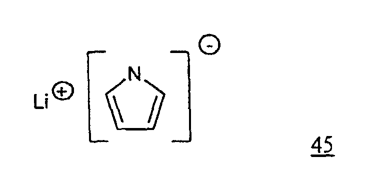

59 ml einer Lösung von Butyl-lithium (2,5 molar in Hexan, 0,148 mol) wurden langsam bei -20°C zu einer Lösung von 9,9 g Pyrrol (0,148 mol) in 200 ml Hexan gegeben, wobei sich ein weißer Festkörper bildete. Es wurde 2 Stunden bei Zimmertemperatur nachgerührt und der Festkörper durch Filtration gewonnen, 2 mal mit je 20 ml Hexan gewaschen und im Vakuum getrocknet. Dies Verfahren ergab 6 g der Verbindung 45 (56 % der theoretischen Ausbeute).
¹H-NMR (400 MHz, THF): δ = 6,71 (s, 2H), 5,95 (s,-2H).

### Beispiel 43 (Dimethylboranyl-verbrücktes Cyclopentadienyl-pyrrol-titandichlorid, Verbindung 46)

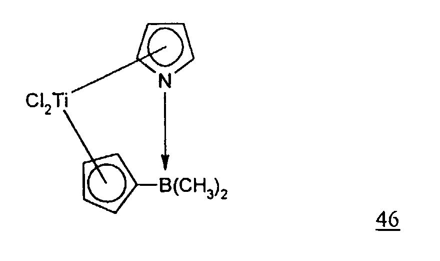

Eine Lösung von 1,34 g (0,005 mol) der Verbindung 4 in 20 ml Toluol wurde während 5 Minuten bei -78°C zu 0,38 g (0,005 mol) der Verbindung 45 gegeben. Das Kältebad wurde danach entfernt, und es wurde 2 Stunden bei Raumtemperatur weitergerührt. Danach wurde der gebildete rote Festkörper abfiltriert; das gelbe Filtrat wurde verworfen. Der rote Festkörper wurde mit Toluol gewaschen und im Vakuum getrocknet. Man erhielt 1,14 g mit einem geringen Anteil an LiCI.
¹H-NMR (400 MHz, THF): δ = 6.89 (pseudo-t, J = 2,3 Hz, 2 H), 6,64 (m, 2 H), 6,59 (pseudo-t, J = 2.35 Hz, 2 H), 5,73 (pseudo-t, J = 1,7 Hz, 2 H), 0,06 (s, 6 H). ¹¹B NMR (80 MHz, THF) δ = -26 ppm.

### Beispiel 44 (1-Phenyl-2,3,4,5-tetramethyl-phosphol, Verbindung 47)

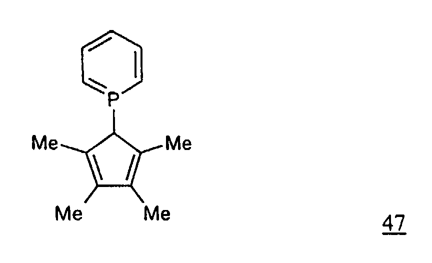

In Anlehnung an Organometallics 7 (1988), 921 wurde eine Lösung von 11,7 g (0,216 mol) 2-Butin in 150 ml CH₂Cl₂ langsam zu 15,3 g (0,115 mol) AlCl₃ in CH₂Cl₂ gegeben (0°C; 30 Min.). Es wurde 45 Minuten bei 0°C nachgerührt, dann das Kältebad entfernt und eine weitere Stunde nachgerührt. Danach wurde die Lösung auf -50°C gekühlt und eine Lösung von 21,4 g (0,12 mol) Phenyl-dichlorphosphin in CH₂Cl₂ während 20 Minuten zugegeben. Das Kältebad wurde danach entfernt, die dunkelrote Lösung eine Stunde nachgerührt und dann bei -30°C zu einer Lösung von 27 g (0,13 mol) Tributylphosphin in 100 ml CH₂Cl₂ gegeben. Die rote Farbe verschwand sofort; es hinterblieb eine gelbe Lösung. Nachdem die Zugabe beendet war, wurde das Lösungsmittel im Vakuum entfernt; es blieb ein dickes gelbes Öl. Das Öl wurde in Hexan aufgenommen und unter Ar-Atmosphäre mit gesättigter wäßriger NaHCO₃-Lösung und H₂O gewaschen. Nach Trocknung über MgSO₄ wurde das Hexan im Vakuum entfernt. Es hinterblieben 18,2 g als klares Öl (Ausbeute 78 %). ¹H-NMR (400 Mhz, CDCl₃) δ: 7,3 (m, 5H), 2,0 (m, 12H), ³¹P-NMR (161,9 MHz, CDCI₃) δ: 16,8 ppm.

### Beispiel 45 (Lithium-2,3,4,5-tetramethyl-phosphol, Verbindung 48)

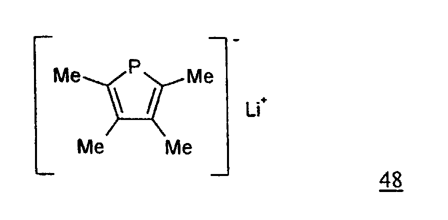

In Anlehnung an Organometallics 7 (1988), 921 wurden 0,52 g (0,074 mol) Lithium zu einer Lösung von 7 g (0,032 mol) der Verbindung 47 in 150 ml Tetrahydrofuran (THF) gegeben und über Nacht gerührt. Die erhaltene rote Lösung wurde zur Entfernung restlicher Feststoffe durch eine Fritte filtriert und das Filtrat auf 0°C gekühlt. Danach wurde eine Lösung von 1,45 g (0,01 mol) AlCl₃ in 20 ml THF zugetropft und die Lösung auf Raumtemperatur gebracht. Eine aliquate Menge wurde zur Analyse entnommen und die restliche Lösung direkt zur Herstellung der Verbindung 49 benutzt. ³¹P-NMR (161,9 MHz, THF) δ: 63,7 ppm.

### Beispiel 46 (Dimethylboranyl-cyclopentadienyl-tetramethylphosphol-titandichlorid, Verbindung 49)

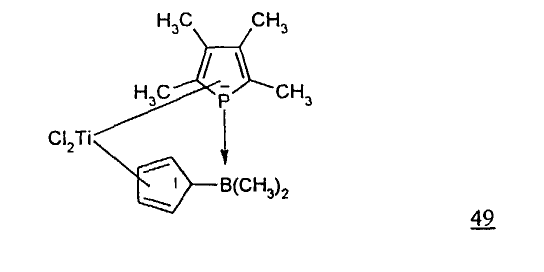

Die THF-Lösung aus Beispiel 45 mit 1,46 g (0,01 mol) der Verbindung 48 wurde in einen Rundkolben gegeben; THF wurde im Vakuum entfernt. Nach Zugabe von Toluol und Abkühlung auf -78°C wurde eine Lösung von 2,6 g (0,01 mol) der Verbindung 44 in 20 ml Toluol langsam unter Rühren zugegeben, wobei eine rote Aufschlämmung entstand. Nachdem die Zugabe beendet war, wurde die Aufschlämmung auf Raumtemperatur gebracht und 1 Stunde nachgerührt. Nach Abfiltrieren von ungelöst gebliebenem Feststoff wurde das Toluol im Vakuum entfernt; zum zurückgebliebenen öligen Feststoff wurde Hexan gegeben. Die Hexan-Lösung wurde ebenfalls von ungelöst gebliebenem Feststoff abfiltriert und über Nacht bei -20°C aufbewahrt. Nach Abdekantieren des Hexans wurden 0,5 g eines grünen Feststoffs erhalten, der als Verbindung 49 identifiziert wurde (Ausbeute 14 %). ¹H-NMR (200 MHz, CD₂Cl₂) δ: 6,64 (m,2H), 6,57 (m,2H), 2,11 (d, J_{H-P} = 10 Hz, 6H), 2,09 (s,6H), 0,87 (d, J_{H-P} = 5,3 Hz, 6H). ³¹P-NMR (161,9 MHz, THF) δ: 95,6 ppm, ¹¹B-NMR (80 MHz, CD₂Cl₂) δ: 39 (br, m) ppm.

### Beispiel 47 (Ethylen-Polymerisation)

In einem im Vakuum ausgeheizten, trockenen, O₂-freien, magnetisch gerührten V4A-Stahlautoklaven wurden 50 ml trockenes sauerstofffreies Toluol eingesaugt. Der D/A-Metallocen-Katalysator (Verbindung 10) wurde in Toluol bei Raumtemperatur mit MAO (Methylaluminoxan, 10 %ig in Toluol, Molmasse 900 g/mol) im Atom(Mol)-Verhältnis Al/Zr = 66.666 : 1 in 15 Minuten präformiert. Ein Aliquot, welches 1,5 x 10⁻⁷ mol Zr und 1,0 x 10⁻² mol Al in 6,8 ml enthielt, wurde unter strengem Luftausschluß in den Autoklaven injiziert und mit weiteren 50 ml Toluol nachgespült. Anschließend wurde unter einem konstanten Ethylendruck von 10 bar l Stunde bei Raumtemperatur polymerisiert, wobei die Innentemperatur auf 42°C anstieg. Nach Entspannen des Autoklaven wurde die Reaktionsmischung in 500 ml Ethanol und 50 ml konzentrierter wäßriger Salzsäure gegeben und über Nacht gerührt, das Polymerisat abfiltriert, mit Ethanol gründlich gewaschen und bei 100°C im Umluft-Trockenschrank bis zur Gewichtskonstanz getrocknet. Die PE-Ausbeute betrug 2,9 g, was einer Katalysator-Aktivität von 19,3 Tonnen Polymer pro Mol Zr und Stunde entspricht. Die Grenzviskosität, gemessen in o-Dichlorbenzol bei 140°C, betrug 4,36 dl/g. Die DSC-Messung ergab eine Schmelztemperatur von 139°C und eine Schmelzwärme von 164 J/g.

### Beispiele 48 bis 51 (Ethylen-Polymerisation)

In anderen Ethylen-Polymerisationsversuchen wurde wie in Beispiel 47 verfahren, jedoch wurde das D/A-Metallocen 7 als Katalysator verwendet und verschiedene MAO-Mengen eingesetzt. Die Ti-Menge betrug 1 x 10⁻⁶ mol, der Autoklav wurde auf ca. 100°C erwärmt. Das Al/Zr-Verhältnis wurde zwischen 1.250, 2.500, 5.000, 10.000 variiert. In allen 4 Versuchen lag die Katalysator-Aktivität bei ca. 3 bis 4 t PE pro mol Ti und Stunde.

### Beispiel 52 (Ethylen-Polymerisation)

Es wurde entsprechend Beispiel 47 verfahren, wobei aber direkt 100 ml Toluol im Autoklaven vorgelegt wurden. Der Autoklav wurde auf 80°C erwärmt, der Katalysator injiziert und der Ethylendruck auf 10 bar eingestellt. Als Katalysator wurden 1 x 10⁻⁶ mol der Verbindung 18 in 2,4 ml Toluol, die mit 5 x 10⁻³ mol MAO in 3,3 mol Toluol präformiert worden war, verwendet. Die Innentemperatur stieg von 80°C auf 94°C. Nach 30 Minuten wurde die Polymerisation abgebrochen. Die PE-Ausbeute betrug 3,5 g, was einer Katalysator-Aktivität von ca. 7 Tonnen Polymer pro mol Katalysator und Stunde entspricht. Die Grenzviskosität η wurde in ortho-Dichlorbenzol bei 140°C gemessen; sie betrug 2,95 dl/g. Die DSC-Messung ergab eine Schmelztemperatur von 139°C und eine Schmelzwärme von 165 J/g.

### Beispiele 53 bis 56 (Ethylenpolymerisation)

Es wurde wie in Beispiel 51 verfahren. Die Ti-Menge (Verbindung 7) betrug 1 x 10⁻⁶ mol, das Al/Zr-Verhältnis war 10.000. Der Autoklav wurde auf verschiedene Temperaturen erhitzt und die Polymereigenschaften Grenzviskosität und Schmelztemperatur Tₘ ermittelt.

| | | |
|---|---|---|
| T | RT bis 60° = 7,2 dl/g | Tₘ = 143°C |
| T | RT bis 80° = 4,6 dl/g | Tₘ = 142°C |
| T | RT bis 100° = 3,2 dl/g | Tₘ = 144°C |
| T | RT bis 120° = 2,2 dl/g | Tₘ = 140°C |
| (RT = Raumtemperatur) | | |

### Beispiel 57 (Ethylen-Polymerisation)

Es wurde entsprechend Beispiel 52 verfahren, wobei aber die Innentemperatur auf 100 eingestellt wurde. Der Katalysator wurden 5 x 10⁻⁷ mol der Verbindung 24 in 0,4 mol Chlorbenzol, die mit 5 x 10⁻³ mol MAO in 3,3 mol Toluol präformiert worden war, eingesetzt. Die Innentemperatur stieg von 100°C auf 120°C. Nach 30-minütiger Polymerisation hatten sich 6,2 g PE gebildet, was einer Katalysator-Aktivität von ca. 25 Tonnen Polymer pro mol Katalysator und Stunde entspricht. Die Grenzviskosität η, gemessen in ortho-Dichlorbenzol bei 140°C, betrug 1,85 dl/g.

### Beispiel 58 (Ethylen-Polymerisation)

Es wurde entsprechend Beispiel 57 verfahren, wobei aber die Verbindung 21 als Katalysator eingesetzt wurde. In diesem Fall stieg die Innentemperatur von 100° auf 128°C. Die PE-Ausbeute betrug 7,9 g nach 30 Minuten, entsprechend einer Katalysator-Aktivität von ca. 31,6 Tonnen pro mol Katalysator und Stunde. Die Grenzviskosität η in ortho-Dichlorbenzol bei 140°C war 1,01 dl/g.

### Beispiel 59 (Ethylen-Polymerisation)

Es wurde entsprechend Beispiel 52 verfahren, wobei aber die Polymerisation bei 20°C gestartet wurde. Dabei diente Metallocen 32 als Katalysator. Hierzu wurden 2,5 x 10⁻⁷ mol Katalysator mit 2,5 x 10⁻³ mol MAO in Toluol präformiert. Die Innentemperatur stieg von 20° auf 34°C. Nach 30minütiger Polymerisation hatten sich 1,3 g PE gebildet, was einer Katalysator-Aktivität von 10,4 Tonnen Polymer pro mol Katalysator und Stunde entspricht. Die Grenzviskosität η (ortho-Dichlorbenzol, 140°C) betrug 5,3 dl/g.

Die DSC-Messung ergab in der 1. Aufheizung mit einer Geschwindigkeit von 20 K/min eine Schmelztemperatur von 153°C. Nach Abschrecken der Probe mit 320 K/min wurde in der 2. Aufheizung das Schmelzmaximum bei 146°C ermittelt.

### Beispiel 60 (Ethylen-Polymerisation)

Der Versuch wurde entsprechend Beispiel 47 durchgeführt, jedoch war das als Katalysator eingesetzte D/A-Metallocen die Verbindung meso-15. Die Zr-Menge betrug 5 x 10⁻⁷mol, die Al-Menge 1 x 10⁻²mol. Der Autoklav wurde nach Katalysator- und Ethylen-Zugabe schnell auf ca. 120°C aufgeheizt. Nach 30 Minuten Polymerisationszeit wurden 4,3 g Polyethylen isoliert, was einer Aktivität von ca. 17 t PE pro mol Zr und Stunde entspricht.

Die Grenzviskosität η, gemessen bei 140°C in o-Dichlorbenzol, betrug 1,9 dl/g.

### Beispiel 61 (Diphenylphosphino-dichlorboranyl-verbrücktes Bis(indenyl)zirkonium-dichlorid, Verbindung 50)

0,011 Mol Trimethylsilyl-dichlorboranyl-inden wurden bei Raumtemperatur zu einer Suspension von 0,012 Mol Diphenylphosphino-indenyl-zirkoniumtrichlorid in 150 ml Toluol gegeben. Das Reaktionsgemisch wurde sodann 1 Stunde bei 75°C gerührt. Nach Abkühlen und Filtration wurden zur klaren orangefarbenen Lösung 150 ml Hexan gegeben, worauf sich ein schweres rotes Öl und ein hellgelber Niederschlag bildeten; der Niederschlag wurde abfiltriert, mit Hexan gewaschen und i. Vak. getrocknet. Der hellgelbe Festkörper wurde durch ¹H-NMR-Spektroskopie als reine meso-Verbindung identifiziert. Das Filtrat mit dem roten Öl wurde auf 30 ml konzentriert und tropfenweise zu 200 ml Hexan gegeben, worauf ein zweiter hellgelber Niederschlag bildete, der abfiltriert und i. Vak. getrocknet wurde. Dieses Produkt wurde mit Hilfe der Röntgen-Strukturanalyse als das reine rac-Isomer identifiziert. Hierzu geeignete Kristalle waren durch langsame Diffusion von Hexan in eine gesättigte CH₂Cl₂ Lösung bei Umgebungstemperatur gezüchtet worden. Die Donor-Akzeptor-Bindung P→B hat eine Länge von 2,02 Å. Die Ausbeute betrug 40 %, das meso/rac-Verhältnis 1:1. Wurde das Reaktionsgemisch 5 Stunden (statt 1 h) bei 75°C gerührt, erhielt man eine erhöhte Menge des gewünschten rac-lsomer; das meso/rac-Verhältnis betrug 1:4. Gleichzeitig stieg die Gesamtausbeute leicht von 40 % auf 45 %.
Elementaranalyse: 56,05 % C (theoretisch 55,90 %), 4,35 % H (4,38 %).
Spektrum meso-Isomer: ¹H-NMR (400 MHz, CD₂Cl₂, Raumtemperatur RT): 8,01 ppm (1H, d, 8,8 Hz); 7,8-7,0 ppm (mehrere überlappende Multiplets, 28H); 6,94 ppm (1H, t, 3,3 Hz); 6,77 ppm (1H, d, 3,44 Hz); 6,31 ppm (1H, d, 8,7 Hz), ³¹P-NMR (161,9 MHz, CD₂Cl₂): 5,6 ppm. ¹¹B-NMR (80,2 MHz, CD₂Cl₂): -17,0 ppm (72 Hz).
Spektrum rac-lsomer: ¹H-NMR (400 MHz, CD₂CI₂, RT): 8,39 ppm (1H, d, 8,5 Hz), 7,68-7,05 ppm (27H, verschiedene überlappende Multiplets); 6,65 ppm (1H, d, 2,9 Hz); 6,59 ppm (1H, t, 3,5 Hz); 6,51 ppm (1H, t, 2,8 Hz); 6,40 ppm (1H, d, 3,5 Hz) ³¹P-NMR (161,9 MHz, CD₂Cl₂): 8,1 ppm, ¹¹B-NMR (80,2 MHz, CD₂CI₂)= -14,0 ppm (J_{P-B} 74 Hz).

### Beispiele 62-64 (Dialkylphosphino-Dichlorboranyl-verbrücktes Bis(indenyl)zirkonium-dichlorid; Alkyl = i = Propyl = Verbindung 51; Ethyl = Verbindung 52; Methyl = Verbindung 53)

0,016 Mol Trimethylsilyl-dichlorboranyl-inden in 50ml Toluol wurden bei Raumtemperatur zu einer Suspension von 0,0157 Mol Dialkylphosphinoindenyl-zirkoniumtrichlorid in 250 ml Toluol gegeben. Das Reaktionsgemisch wurde dann unter Rühren für einige Stunden erhitzt. Nach Abkühlen und Filtration wurden zur klaren orangefarbenen Lösung 300 ml Hexan gegeben, worauf sich ein schweres rotes Öl und eine klare gelbe Lösung bildeten. Die Trennung der meso- und rac-Isomere wurde durch fraktionierte Kristallisation aus Toluol/Hexan-Lösungen erreicht.
Charakterisierung der Verbindungen (NMR-Spektren in CD₂Cl₂ bei RT; ¹H-NMR: 400 MHz, ³¹P-NMR: 61,9 MHz, ¹¹B-NMR: 80, 2 MHz):

### rac-Verbindung 51 (i-Pr):

^{**1**}**H-NMR:** 8,41 ppm (1 H, d, 9,0 Hz); 8,31 ppm (1 H, d, 8,4 Hz); 7,84 ppm (1 H, d, 8,5 Hz); 7,64 - 7,24 ppm (6 H, verschiedene überlappende Multiplets); 6,70 ppm (2 H, m); 6,60 ppm (1 H, m): 3,78 ppm (1 H, m, P(C**H**(CH₃)₂)₂; 3,21 ppm (1 H, m P(C**H**(CH₃)₂)₂); 1,81 ppm (6 H, m, P(CH(C**H**₃)₂)₂; 1,72 ppm (3 H, dd, P(CH(C**H**₃)₂)₂, 14,9 Hz, 7,3 Hz); 1,32 ppm (3 H, dd, P(CH(C**H**₃)₂)₂, 14,1 Hz, 7,4 Hz). ^{**31**}**P-NMR:** 22,7 ppm. ^{**11**}**B-NMR**: -14,1 ppm (100 Hz).
Elementaranalyse: 49,4 % (theoretisch 48,9 %), 4,6 % H (4,4 %).

### meso-Verbindung 52 (Et):

^{**1**}**H-NMR**: 7,83 ppm (1 H, d, 9,0 Hz); 7,76 ppm (1 H, m); 7,63 ppm (1 H, d, 7,2 Hz); 7,47 ppm (1 H, d, 8,5 Hz); 7,33 ppm (2 H, m); 7,20 - 7,03 ppm (4 H, verschiedene überlappende Multiplets); 6,76 ppm (2 H, m); 2,68 ppm (2 H, m, P(C**H**₂CH₃)₂; 2,44 ppm (2 H, m P(C**H**₂CH₃)₂); 1,62 ppm (3 H, m, P(CH₂C**H**₃)₂; 1,27 ppm (3 H, m, P(CH₂C**H**₃)₂). ³¹P-NMR: 7,1 ppm. ^{**11**}**B-NMR:** -15,8 ppm (100 Hz).

### rac-Verbindung 52 (Et):

^{**1**}**H-NMR:** 8,28 ppm (1 H, d, 8,6 Hz); 8,10 ppm (1 H, d, 8,6 Hz); 7,62 ppm (1 H, d, 8,4 Hz); 7,46 ppm (1H, d, 8,5 Hz); 7,41 - 7,10 ppm (4 H, verschiedene überlappende Multiplets); 6,81 ppm (1 H, m); 6,47 ppm (2 H, m): 6,38 ppm (1 H, d, 3,4 Hz), 2,68 ppm (2 H, m, P(C**H**₂CH₃)₂); 2,35 ppm (2 H, m, P(C**H**₂CH₃)₂); 1,30 ppm (6 H, m, P(CH₂C**H**₃)₂). ^{**31**}**P-NMR:** 12,3 ppm. ^{**11**}**B-NMR**: -15,7 ppm.
Elementaranalyse: 47,6 % (theoretisch 47,1 %), 4,3 % H (4,0 %).

### meso-Verbindung 53 (Me):

^{**1**}**H-NMR:** 7,84 ppm (1 H, d); 7,75 ppm (1 H, d, 8,2 Hz); 7,68 ppm (1 H, d, 7,7 Hz); 7,51 ppm (1H, d, 8,5 Hz); 7,40 - 7,10 ppm (4 H, verschiedene überlappende Multiplets); 6,77 ppm (2 H, br); 2,13 ppm (3 H, P(C**H**₃)₂, d, 11,8 Hz); 1,92 ppm (3 H, P(C**H**₃)₂, d 11,8 Hz). ^{**31**}**P-NMR:**- 8,4 ppm. ^{**11**}**B-NMR:** -16,1 ppm (103 Hz).

### rac-Verbindung 53 (Me):

^{**1**}**H-NMR:** 8,21 ppm (1 H, d 8,7 Hz); 8,15 ppm (1 H, d, 8,6 Hz); 7,63 ppm (1 H, d, 8,5 Hz); 7,44 - 7,07 ppm (6 H, verschiedene überlappende Multiplets); 6,40 ppm (3 H, br); 2,03 ppm (3 H, d, P(C**H**₃)₂, 11,9 Hz); 1,98 ppm (3 H, d, P(C**H**₃)₂, 11,6 Hz). ^{**31**}**P-NMR:** - 1,5 ppm. ^{**11**}**B-NMR**: -16,0 ppm (119 Hz).

### Beispiel 65

### (1,3-Bis(trimethylsilyl)-2-methylinden, Verbindung 54)

500 ml Hexan und 70 ml Butyllithium (als 2,5 molare Lösung in Hexan wurden in einer 1 000 ml-Kolben gegeben. Hierzu wurden 0,175 mol 2-Methylinden bei Umgebungstemperatur getropft; das Gemisch wurde weitere 10 Stunden gerührt. Dann wurden 0,18 Mol Trimethylsilylchlorid bei Raumtemperaturen zugetropft; es wurde weitere 10 Stunden gerührt. LiCl wurde abfiltriert, und 70 ml Butyllithium (als 2,5 molare Lösung in Hexan) wurden zum klaren Filtrat gegeben. Nach weiterem Rühren für 10 Stunden wurden erneut 0,18 Mol Trimethylsilylchlorid zugegeben, und es wurde weitere 10 Stunden gerührt. LiCl wurde abfiltriert und das Lösungsmittel i. Vak. entfernt. Verbindung 54 hinterblieb als farbloses Öl. Ausbeute: 85 % der theoretischen Ausbeute.
^{**1**}**H-NMR** (CD₂Cl₂): 7,51 ppm (1 H, d, 7,7 Hz); 7,38 ppm (1 H, d, 7,5 Hz); 7,19 ppm (1 H, t, 7,4 Hz); 7,08 ppm (1 H, t, 7,3 Hz); 3,54 ppm (1H, s); 2,32 ppm (3 H, s); 0,41 ppm (9 H, s, Si(C**H**₃)₃); 0,0 ppm (9 H, s, Si(C**H**₃)₃).

### Beispiel 66

### (Trimethylsilyl-dichlorboranyl-2-methylinden, Verbindung 55)

0,096 Mol der Verbindung 54 wurden in einem 250 ml-Kolben gegeben, der mit einem Trockeneis-Kondensator (-30°C) ausgerüstet war. Dann wurden 0,096 Mol BCl₃ zugegeben und das Gemisch bei Umgebungstemperatur 3 Stunden und bei 55°C 6 Stunden gerührt. Das Nebenprodukt (CH₃)₃SiCl wurde entfernt; es hinterblieb als Rohprodukt ein braunes Öl. Eine Destillation von Kältefalle zu Kältefalle ergab die Verbindung 55 in 75 %ige Ausbeute als klebrigen Feststoff.
^{**1**}**H-NMR** (CD₂CI₂): 8,09 ppm (1 H, d, 7,9 Hz); 7,37 ppm (1 H, d, 7,6 Hz); 7,26 ppm (1 H, t, 7,5 Hz); 7,16 ppm (1 H, t, 7,5 Hz); 3,89 ppm (1H, s); 2,61 ppm (3 H, s); 0,0 ppm (9 H, s, Si(C**H**₃)₃). ¹¹B-NMR (CD₂Cl₂): 31,9 ppm.

### Beispiel 67

### (Tributylstannyl-diethylphosphino-2-methylinden, Verbindung 56)

Es wurde analog Beispiel 7 gearbeitet.

### Beispiel 68

### (Diethylphosphino-2-methylinden-zirkoniumtrichlorid, Verbindung 57)

Es wurde analog Beispiel 8 gearbeitet, jedoch wurde statt Toluol CH₂Cl₂ als Lösungsmittel benutzt. Die Reaktionstemperatur war 25°C. Die Reinigung erfolgte durch Soxhlet-Extraktion mit CH₂Cl₂. Verbindungen 57 wurde als unlöslicher gelber Feststoff in 78 % der theoretischen Ausbeute erhalten.

### Beispiel 69

### ((C₂H₅)₂P-BCl₂-verbrücktes Bis(2-methylindenyl)-zirkoniumchlorid, Verbindung 58)

0,019 Mol Verbindung 55 in 50 ml Toluol wurden bei Raumtemperatur zu einer Suspension von 0,019 Mol Verbindung 57 in 350 ml Toluol gegeben.

Das Reaktionsgemisch wurde dann auf 80°C erhitzt und 24 Stunden gerührt. Nach Abkühlen und Filtration wurden 300 ml Hexan zur klaren, orangefarbenen Lösung gegeben, worauf sich ein schweres orangefarbenes Öl und eine klare gelbe Lösung bildeten. Konzentrierung und Abkühlen auf -25°C ergab die Verbindung rac-58 als hellgelbes Pulver.
^{**1**}**H-NMR**: 8,14 ppm (1 H, d, 8,6 Hz); 7,96 ppm (1 H, d, 8,9 Hz); 7,47 - 7,05 ppm (6 H, verschiedene überlappende Multiplets) 6,53 ppm (1H, d, 1,9 Hz); 6,47 ppm (1 H, s); 3,0 - 2,55 ppm (4 H, verschiedene überlappende Multiplets, P(C**H**₂CH₃)₂); 2,21 ppm (3 H, s, C**H**₃); 2,08 ppm (3 H, s, C**H**₃); 1,44 ppm (3 H, m, P(CH₂C**H**₃)₂), 1,07 ppm (3 H, m, P(CH₂C**H**₃)₂). ^{**31**}**P-NMR:** 21,4 ppm ^{**11**}**B-NMR:** -14,7 ppm.

### Beispiel 70

### (Propen-Polymerisation)

Ein ausgeheizter 300 ml-V4A-Stahlautoklav wurde mit 100 ml trockenem, Sauerstoff-freien Toluol und 0,5 ml eine 1 molaren Triisobutylaluminium/Toluol-Lösung beschickt. Anschließend wurde ca. 1 mol Propen in den Autoklaven übergeführt. 3,1 ml einer 30 Minuten bei RT präformierten toluolischen Katalysator-Lösung, die 1 x 10⁻⁶ mol rac[(2-Me-ind)Et₂PBCl₂(2-Me-ind)ZrCl₂] und 0,1 mmol Triisobutylaluminium (TiBA) enthielt, wurden in einer Druckschleuse mit 1 ml einer Chlorbenzol-Lösung, die 4 x 10⁻⁶ mol Dimethylanilinium-tetrakis(pentafluorphenyl)borat enthielt, versetzt und mit Toluol auf 5 ml aufgefüllt. Nach Überführung der Katalysator-Lösung unter Druck in den Autoklaven stieg die Innentemperatur trotz Außenkühlung mit Trockeneis/Aceton von 20°C auf 48°C.

20 Minuten nach Katalysatorzugabe wurde die Polymerisation abgebrochen und der Autoklaveninhalt in 500 ml Ethanol und 50 ml konzentrierter wäßriger Salzsäure 2 Stunden ausgerührt. Anschließend wurde das weiße Polypropylenpulver durch Filtration isoliert, mit Ethanol gewaschen und bei 115°C getrocknet.
Polymerausbeute: 11,6 g
Katalysator-Aktivität: 34,8 Tonnen: i-PP pro Mol Katalysator und Stunde
Die DSC-Messung ergab in der 2. Aufheizung eine Schmelztemperatur Tₘ = 155°C
Die NMR-Messung ergeb einen Isotaktilitätsindex I.I. = 88 %
Die Grenzviskosität [η] gemessen in ortho-Dichlorbenzol (ODCB) bis 140°C betrug 3,60 dl/g entsprechend einer Molmasse Mᵥᵢₛₖ = 798 kg/mol
(berechnet nach Atkinson et al., Makromol. Chem. (1976), 177, 213)

Mit rac-52 wurde unter vergleichbaren Versuchsbedingungen bei einer Polymerisationstemperatur zwischen 10° und 20° ein i-PP erhalten mit 1.1. = 92 % und [η] = 1,20 dl/g, entsprechend einer berechneten mittleren Molmasse Mᵥᵢₛₖ = 169 kg/mol.

### Beispiel 71 (Ethylen-Polymerisation)

Ein ausgeheizter 300 ml V4A-Stahlautoklav wurde mit 100 ml trockenem, Sauerstoff-freien Toluol beschickt und auf 100°C aufgeheizt. Mit Ethylen werden konstant 10 bar eingestellt und mittels Druckschleuse der Katalysator zugegeben.

Als Katalysator wurden 5 x 10⁻⁷ mol meso-[(ind)Et₂PBCl₂(ind)ZrCl₂] verwendet, die mit 5 x 10⁻³ mol MAO in 5 ml Toluol 15 Minuten bei RT präformiert worden waren.

Die Innentemperatur stieg während der Polymerisation auf 111°C.
Polyethylenausbeute nach 30 Minuten: 12,1 g
Katalysator-Aktivität: 48,4 Tonnen Polymer pro mol Katalysator und Stunde
Grenzviskosität in ortho-Dichlorbenzol bei 140°C: [η] = 0,91 dl/g
DSC-Analyse: Tₘ = 136°C

### Beispiel 72

Es wurde wie im Beispiel 70 verfahren, jedoch mit dem Unterschied, daß unter einem Propen-Druck von nur 2 bar gearbeitet wurde. Die Innentemperatur stieg von 20°C auf 23°C. Die Schmelztemperatur des gebildeten Polypropylens betrug in diesem Fall Tₘ = 158°C.

## Patentansprüche

1. Verfahren zur Herstellung von hochschmelzenden Polyolefinen durch Homo- oder Copolymerisation von einem oder mehreren Monomeren aus der Gruppe der α-Olefine mit 2 oder mehr C-Atomen in Gegenwart von metallorganischen Katalysatoren, die durch Cokatalysatoren aktiviert werden können, dadurch gekennzeichnet, daß als metallorganische Katalysatoren Metallocen-Verbindungen bzw. π-Komplex-Verbindungen der Formel 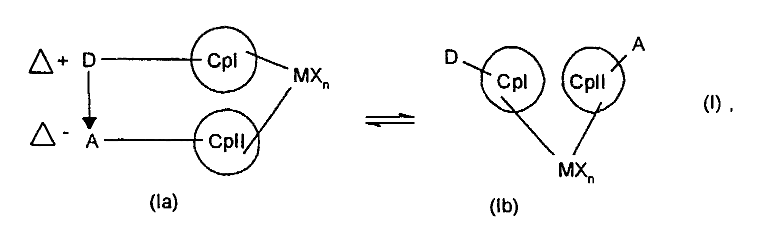 in der
CpI und CpII zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem C₁-C₂₀-Alkyl, das 1flache bis vollständig durch Halogen, 1-3fach durch Phenyl, sowie 1-3fach durch Vinyl substituiert sein kann, C₆-C₁₂-Aryl, Halogenaryl mit 6 bis 12 C-Atomen, Organometall-Substituenten, wie Silyl, Trimethylsilyl, Ferrocenyl sowie 1- oder 2fach durch D und A substituiert sein können,
D ein Donoratom bedeutet, das zusätzlich Substituenten tragen kann und das in seinem jeweiligen Bindungszustand mindestens über ein freies Elektronenpaar verfügt,
A ein Akzeptoratom bedeutet, das zusätzlich Substituenten tragen kann und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen,
M für ein Übergangsmetall der III., IV., V. oder VI. Nebengruppe des Periodensystems der Elemente (Mendelejew) einschließlich der Lanthaniden und Actiniden steht,
X ein Anionäquivalent bedeutet und
n in Abhängigkeit von der Ladung von M die Zahl Null, Eins, Zwei, Drei oder Vier bedeutet,
oder
π-Komplex-Verbindungen und insbesondere Metallocen-Verbindungen der Formel 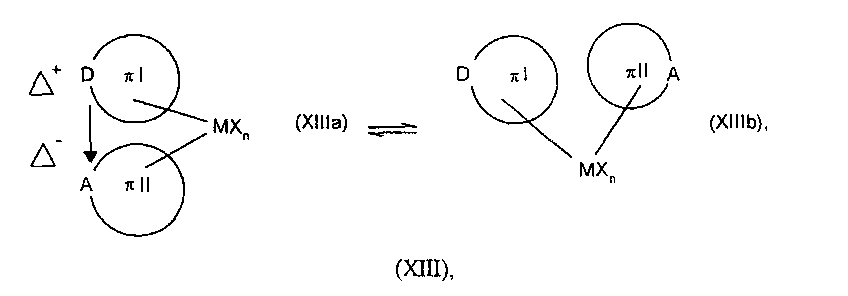 in der
πI und πII voneinander verschiedene geladene oder elektrisch neutrale π-Systeme darstellen, die ein- oder zweifach mit ungesättigten oder gesättigten Fünf- oder Sechsringen kondensiert sein können,
D ein Donoratom bedeutet, das Substituent von πl oder Teil des π-Systems von πl ist und das in seinem jeweiligen Bindungszustand mindestens über ein freies Elektronenpaar verfügt,
A ein Akzeptoratom bedeutet, das Substituent von πII oder Teil des n-Systems von πII ist und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierte Ringsystem eines oder mehrere D oder A oder D und A enthalten kann und
wobei in πl und πII in der nicht kondensierten oder in der kondensierten Form unabhängig voneinander eines bis alle H-Atome des n-Systems durch gleiche oder verschiedene Reste aus der Gruppe von linearem oder verzweigtem C₁-C₂₀-Alkyl, das 1-fach bis vollständig durch Halogen, 1- bis 3-fach durch Phenyl sowie 1- bis 3-fach durch Vinyl substituiert sein kann, C₆-C₁₂-Aryl, Halogenaryl mit 6 bis 12 C-Atomen, Organometall-Substituenten, wie Silyl, Trimethylsilyl, Ferrocenyl sowie ein- oder zweifach durch D und A substituiert sein können, sodaß die reversible koordinative D→A-Bindung (i) zwischen D und A, die beide Teile des jeweiligen π-Systems oder des ankondensierten Ringsystems sind, oder (ii) von denen D oder A Teil des π-Systems und das jeweils andere Substituent des nicht kondensierten π-Systems oder des ankondensierten Ringsystems ist oder (iii) sowohl D als auch A solche Substituenten sind, wobei im Falle von (iii) mindestens ein zusätzliches D oder A oder beide Teile des n-Systems oder des ankondensierten Ringsystems ist (sind), ausgebildet wird,
M und X die obige Bedeutung haben und
n in Abhängigkeit von den Ladungen von M sowie denen von πl und πII die Zahl Null, Eins, Zwei, Drei oder Vier bedeutet,
eingesetzt werden.

2. Verfahren nach Anspruch 1, dadurch gekennzeichnet, daß die Metallocen-Verbindungen bzw. die π-Komplex-Verbindungen als Katalysatoren in einer Menge von 10¹ bis 10¹² mol Monomere pro mol Metallocen bzw. π-Komplex-Verbindung eingesetzt werden.

3. Verfahren nach Ansprüchen 1 und 2, dadurch gekennzeichnet, daß in Gegenwart oder Abwesenheit von Lösungsmitteln aus der Gruppe von gesättigten oder aromatischen Kohlenwasserstoffen oder von gesättigten oder aromatischen Halogenkohlenwasserstoffen gearbeitet wird.

4. Verfahren nach Ansprüchen 1 bis 3, dadurch gekennzeichnet, daß in den Metallocen-Verbindungen bzw. die π-Komplex-Verbindungen die Carbanionen CpI und CpII bzw. das π-System πl ein Cyclopentadienylgerüst aus der Gruppe von Cyclopentadien, substituiertem Cyclopentadien, Inden, substituiertem Inden, Fluoren und substituiertem Fluoren bedeuten, in welchen je Cyclopentadien- bzw. ankondensiertem Benzolring 1 bis 4 Substituenten aus der Gruppe von C₁-C₂₀-Alkyl, C₁-C₂₀-Alkoxy, Halogen, C₆-C₁₂-Aryl, Halogenphenyl, D und A vorliegen, wobei D und A den in Anspruch 1 genannten Bedeutungsumfang haben und wobei ankondensierte aromatische Ringe teilweise oder vollständig hydriert sein können

5. Verfahren nach Ansprüchen 1 bis 4, dadurch gekennzeichnet, daß in den Metallocen-Verbindungen als Donoratome D Elemente aus der Gruppe N, P, As, Sb, Bi, O, S, Se, Te, F, Cl, Br, I, bevorzugt N, P, O, S, vorliegen.

6. Verfahren nach Ansprüchen 1 bis 5, dadurch gekennzeichnet, daß in den Metallocen-Verbindungen als Akzeptoratome A Elemente aus der Gruppe B, Al, Ga, In, Tl, bevorzugt B, Al, Ga, vorliegen.

7. Verfahren nach Ansprüchen 1 bis 6, dadurch gekennzeichnet, daß in den Metallocen-Verbindungen bzw. π-Komplex-Verbindungen Donor-Akzeptor-Brücken aus der Gruppe von
N→B, N→Al, P→B, P→AI, O→B, O→AI, CI→B, Cl→Al, C = O→B, C = O→AI
vorliegen.

8. Verfahren nach Ansprüchen 1 bis 7, dadurch gekennzeichnet, daß in den Metallocen-Verbindungen M für Sc, Y, La, Sm, Nd, Lu, Ti, Zr, Hf, Th, V, Nb, Ta, Cr, bevorzugt für Ti, Zr, Hf, V, Nb oder Ta steht.

9. Verfahren nach Ansprüchen 1 bis 8, dadurch gekennzeichnet, daß die Metallocen-Verbindungen bzw. die π-Komplex-Verbindungen gemeinsam mit einem Aluminoxan, einem Boran oder Borat und gegebenenfalls weiteren Cokatalysatoren und/oder Metallalkylen als Katalysatorsystem eingesetzt werden

10. Verfahren nach Ansprüchen 1 bis 9, dadurch gekennzeichnet, daß Umlagerungsprodukte von Metallocen-Verbindungen bzw. π-Komplex-Verbindungen nach Anspruch 1 unter Selbstaktivierung, bei denen nach Öffnung der D/A-Bindung das Akzeptoratom A einen X-Liganden unter Ausbildung einer zwitterionischen Metallocen-Komplex-Struktur bzw. π-Komplex-Struktur bindet, wobei beim Übergangsmetall M eine positive Ladung und beim Akzeptoratom A eine negative Ladung erzeugt wird und wobei ein weiterer X-Ligand H oder substituiertes oder nicht substituiertes C darstellt, in dessen Bindung zum Übergangsmetall M die Olefin-Insertion zur Polymerisation erfolgt, wobei bevorzugt 2 X-Liganden zu einem Chelat-Liganden verknüpft sind, eingesetzt werden.

11. Verfahren nach Ansprüchen 1 bis 10, dadurch gekennzeichnet, daß π-Komplex-Verbindungen nach Anspruch 1, in denen eines der Atome D bzw. A Teil des Ringes des zugehörigen π-Systems ist, bevorzugt daß D Teil des Ringes des zugehörigen π-Systems ist, eingesetzt werden.

12. Verfahren nach Ansprüchen 1 bis 11, dadurch gekennzeichnet, daß Reaktionsprodukte der Formel (XIa) bis (VId) von ionisierenden Agentien mit Metallocen-Verbindungen bzw. π-Komplexen gemäß Formel (I) bzw. (XIII) 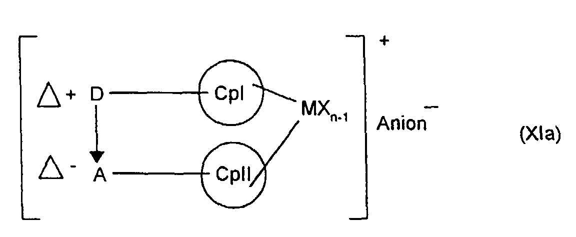 oder 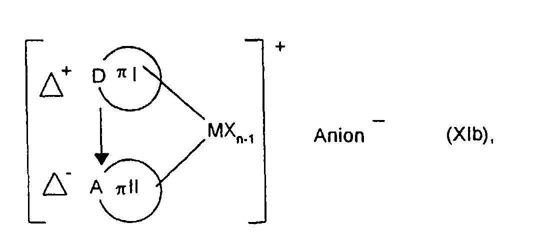 bzw. 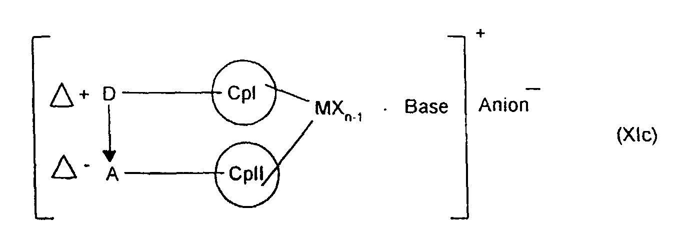 oder 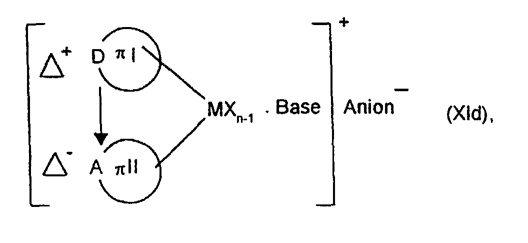 in denen
Anion für das gesamte sperrige, schlecht koordinierende Anion und Base für eine Lewis-Base stehen,
eingesetzt werden.

13. Verfahren nach Ansprüchen 1 bis 12, dadurch gekennzeichnet, daß es auf die Herstellung von HDPE, LLDPE mit Butylen, Hexen oder Octen als Comonomer, iPP und sPP gerichtet ist.

14. Lineares Polyethylen mit einer Schmelztemperatur von 140 - 160°C (Maximum der DSC-Kurve), bevorzugt 142 - 160°C, besonders bevorzugt 144 - 160°C, ganz besonders bevorzugt 146 - 160°C, herstellbar nach dem Verfahren von Anspruch 1.

## Claims

1. Process for the preparation of high-melting polyolefins by the homo- or co-polymerisation of one or more monomers from the group of the α-olefins having two or more carbon atoms in the presence of organometallic catalysts that can be activated by co-catalysts, characterised in that there are used as the organometallic catalysts metallocene compounds or π complex compounds of the formula 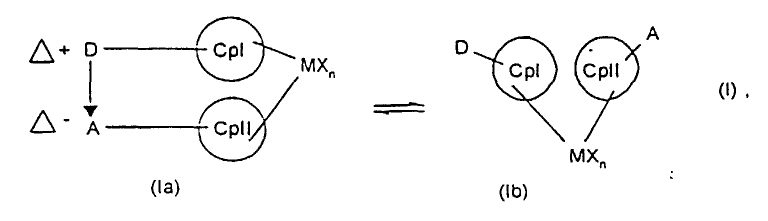 in which
CpI and CpII represent two identical or different carbanions having a cyclopentadienyl-containing structure, in which one to all of the H atoms may be substituted by identical or different radicals from the group linear or branched C₁-C₂₀-alkyl, which may be monosubstituted to completely substituted by halogen, mono- to tri-substituted by phenyl and mono- to tri-substituted by vinyl, C₆-C₁₂-aryl, haloaryl having from 6 to 12 carbon atoms, organometallic substituents, such as silyl, trimethylsilyl, ferrocenyl, and mono- or di-substituted by D and A,
D represents a donor atom which may additionally carry substituents and which in its particular bond state has at least one lone electron pair,
A represents an acceptor atom which may additionally carry substituents and which in its particular bond state has an electron pair gap,
wherein D and A are so linked by a reversible co-ordinate bond that the donor group acquires a positive (partial) charge and the acceptor group acquires a negative (partial) charge,
M represents a transition metal of sub-group III, IV, V or VI of the periodic system of the elements (Mendeleyev), including the lanthanides and actinides,
X represents an anion equivalent, and
n represents the number zero, one, two, three or four, depending on the charge of M,
or
π complex compounds and especially metallocene compounds of the formula 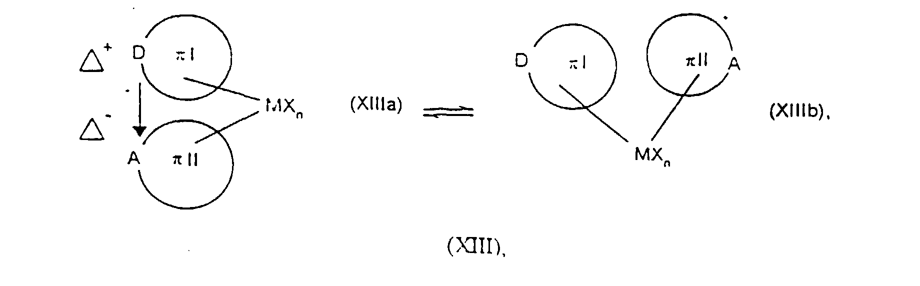 in which
πI and πII represent different charged or electrically neutral π systems which may be condensed once or twice with unsaturated or saturated five- or six-membered rings,
D represents a donor atom which is a substituent of πI or part of the π system of πI and which in its particular bond state has at least one lone electron pair,
A represents an acceptor atom which is a substituent of πII or part of the π system of πII and which in its particular bond state has an electron pair gap,
wherein D and A are so linked by a reversible co-ordinate bond that the donor group acquires a positive (partial) charge and the acceptor group acquires a negative (partial) charge, and wherein at least one of D and A is part of the respective associated π system,
wherein D and A may in turn carry substituents,
wherein each π system or each annellated ring system may contain one or more D or A or D and A, and
wherein in πI and πII in the uncondensed form or in the condensed form, independently of one another, one to all of the H atoms of the π system may be substituted by identical or different radicals from the group linear or branched C₁-C₂₀-alkyl, which may be monosubstituted to completely substituted by halogen, mono- to tri-substituted by phenyl and mono- to tri-substituted by vinyl, C₆-C₁₂-aryl, haloaryl having from 6 to 12 carbon atoms, organometallic substituents, such as silyl, trimethylsilyl, ferrocenyl, and mono- or di-substituted by D and A, so that the reversible co-ordinate D→A bond is formed (i) between D and A, which are both parts of the respective π system or of the fused ring system, or (ii) of which D or A is part of the π system and the other is a substituent of the uncondensed π system or of the annellated ring system or (iii) both D and A are such substituents, wherein in the case of (iii) at least one additional D or A or both is (are) parts of the π system or of the annellated ring system,
M and X are as defined above, and
n represents the number zero, one, two, three or four, depending on the charges of M and of πI and πII.

2. Process according to claim 1, characterised in that the metallocene compounds or the π complex compounds are used as catalysts in an amount of from 10¹ to 10¹² mol of monomer per mol of metallocene or π complex compound.

3. Process according to claims 1 and 2, characterised in that it is carried out in the presence or absence of solvents from the group saturated or aromatic hydrocarbons or saturated or aromatic halogenated hydrocarbons.

4. Process according to claims 1 to 3, characterised in that in the metallocene compounds or the π complex compounds, the carbanions CpI and CpII or the π system πI represent a cyclopentadienyl structure from the group cyclopentadiene, substituted cyclopentadiene, indene, substituted indene, fluorene and substituted fluorene, in which there are present per cyclopentadiene or annellated benzene ring from 1 to 4 substituents from the group C₁-C₂₀-alkyl, C₁-C₂₀-alkoxy, halogen, C₆-C₁₂-aryl, halophenyl, D and A, wherein D and A have the range of meanings given in claim 1 and wherein annellated aromatic rings may be partially or completely hydrogenated.

5. Process according to claims 1 to 4, characterised in that there are present in the metallocene compounds as donor atoms D elements from the group N, P, As, Sb, Bi, O, S, Se, Te, F, Cl, Br, I, preferably N, P, O, S.

6. Process according to claims 1 to 5, characterised in that there are present in the metallocene compounds as acceptor atoms A elements from the group B, Al, Ga, In, Tl, preferably B, Al, Ga.

7. Process according to claims 1 to 6, characterised in that there are present in the metallocene compounds or π complex compounds donor-acceptor bridges from the group
N→B, N→AI, P→B, P→AI, O→B, O→AI, CI→B, Cl→Al, C=O→B, C=O→AI.

8. Process according to claims 1 to 7, characterised in that M in the metallocene compounds represents Sc, Y, La, Sm, Nd, Lu, Ti, Zr, Hf, Th, V, Nb, Ta, Cr, preferably Ti, Zr, Hf, V, Nb or Ta.

9. Process according to claims 1 to 8, characterised in that the metallocene compounds or the π complex compounds are used as the catalyst system together with an aluminoxane, a borane or borate and, optionally, other co-catalysts and/or metal alkyls.

10. Process according to claims 1 to 9, characterised in that rearrangement products of metallocene compounds or π complex compounds according to claim 1 with self-activation, in which, after opening of the D/A bond, the acceptor atom A binds an X-ligand with formation of a zwitterionic metallocene complex structure or π complex structure, wherein a positive charge is produced in the transition metal M and a negative charge is produced in the acceptor atom A and wherein a further X-ligand represents H or substituted or unsubstituted C, in whose bond to the transition metal M the olefin insertion for polymerisation takes place, wherein preferably two X-ligands are linked to a chelate ligand, are used.

11. Process according to claims 1 to 10, characterised in that π complex compounds according to claim 1 in which one of the atoms D and A is part of the ring of the associated π system, preferably D is part of the ring of the associated π system, are used.

12. Process according to claims 1 to 11, characterised in that there are used reaction products of formula (XIa) to (XId) of ionising agents with metallocene compounds or π complexes according to formula (I) or (XIII) 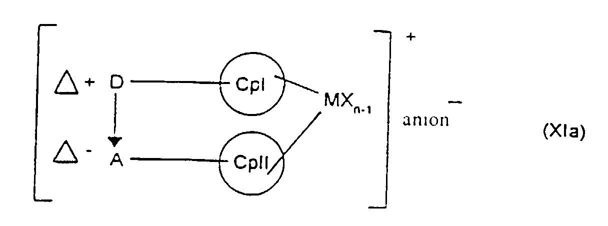 or 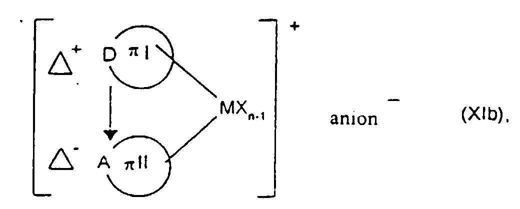 or 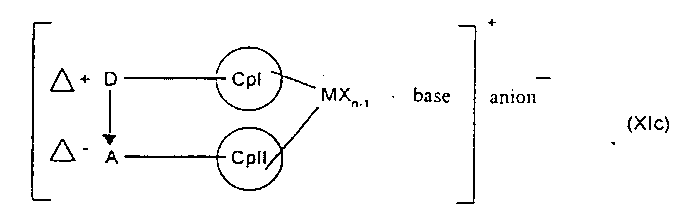 or 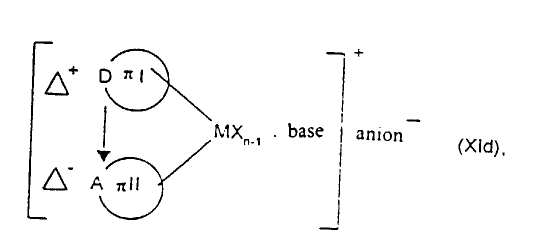 in which
anion represents the entire bulky, poorly coordinating anion and base represents a Lewis base.

13. Process according to claims 1 to 12, characterised in that it is directed towards the preparation of HDPE, LLDPE with butylene, hexene or octene as comomomer, iPP and sPP.

14. Linear polyethylene having a melting temperature of from 140 to 160°C (maximum of the DSC curve), preferably from 142 to 160°C, especially from 144 to 160°C, very especially from 146 to 160°C, which can be prepared by the process of claim 1.

## Revendications

1. Procédé de préparation de polyoléfines de point de fusion élevé par homo- ou copolymérisation d'un ou plusieurs monomères du groupe des α-oléfines d'au moins 2 atomes de carbone en présence de catalyseurs organométalliques, qui peuvent être activés par des cocatalyseurs, caractérisé en ce que l'on utilise comme catalyseurs organométalliques des composés de type métallocène ou des composés de type complexe π de formule 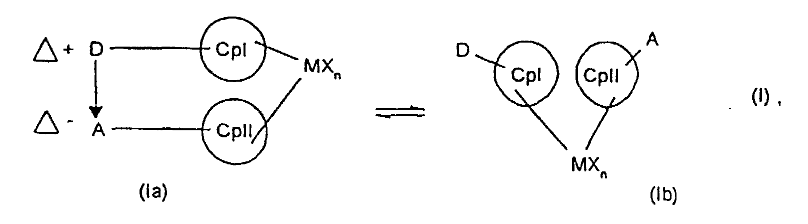 dans laquelle
CpI et CpII représentent deux carbanions identiques ou différents ayant une structure contenant un cyclopentadiényle, dans lesquels de un à tous les atomes d'hydrogène peuvent être remplacés par des restes identiques ou différents du groupe constitué par des restes alkyle en C₁-C₂₀ linéaires ou ramifiés pouvant être substitués 1 fois à entièrement par des halogènes, 1 à 3 fois par des groupes phényle et 1 à 3 fois par des groupes vinyle ; des restes aryle en C₆-C₁₂; des restes halogénoaryle de 6 à 12 atomes de carbone; des substituants organométalliques comme des groupes silyle, triméthylsilyle, ferrocényle; ainsi que 1 ou 2 fois par D et A,
D représente un atome donneur qui peut en outre porter des substituants et qui, dans chacun de ses états de liaison, dispose d'au moins une paire d'électrons libres,
A représente un atome accepteur qui peut en outre porter des substituants et qui, dans chacun de ses états de liaison, présente au moins une lacune correspondant à une paire d'électrons,
D et A étant liés par une liaison de coordination réversible de façon que le groupe donneur prenne une charge (partielle) positive et le groupe accepteur une charge (partielle) négative,
M représente un métal de transition du groupe secondaire III, IV, V ou VI du système périodique des éléments (Mendeleiev), y compris les lanthanides et les actinides,
X représente un équivalent d'anion et
n est égal à 0, 1, 2, 3 ou 4, en fonction de la charge de M,
ou des composés de type complexe π et en particulier des composés de type métallocène de formule 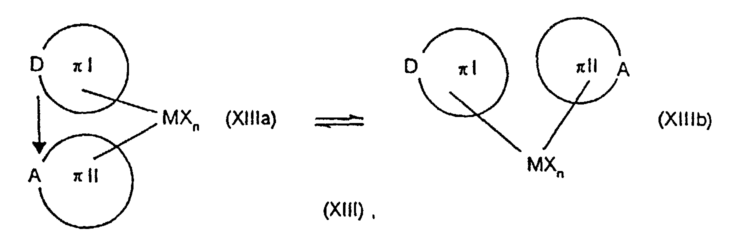 dans laquelle
πI et πII représentent des systèmes π chargés ou électriquement neutres différents l'un de l'autre, qui peuvent être condensés une ou deux fois avec des cycles de 5 ou 6 chaînons saturés ou insaturés ;
D représente un atome donneur qui constitue un substituant de πI ou un élément du système π de πI, et qui, dans chacun de ses états de liaison, dispose d'au moins une paire d'électrons libres,
A représente un atome accepteur qui constitue un substituant de πII ou un élément du système π de πII et qui, dans chacun de ses états de liaison, présente au moins une lacune correspondant à une paire d'électrons,
D et A étant liés par une liaison de coordination réversible de façon que le groupe donneur prenne une charge (partielle) positive et le groupe accepteur une charge (partielle) négative, et au moins l'un des D et A étant un élément du système π correspondant,
D et A pouvant eux-mêmes porter des substituants,
chaque système π ou chaque système cyclique condensé pouvant contenir un ou plusieurs D ou A ou D et A, et
un à tous les atomes d'hydrogène du système π dans πI et πII sous forme non condensée ou condensée pouvant être, indépendamment les uns des autres, remplacés par des restes identiques ou différents du groupe constitué par des restes alkyle en C₁-C₂₀ linéaires ou ramifiés qui peuvent être substitués 1 fois à entièrement par des halogènes, 1 à 3 fois par des groupes phényle et 1 à 3 fois par des groupes vinyle ;
des restes aryle en C₆-C₁₂ ; des restes halogénoaryle de 6 à 12 atomes de carbone ; des substituants organométalliques comme les groupes silyle, triméthylsilyle, ferrocényle ; ainsi que 1 ou 2 fois par D et A, de façon que la liaison de coordination réversible D → A soit formée entre D et A (i) qui constituent tous les deux des éléments du système π ou du système cyclique condensé correspondant, ou (ii) dont D ou A constitue un élément du système π et l'autre est un substituant du système π non condensé ou du système cyclique condensé, ou (iii) aussi bien D que A sont de tels substituants, et, dans le cas de (iii), au moins un D ou A supplémentaire ou les deux sont des éléments du système π ou du système cyclique condensé,
M et X ont la signification donnée ci-dessus et
n est égal à 0, 1, 2, 3 ou 4, en fonction des charges de M et de celles de πI et πIl.

2. Procédé selon la revendication 1, caractérisé en ce que l'on utilise les métallocènes ou les complexes π comme catalyseurs en une quantité d'une mol de métallocène ou de complexe π pour 10¹ à 10¹² mol de monomères.

3. Procédé selon la revendication 1 et 2, caractérisé en ce que l'on travaille en présence ou en l'absence de solvants appartenant au groupe des hydrocarbures saturés ou aromatiques ou des hydrocarbures halogénés saturés ou aromatiques.

4. Procédé selon les revendications 1 à 3, caractérisé en ce que, dans les métallocènes ou les complexes π, les carbanions CpI et CpII ou le système π πI représentent un squelette de cyclopentadiényle appartenant au groupe constitué par le cyclopentadiène, un cyclopentadiène substitué, l'indène, un indène substitué, le fluorène et un fluorène substitué, chaque cycle cyclopentadiène ou benzène condensé contenant 1 à 4 substituants appartenant au groupe des restes alkyle en C₁-C₂₀, alcoxy en C₁-C₂₀, halogène, aryle en C₆-C₁₂, halogénophényle, D et A, où D et A ont la signification indiquée dans la revendication 1, et les cycles aromatiques condensés pouvant être partiellement ou entièrement hydrogénés.

5. Procédé selon les revendications 1 à 4, caractérisé en ce que les métallocènes contiennent comme atomes donneurs D des éléments appartenant au groupe de N, P, As, Sb, Bi, O, S, Se, Te, F, Cl, Br, I, de préférence N, P, O, S.

6. Procédé selon les revendications 1 à 5, caractérisé en ce que les métallocènes contiennent comme atomes accepteurs A des éléments appartenant au groupe de B, Al, Ga, In, Tl, de préférence B, Al, Ga.

7. Procédé selon les revendications 1 à 6, caractérisé en ce que les métallocènes ou les complexes π contiennent des ponts donneur-accepteur appartenant au groupe de N → B, N → Al, P → B, P → Al, O → B, O → Al, Cl → B, Cl → Al, C=O → B, C=O → Al.

8. Procédé selon les revendications 1 à 7, caractérisé en ce que, dans les métallocènes, M représente Sc, Y, La, Sm, Nd, Lu, Ti, Zr, Hf, Th, V, Nb, Ta, Cr, de préférence Ti, Zr, Hf, V, Nb ou Ta.

9. Procédé selon les revendications 1 à 8, caractérisé en ce que l'on utilise comme systèmes de catalyseurs les métallocènes ou les complexes π avec un aluminoxane, un borane ou un borate et éventuellement d'autres cocatalyseurs et/ou alkylmétaux.

10. Procédé selon les revendications 1 à 9, caractérisé en ce que l'on utilise dans des conditions d'auto-activation des produits de transposition de métallocènes ou de complexes π selon la revendication 1, dans lesquels, après l'ouverture de la liaison D/A, l'atome d'accepteur se lie à un ligand X en formant une structure zwitterionique de complexe de métallocène ou de complexe π, avec production d'une charge positive au niveau du métal de transition M et d'une charge négative au niveau de l'atome d'accepteur A, et un autre ligand X représente H ou un C substitué ou non substitué, dans la liaison duquel au métal de transition M se produit l'insertion de l'oléfine pour la polymérisation, 2 ligands X étant de préférence reliés pour former un ligand de chélate.

11. Procédé selon les revendications 1 à 10, caractérisé en ce que l'on utilise des complexes π selon la revendication 1 dans lesquels l'un des atomes D ou A est un élément du système π correspondant, de préférence D est un élément du système π correspondant.

12. Procédé selon les revendications 1 à 11, caractérisé en ce que l'on utilise les produits de réaction, de formule (XIa) à (XId), d'agents ionisants avec les métallocènes ou les complexes π de formule (I) ou (XIII) : 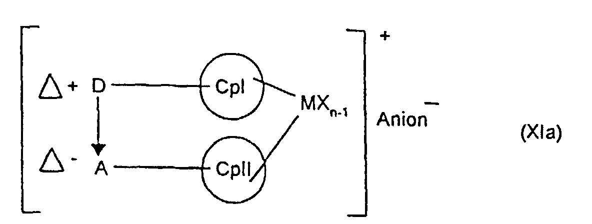 ou 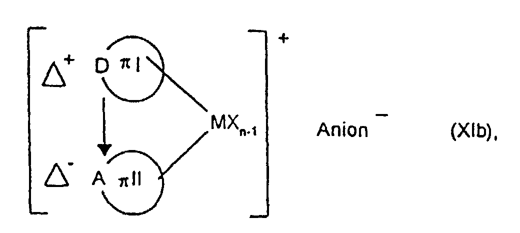 ou 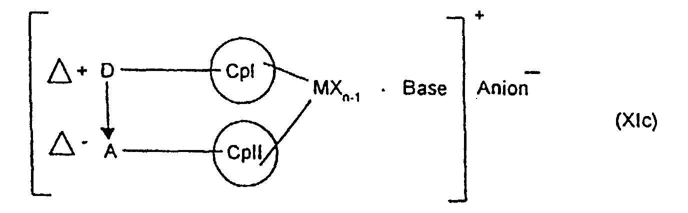 ou 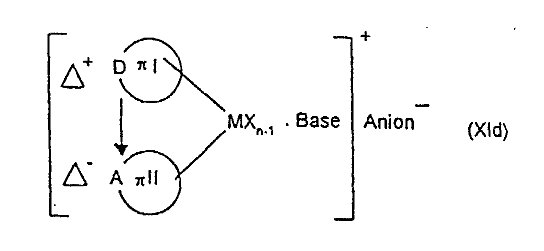 dans lesquelles
Anion représente l'ensemble de l'anion encombrant se coordinant difficilement, et Base représente une base de Lewis.

13. Procédé selon les revendications 1 à 12, caractérisé en ce qu'il est destiné à la préparation de HDPE, de LLDPE avec du butylène, de l'hexène ou de l'octène comme comonomère, d'iPP et de sPP.

14. Polyéthylène linéaire ayant une température de fusion de 140 à 160°C (maximum de la courbe de CDB), de préférence de 142 à 160°C, de façon particulièrement préférée de 144 à 160°C, de façon tout particulièrement préférée de 146 à 160°C, pouvant être préparé par le procédé de la revendication 1.
